(19) Europäisches Patentamt
European Patent Office
Office européen des brevets

(11) EP 2 783 569 A1

(12) EUROPEAN PATENT APPLICATION

(43) Date of publication:
**01.10.2014 Bulletin 2014/40**

(51) Int Cl.:
***A01N 43/16*** *(2006.01)* ***A01N 43/653*** *(2006.01)*
***A01P 3/00*** *(2006.01)*

(21) Application number: **14160444.7**

(22) Date of filing: **18.03.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.03.2013 EP 13161626**

(71) Applicant: **BASF SE**
**67056 Ludwigshafen (DE)**

(72) Inventors:
- **Grammenos, Wassilios**
**67071 Ludwigshafen (DE)**
- **Craig, Ian Robert**
**67063 Ludwigshafen (DE)**
- **Boudet, Nadege**
**69502 Hemsbach (DE)**
- **Müller, Bernd**
**67227 Frankenthal (DE)**
- **Lauterwasser, Erica May Wilson**
**67157 Wachenheim (DE)**
- **Lohmann, Jan Klaas**
**67245 Lambsheim (DE)**
- **Haden, Egon**
**67346 Speyer (DE)**
- **Escribano Cuesta, Ana**
**68167 Mannheim (DE)**
- **Grote, Thomas**
**67157 Wachenheim (DE)**

# (54) Compositions comprising a triazole compound

(57) The present invention relates to compositions comprising as component I 2-[2-chloro-4-(4-chlorophenoxy)phenyl]-1,3-bis(1,2,4-triazol-1-yl)propan-2-ol and a component II selected from groups A) to O).

EP 2 783 569 A1

## Description

The present invention relates to compositions comprising,

1) as component I 2-[2-chloro-4-(4-chlorophenoxy)phenyl]-1,3-bis(1,2,4-triazol-1-yl)propan-2-ol; and

2) as component II an active ingredient, selected from the following groups A) to O):

A) Respiration inhibitors

- Inhibitors of complex III at $Q_o$ site (e.g. strobilurins): coumethoxystrobin, coumoxystrobin, dimoxystrobin, enestroburin, fenaminstrobin, fenoxystrobin/flufenoxystrobin, kresoxim-methyl, metominostrobin, orysastrobin, pyrametostrobin, pyraoxystrobin, trifloxystrobin, 2-[2-(2,5-dimethyl-phenoxymethyl)-phenyl]-3-methoxy-acrylic acid methyl ester and 2-(2-(3-(2,6-dichlorophenyl)-1-methyl-allylideneaminooxymethyl)-phenyl)-2-methoxyimino-N-methyl-acetamide, pyribencarb, triclopyricarb/chlorodincarb, famoxadone, fenamidone;

- inhibitors of complex III at $Q_i$ site: cyazofamid, amisulbrom, [(3S,6S,7R,8R)-8-benzyl-3-[(3-acetoxy-4-methoxy-pyridine-2-carbonyl)amino]-6-methyl-4,9-dioxo-1,5-dioxonan-7-yl] 2-methylpropanoate, [(3S,6S,7R,8R)-8-benzyl-3-[[3-(acetoxymethoxy)-4-methoxy-pyridine-2-carbonyl]amino]-6-methyl-4,9-dioxo-1,5-dioxonan-7-yl] 2-methylpropanoate, [(3S,6S,7R,8R)-8-benzyl-3-[(3-isobutoxycarbonyloxy-4-methoxy-pyridine-2-carbonyl)amino]-6-methyl-4,9-dioxo-1,5-dioxonan-7-yl] 2-methylpropanoate, [(3S,6S,7R,8R)-8-benzyl-3-[[3-(1,3-benzodioxol-5-ylmethoxy)-4-methoxy-pyridine-2-carbonyl]amino]-6-methyl-4,9-dioxo-1,5-dioxonan-7-yl] 2-methylpropanoate; (3S,6S,7R,8R)-3-[[(3-hydroxy-4-methoxy-2-pyridinyl)carbonyl]amino]-6-methyl-4,9-dioxo-8-(phenylmethyl)-1,5-dioxonan-7-yl 2-methylpropanoate

- inhibitors of complex II (e. g. carboxamides): benodanil, benzovindiflupyr, bixafen, boscalid, carboxin, fenfuram, fluopyram, flutolanil, fluxapyroxad, furametpyr, isopyrazam, mepronil, oxycarboxin, penflufen, penthiopyrad, sedaxane, tecloftalam, N-(4'-trifluoromethylthiobiphenyl-2-yl)-3-difluoromethyl-1-methyl-1 H-pyrazole-4-carboxamide, N-(2-(1,3,3-trimethyl-butyl)-phenyl)-1,3-dimethyl-5-fluoro-1H-pyrazole-4-carboxamide, 3-(difluoromethyl)-1-methyl-N-(1,1,3-trimethylindan-4-yl)pyrazole-4-carboxamide, 3-(trifluoromethyl)-1-methyl-N-(1,1,3-trimethylindan-4-yl)pyrazole-4-carboxamide, 1,3-dimethyl-N-(1,1,3-trimethylindan-4-yl)pyrazole-4-carboxamide, 3-(trifluoromethyl)-1,5-dimethyl-N-(1,1,3-trimethylindan-4-yl)pyrazole-4-carboxamide, 3-(difluoromethyl)-1,5-dimethyl-N-(1,1,3-trimethylindan-4-yl)pyrazole-4-carboxamide, 1,3,5-trimethyl-N-(1,1,3-trimethylindan-4-yl)pyrazole-4-carboxamide;

- other respiration inhibitors (e.g. complex I, uncouplers): diflumetorim, (5,8-difluoro-quinazolin-4-yl)-{2-[2-fluoro-4-(4-trifluoromethylpyridin-2-yloxy)-phenyl]-ethyl}-amine; nitrophenyl derivates: binapacryl, dinobuton, dinocap, fluazinam; ferimzone; organometal compounds: fentin salts, such as fentin-acetate, fentin chloride or fentin hydroxide; ametoctradin; and silthiofam;

B) Sterol biosynthesis inhibitors (SBI fungicides)

- C14 demethylase inhibitors (DMI fungicides): triazoles: azaconazole, bitertanol, bromuconazole, cyproconazole, difenoconazole, diniconazole, diniconazole-M, fenbuconazole, fluquinconazole, flusilazole, flutriafol, hexaconazole, imibenconazole, ipconazole, metconazole, myclobutanil, oxpoconazole, paclobutrazole, penconazole, propiconazole, prothioconazole, simeconazole, tebuconazole, triadimefon, triadimenol, triticonazole, uniconazole, 1-[*rel*-(2*S*;3*R*)-3-(2-chlorophenyl)-2-(2,4-difluorophenyl)-oxiranylmethyl]-5-thiocyanato-1H-[1,2,4]triazole, 2-[*rel*-(2*S*;3*R*)-3-(2-chlorophenyl)-2-(2,4-difluorophenyl)-oxiranylmethyl]-2H-[1,2,4]triazole-3-thiol; imidazoles: imazalil, pefurazoate, prochloraz, triflumizol; pyrimidines, pyridines and piperazines: fenarimol, nuarimol, pyrifenox, triforine;

- Delta14-reductase inhibitors: aldimorph, dodemorph, dodemorph-acetate, fenpropimorph, tridemorph, fenpropidin, piperalin, spiroxamine;

- Inhibitors of 3-keto reductase: fenhexamid;

C) Nucleic acid synthesis inhibitors

- phenylamides or acyl amino acid fungicides: benalaxyl, benalaxyl-M, kiralaxyl, metalaxyl, metalaxyl-M (mefenoxam), ofurace, oxadixyl;

- others: hymexazole, octhilinone, oxolinic acid, bupirimate, 5-fluorocytosine, 5-fluoro-2-(p-tolylmethoxy)pyrimidin-4-amine, 5-fluoro-2-(4-fluorophenylmethoxy)pyrimidin-4-amine;

D) Inhibitors of cell division and cytoskeleton

- tubulin inhibitors, such as benzimidazoles, thiophanates: benomyl, carbendazim, fuberidazole, thiabendazole, thiophanate-methyl; triazolopyrimidines: 5-chloro-7-(4-methyl-piperidin-1-yl)-6-(2,4,6-trifiuorophenyl)-[1,2,4]triazolo[1,5-a]pyrimidine

- other cell division inhibitors: diethofencarb, ethaboxam, pencycuron, fluopicolide, zoxamide, metrafenone, pyriofenone;

E) Inhibitors of amino acid and protein synthesis

- methionine synthesis inhibitors (anilino-pyrimidines): mepanipyrim, pyrimethanil;

- protein synthesis inhibitors: blasticidin-S, kasugamycin, kasugamycin hydrochloride-hydrate, mildiomycin, streptomycin, oxytetracyclin, polyoxine, validamycin A;

F) Signal transduction inhibitors

- MAP / histidine kinase inhibitors: fluoroimid, iprodione, procymidone, vinclozolin, fenpiclonil;

- G protein inhibitors: quinoxyfen;

G) Lipid and membrane synthesis inhibitors

- Phospholipid biosynthesis inhibitors: edifenphos, iprobenfos, pyrazophos, isoprothiolane;

- lipid peroxidation: dicloran, quintozene, tecnazene, tolclofos-methyl, biphenyl, chloroneb, etridiazole;

- phospholipid biosynthesis and cell wall deposition: dimethomorph, flumorph, mandipropamid, pyrimorph, benthiavalicarb, iprovalicarb, valifenalate and N-(1-(1-(4-cyano-phenyl)ethanesulfonyl)-but-2-yl) carbamic acid-(4-fluorophenyl) ester;

- compounds affecting cell membrane permeability and fatty acides: propamocarb, propamocarb-hydrochlorid

- fatty acid amide hydrolase inhibitors: 1-[4-[4-[5-(2,6-difluorophenyl)-4,5-dihydro-3-isoxazolyl]-2-thiazolyl]-1-piperidinyl]-2-[5-methyl-3-(trifluoromethyl)-1H-pyrazol-1-yl]ethanone

H) Inhibitors with Multi Site Action

- inorganic active substances: Bordeaux mixture, copper acetate, copper hydroxide, copper oxychloride, basic copper sulfate, sulfur;

- thio- and dithiocarbamates: ferbam, mancozeb, maneb, metam, metiram, propineb, thiram, zineb, ziram;

- organochlorine compounds (e.g. phthalimides, sulfamides, chloronitriles): anilazine, chlorothalonil, captafol, captan, folpet, dichlofluanid, dichlorophen, flusulfamide, hexachlorobenzene, pentachlorphenole and its salts, phthalide, tolylfluanid, N-(4-chloro-2-nitrophenyl)-N-ethyl-4-methyl-benzenesulfonamide;

- guanidines and others: guanidine, dodine, dodine free base, guazatine, guazatine-acetate, iminoctadine, iminoctadine-triacetate, iminoctadine-tris(albesilate), dithianon, 2,6-dimethyl-1H,5H-[1,4]dithiino[2,3-c:5,6-c']dipyrrole-1,3,5,7(2H,6H)-tetraone;

I) Cell wall synthesis inhibitors

- inhibitors of glucan synthesis: validamycin, polyoxin B; melanin synthesis inhibitors: pyroquilon, tricyclazole, carpropamid, dicyclomet, fenoxanil;

J) Plant defence inducers

- acibenzolar-S-methyl, probenazole, isotianil, tiadinil, prohexadione-calcium; phosphonates: fosetyl, fosetyl-aluminum, phosphorous acid and its salts;

K) Unknown mode of action bronopol, chinomethionat, cyflufenamid, cymoxanil, dazomet, debacarb, diclomezine, difenzoquat, difenzoquat-methylsulfate, diphenylamin, fenpyrazamine, flumetover, flusulfamide, flutianil, methasulfocarb, nitrapyrin, nitrothal-isopropyl, oxin-copper, proquinazid, tebufloquin, tecloftalam, triazoxide, 2-butoxy-6-iodo-3-propylchromen-4-one, N-(cyclopropylmethoxyimino-(6-difluoro-methoxy-2,3-difluoro-phenyl)-methyl)-2-phenyl acetamide, N'-(4-(4-chloro-3-trifluoromethyl-phenoxy)-2,5-dimethyl-phenyl)-N-ethyl-N-methyl formamidine, N'-(4-(4-fluoro-3-trifluoromethyl-phenoxy)-2,5-dimethyl-phenyl)-N-ethyl-N-methyl formamidine, N'-(2-methyl-5-trifluoromethyl-4-(3-trimethylsilanyl-propoxy)-phenyl)-N-ethyl-N-methyl formamidine, N'-(5-difluoromethyl-2-methyl-4-(3-trimethylsilanyl-propoxy)-phenyl)-N-ethyl-N-methyl formamidine, 2methoxy-acetic acid 6-tert-butyl-8-fluoro-2,3-dimethyl-quinolin-4-yl ester, 3-[5-(4-methylphenyl)-2,3-dimethyl-isoxazolidin-3-yl]-pyridine, 3-[5-(4-chloro-phenyl)-2,3-dimethyl-isoxazolidin-3-yl]-pyridine (pyrisoxazole), N-(6-methoxy-pyridin-3-yl) cyclopropanecarboxylic acid amide, 5-chloro-1-(4,6-dimethoxy-pyrimidin-2-yl)-2-methyl-1 H-benzoimidazole, 2-(4-chloro-phenyl)-N-[4-(3,4-dimethoxy-phenyl)-isoxazol-5-yl]-2-prop-2-ynyloxy-acetamide, 2-[3,5-bi(difluoromethyl)-1H-pyrazol-1-yl]-1-[4-(4-{5-[2-(prop-2-yn-1-yloxy)phenyl]-4,5-dihydro-1,2-oxazol-3-yl}-1,3-thiazol-2-yl)piperidin-1-yl]ethanone, 2-[3,5-bis(difluoromethyl)-1H-pyrazol-1-yl]-1-[4-(4-{5-[2-fluoro-6-(prop-2-yn-1-yloxy)phenyl]-4,5-dihydro-1,2-oxazol-3-yl}-1,3-thiazol-2-yl)piperidin-1-yl]ethanone, 2-[3,5-bis(difluoromethyl)-1H-pyrazol-1-yl]-1-[4-(4-{5-[2-chloro-6-(prop-2-yn-1-yloxy)phenyl]-4,5-dihydro-1,2-oxazol-3-yl}-1,3-thiazol-2-yl)piperidin-1-yl]ethanone;

L) Antifungal biocontrol agents, plant bioactivators: *Ampelomyces quisqualis* (e.g. AQ 10® from Intrachem Bio GmbH & Co. KG, Germany), *Aspergillus flavus* (e.g. AFLAGUARD® from Syngenta, CH), *Aureobasidium pullulans* (e.g. BOTECTOR® from bio-ferm GmbH, Germany), *Bacillus pumilus* (e.g. NRRL Accession No. B-30087 in SONATA® and BALLAD® Plus from AgraQuest Inc., USA), *Bacillus subtilis* (e.g. isolate NRRL-Nr. B-21661 in RHAPSODY®, SERENADE® MAX and SERENADE® ASO from AgraQuest Inc., USA), *Bacillus subtilis* var. *amyloliquefaciens* FZB24 (e.g. TAEGRO® from Novozyme Biologicals, Inc., USA), *Candida oleophila* I-82 (e.g. ASPIRE® from Ecogen Inc., USA), *Candida saitoana* (e.g. BIOCURE® (in mixture with lysozyme) and BIOCOAT® from Micro Flo Company, USA (BASF SE) and Arysta), Chitosan (e.g. ARMOUR-ZEN from BotriZen Ltd., NZ), *Clonostachys rosea f. catenulata,* also named *Gliocladium catenulatum* (e.g. isolate J1446: PRESTOP® from Verdera, Finland), *Coniothyrium minitans* (e.g. CONTANS® from Prophyta, Germany), *Cryphonectria parasitica* (e.g. *Endothia parasitica* from CNICM, France), *Cryptococcus albidus* (e.g. YIELD PLUS® from Anchor Bio-Technologies, South Africa), *Fusarium oxysporum* (e.g. BIOFOX® from S.I.A.P.A., Italy, FUSACLEAN® from Natural Plant Protection, France), *Metschnikowia fructicola* (e.g. SHEMER® from Agrogreen, Israel), *Microdochium dimerum* (e.g. ANTIBOT® from Agrauxine, France), *Phlebiopsis gigantea* (e.g. ROTSOP® from Verdera, Finland), *Pseudozyma flocculosa* (e.g. SPORODEX® from Plant Products Co. Ltd., Canada), *Pythium oligandrum* DV74 (e.g. POLYVERSUM® from Remeslo SSRO, Biopreparaty, Czech Rep.), *Reynoutria sachlinensis* (e.g. REGALIA® from Marrone BioInnovations, USA), *Talaromyces flavus* V117b (e.g. PROTUS® from Prophyta, Germany), *Trichoderma asperellum* SKT-1 (e.g. ECO-HOPE® from Kumiai Chemical Industry Co., Ltd., Japan), *T. atroviride* LC52 (e.g. SENTINEL® from Agrimm Technologies Ltd, NZ), *T. harzianum* T-22 (e.g. PLANTSHIELD® der Firma BioWorks Inc., USA), *T. harzianum* TH 35 (e.g. ROOT PRO® from Mycontrol Ltd., Israel), *T. harzianum* T-39 (e.g. TRICHODEX® and TRICHODERMA 2000® from Mycontrol Ltd., Israel and Makhteshim Ltd., Israel), *T. harzianum* and *T. viride* (e.g. TRICHOPEL from Agrimm Technologies Ltd, NZ), *T. harzianum* ICC012 and *T. viride* ICC080 (e.g. REMEDIER® WP from Isagro Ricerca, Italy), *T. polysporum* and *T. harzianum* (e.g. BINAB® from BINAB Bio-Innovation AB, Sweden), *T. stromaticum* (e.g. TRICOVAB® from C.E.P.L.A.C., Brazil), *T. virens* GL-21 (e.g. SOILGARD® from Certis LLC, USA), *T. viride* (e.g. TRIECO® from Ecosense Labs. (India) Pvt. Ltd., Indien, BIO-CURE® F from T. Stanes & Co. Ltd., Indien), *T. viride* TV1 (e.g. T. viride TV1 from Agribiotec srl, Italy), *Ulocladium oudemansii* HRU3 (e.g. BOTRY-ZEN® from Botry-Zen Ltd, NZ);

M) Growth regulators
abscisic acid, amidochlor, ancymidol, 6-benzylaminopurine, brassinolide, butralin, chlormequat (chlormequat

chloride), choline chloride, cyclanilide, daminozide, dikegulac, dimethipin, 2,6-dimethylpuridine, ethephon, flumetralin, flurprimidol, fluthiacet, forchlorfenuron, gibberellic acid, inabenfide, indole-3-acetic acid , maleic hydrazide, mefluidide, mepiquat (mepiquat chloride), naphthaleneacetic acid, N-6-benzyladenine, paclobutrazol, prohexadione (prohexadione-calcium), prohydrojasmon, thidiazuron, triapenthenol, tributyl phosphorotrithioate, 2,3,5-tri-iodobenzoic acid , trinexapac-ethyl and uniconazole;

N) Herbicides

- acetamides: acetochlor, alachlor, butachlor, dimethachlor, dimethenamid, flufenacet, mefenacet, metolachlor, metazachlor, napropamide, naproanilide, pethoxamid, pretilachlor, propachlor, thenylchlor;

- amino acid derivatives: bilanafos, glyphosate, glufosinate, sulfosate;

- aryloxyphenoxypropionates: clodinafop, cyhalofop-butyl, fenoxaprop, fluazifop, haloxyfop, metamifop, propaquizafop, quizalofop, quizalofop-P-tefuryl;

- Bipyridyls: diquat, paraquat;

- (thio)carbamates: asulam, butylate, carbetamide, desmedipham, dimepiperate, eptam (EPTC), esprocarb, molinate, orbencarb, phenmedipham, prosulfocarb, pyributicarb, thiobencarb, triallate;

- cyclohexanediones: butroxydim, clethodim, cycloxydim, profoxydim, sethoxydim, tepraloxydim, tralkoxydim;

- dinitroanilines: benfluralin, ethalfluralin, oryzalin, pendimethalin, prodiamine, trifluralin;

- diphenyl ethers: acifluorfen, aclonifen, bifenox, diclofop, ethoxyfen, fomesafen, lactofen, oxyfluorfen;

- hydroxybenzonitriles: bomoxynil, dichlobenil, ioxynil;

- imidazolinones: imazamethabenz, imazamox, imazapic, imazapyr, imazaquin, imazethapyr;

- phenoxy acetic acids: clomeprop, 2,4-dichlorophenoxyacetic acid (2,4-D), 2,4-DB, dichlorprop, MCPA, MCPA-thioethyl, MCPB, Mecoprop;

- pyrazines: chloridazon, flufenpyr-ethyl, fluthiacet, norflurazon, pyridate;

- pyridines: aminopyralid, clopyralid, diflufenican, dithiopyr, fluridone, fluroxypyr, picloram, picolinafen, thiazopyr;

- sulfonyl ureas: amidosulfuron, azimsulfuron, bensulfuron, chlorimuron-ethyl, chlorsulfuron, cinosulfuron, cyclosulfamuron, ethoxysulfuron, flazasulfuron, flucetosulfuron, flupyrsulfuron, foramsulfuron, halosulfuron, imazosulfuron, iodosulfuron, mesosulfuron, metazosulfuron, metsulfuron-methyl, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, 1-((2-chloro-6-propyl-imidazo[1,2-b]pyridazin-3-yl)sulfonyl)-3-(4,6-dimethoxy-pyrimidin-2-yl)urea;

- triazines: ametryn, atrazine, cyanazine, dimethametryn, ethiozin, hexazinone, metamitron, metribuzin, prometryn, simazine, terbuthylazine, terbutryn, triaziflam;

- ureas: chlorotoluron, daimuron, diuron, fluometuron, isoproturon, linuron, methabenzthiazuron,tebuthiuron;

- other acetolactate synthase inhibitors: bispyribac-sodium, cloransulam-methyl, diclosulam, florasulam, flucarbazone, flumetsulam, metosulam, ortho-sulfamuron, penoxsulam, propoxycarbazone, pyribambenz-propyl, pyribenzoxim, pyriftalid, pyriminobac-methyl, pyrimisulfan, pyrithiobac, pyroxasulfone, pyroxsulam;

- others: amicarbazone, aminotriazole, anilofos, beflubutamid, benazolin, bencarbazone,benfluresate, benzofenap, bentazone, benzobicyclon, bicyclopyrone, bromacil, bromobutide, butafenacil, butamifos, cafenstrole, carfentrazone, cinidon-ethyl, chlorthal, cinmethylin, clomazone, cumyluron, cyprosulfamide, dicamba, difenzoquat, diflufenzopyr, *Drechslera monoceras,* endothal, ethofumesate, etobenzanid, fenoxasulfone, fentrazamide, flumiclorac-pentyl, flumioxazin, flupoxam, flurochloridone, flurtamone, indanofan, isoxaben, isoxaflutole, lenacil, propanil, propyzamide, quinclorac, quinmerac, mesotrione, methyl arsonic acid, naptalam, oxadiargyl, oxadiazon, oxaziclomefone, pentoxazone, pinoxaden, pyraclonil, pyraflufen-ethyl, pyrasulfotole, pyrazoxyfen, pyrazolynate, quinoclamine, saflufenacil, sulcotrione, sulfentrazone, terbacil, tefuryltrione, tembotrione, thiencarbazone, topramezone, (3-[2-chloro-4-fluoro-5-(3-methyl-2,6-dioxo-4-trifluoromethyl-3,6-dihydro-2H-pyrimidin-1-yl)-phenoxy]-pyridin-2-yloxy)-acetic acid ethyl ester, 6-amino-5-chloro-2-cyclopropyl-pyrimidine-4-carboxylic acid methyl ester, 6-chloro-3-(2-cyclopropyl-6-methyl-phenoxy)-pyridazin-4-ol, 4-amino-3-chloro-6-(4-chloro-phenyl)-5-fluoro-pyridine-2-carboxylic acid, 4-amino-3-chloro-6-(4-chloro-2-fluoro-3-methoxy-phenyl)-pyridine-2-carboxylic acid methyl ester, and 4-amino-3-chloro-6-(4-chloro-3-dimethylamino-2-fluoro-phenyl)-pyridine-2-carboxylic acid methyl ester.

O) Insecticides

- organo(thio)phosphates: acephate, azamethiphos, azinphos-methyl, chlorpyrifos, chlorpyrifos-methyl, chlorfenvinphos, diazinon, dichlorvos, dicrotophos, dimethoate, disulfoton, ethion, fenitrothion, fenthion, isoxathion, malathion, methamidophos, methidathion, methyl-parathion, mevinphos, monocrotophos, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos, trichlorfon;

- carbamates: alanycarb, aldicarb, bendiocarb, benfuracarb, carbaryl, carbofuran, carbosulfan, fenoxycarb, furathiocarb, methiocarb, methomyl, oxamyl, pirimicarb, propoxur, thiodicarb, triazamate;

- pyrethroids: allethrin, bifenthrin, cyfluthrin, cyhalothrin, cyphenothrin, cypermethrin, alpha-cypermethrin, beta-cypermethrin, zeta-cypermethrin, deltamethrin, esfenvalerate, etofenprox, fenpropathrin, fenvalerate, imiprothrin, lambda-cyhalothrin, permethrin, prallethrin, pyrethrin and II, resmethrin, silafluofen, tau-fluvalinate, tefluthrin, tetramethrin, tralomethrin, transfluthrin, profluthrin, dimefluthrin;

- insect growth regulators: a) chitin synthesis inhibitors: benzoylureas: chlorfluazuron, cyramazin, diflubenzuron, flucycloxuron, flufenoxuron, hexaflumuron, lufenuron, novaluron, teflubenzuron, triflumuron; buprofezin, diofenolan, hexythiazox, etoxazole, clofentazine; b) ecdysone antagonists: halofenozide, methoxyfenozide, tebufenozide, azadirachtin; c) juvenoids: pyriproxyfen, methoprene, fenoxycarb; d) lipid biosynthesis inhibitors: spirodiclofen, spiromesifen, spirotetramat;

- nicotinic receptor agonists/antagonists compounds: clothianidin, dinotefuran, flupyradifurone, imidacloprid, thiamethoxam, nitenpyram, acetamiprid, thiacloprid, 1-2-chloro-thiazol-5-ylmethyl)-2-nitrimino-3,5-dimethyl-[1,3,5]triazinane;

- GABA antagonist compounds: endosulfan, ethiprole, fipronil, vaniliprole, pyrafluprole, pyriprole, 5-amino-1-(2,6-dichloro-4-methyl-phenyl)-4-sulfinamoyl-1H-pyrazole-3-carbothioic acid amide;

- macrocyclic lactone insecticides: abamectin, emamectin, milbemectin, lepimectin, spinosad, spinetoram;

- mitochondrial electron transport inhibitor (METI) I acaricides: fenazaquin, pyridaben, tebufenpyrad, tolfenpyrad, flufenerim;

- METI II and III compounds: acequinocyl, fluacyprim, hydramethylnon;

- Uncouplers: chlorfenapyr;

- oxidative phosphorylation inhibitors: cyhexatin, diafenthiuron, fenbutatin oxide, propargite;

- moulting disruptor compounds: cryomazine;

- mixed function oxidase inhibitors: piperonyl butoxide;

- sodium channel blockers: indoxacarb, metaflumizone;

- ryanodine receptor inhibitors: chlorantraniliprole, cyantraniliprole (cyazapyr), flubendiamide, N-[4,6-dichloro-2-[(diethyl-lambda-4-sulfanylidene)carbamoyl]-phenyl]-2-(3-chloro-2-pyridyl)-5-(trifluoromethyl)pyrazole-3-carboxamide; N-[4-chloro-2-[(diethyl-lambda-4-sulfanylidene)carbamoyl]-6-methyl-phenyl]-2-(3-chloro-2-pyridyl)-5-(trifluoromethyl)pyrazole-3-carboxamide; N-[4-chloro-2-[(di-2-propyl-lambda-4-sulfanylidene)carbamoyl]-6-methyl-phenyl]-2-(3-chloro-2-pyridyl)-5-(trifluoromethyl)pyrazole-3-carboxamide; N-[4,6-dichloro-2-[(di-2-propyl-lambda-4-sulfanylidene)carbamoyl]-phenyl]-2-(3-chloro-2-pyridyl)-5-(trifluoromethyl)pyrazole-3-carboxamide; N-[4,6-dichloro-2-[(diethyl-lambda-4-sulfanylidene)carbamoyl]-phenyl]-2-(3-chloro-2-pyridyl)-5-(difluoromethyl)pyrazole-3-carboxamide; N-[4,6-dibromo-2-[(di-2-propyl-lambda-4-sulfanylidene)carbamoyl]-phenyl]-2-(3-chloro-2-pyridyl)-5-(trifluoromethyl)pyrazole-3-carboxamide; N-[4-chloro-2-[(di-2-propyl-lambda-4-sulfanylidene)carbamoyl]-6-cyano-phenyl]-2-(3-chloro-2-pyridyl)-5-(trifluoromethyl)pyrazole-3-carboxamide; N-[4,6-dibromo-2-[(diethyl-lambda-4-sulfanylidene)carbamoyl]-phenyl]-2-(3-chloro-2-pyridyl)-5-(trifluoromethyl)pyrazole-3-carboxamide;

- others: benclothiaz, bifenazate, cartap, flonicamid, pyridalyl, pymetrozine, sulfur, thiocyclam, cyazypyr (HGW86), cyenopyrafen, flupyrazofos, cyflumetofen, amidoflumet, imicyafos, bistrifluron, pyrifluquinazon and 1,1'-[(3S,4R,4aR,6S,6aS,12R,12aS,12bS)-4-[[(2-cyclopropylacetyl)oxy]methyl]-1,3,4,4a,5,6,6a,12,12a,12b-decahydro-12-hydroxy-4,6a,12b-trimethyl-11-oxo-9-(3-pyridinyl)-2H,11H-naphtho[2,1-b]pyrano[3,4-e]pyran-3,6-diyl]cyclopropaneacetic acid ester.

The weight ratio of component I to component II in these inventive compositions is preferably from 100:1 to 1:100.

The present invention also relates to compositions comprising component I, component II' and at least one further component, such as compositions comprising component I, component II' and component III, wherein component II' and component III are independently selected from the compounds of groups A'), B'), C), D), E'), F') and G) to O), wherein C), D), G) to O) are as defined above and A'), B'), E') and F') are defined below, with the proviso that all components are different from one another.

The invention furthermore relates to the use of the inventive compositions for controlling phytopathogenic fungi as detailled herein and preparations or compositions comprising them. The invention furthermore also relates to seed comprising the compositions. The invention furthermore also relates to methods for controlling phytopathogenic fungi as detailled herein, wherein the fungi or the materials, plants, the soil or seed to be protected from fungal attack are treated with an effective amount of a compositions according to the invention. The invention furthermore also relates to processes for preparing the compositions according to the invention.

With a view to reducing the application rates and broadening the activity spectrum of the known compounds, it was an object of the present invention to provide compositions which, at a reduced total amount of active compounds applied, show improved activity against important harmful fungi, in particular for certain indications. It was a further object to provide for compositions that are useful for the control of specific pathogens in specific important crops that are often susceptible to the attack of pathogens.

Accordingly we have found the compositions and uses defined at the outset and in the following description. In particular, the present invention relates to compositions comprising component I and component II and to compositions comprising component I, component II' and at least one further component, such as compositions comprising component I, component II' and component III, wherein component II' and component III are independently selected from the compounds of groups A'), B'), C), D), E'), F') and G) to O), wherein C), D), G) to O) are as defined above and A'), B'), E') and F') are defined below, with the proviso that all components are different from one another. In addition to the components I, II' and III mentioned, the compositions according to the invention may also comprise further components (for example component IV or components IV and V), wherein each of the additional components (for example component IV or components IV and V) is independently selected from the compounds of groups A'), B'), C), D), E'), F') and G) to O) defined herein, with the proviso that all components are different from one another.

A') is defined as follows:

A') Respiration inhibitors

- Inhibitors of complex III at $Q_o$ site (e.g. strobilurins): azoxystrobin, coumethoxystrobin, coumoxystrobin, dimoxystrobin, enestroburin, fenaminstrobin, fenoxystrobin/flufenoxystrobin, fluoxastrobin, kresoxim-methyl, metominostrobin, orysastrobin, picoxystrobin, pyraclostrobin, pyrametostrobin, pyraoxystrobin, trifloxystrobin, 2-[2-(2,5-dimethyl-phenoxymethyl)-phenyl]-3-methoxy-acrylic acid methyl ester and 2-(2-(3-(2,6-dichlorophenyl)-1-methyl-allylideneaminooxy-methyl)-phenyl)-2-methoxyimino-N-methyl-acetamide, pyribencarb, triclopyricarb/chlorodincarb, famoxadone, fenamidone;

- inhibitors of complex III at $Q_i$ site: cyazofamid, amisulbrom, [(3S,6S,7R,8R)-8-benzyl-3-[(3-acetoxy-4-methoxy-pyridine-2-carbonyl)amino]-6-methyl-4,9-dioxo-1,5-dioxonan-7-yl] 2-methylpropanoate, [(3S,6S,7R,8R)-8-benzyl-3-[[3-(acetoxymethoxy)-4-methoxy-pyridine-2-carbonyl]amino]-6-methyl-4,9-dioxo-1,5-dioxonan-7-yl]2-methylpropanoate, [(3S,6S,7R,8R)-8-benzyl-3-[(3-isobutoxycarbonyloxy-4-methoxy-pyridine-2-carbonyl)amino]-6-methyl-4,9-dioxo-1,5-dioxonan-7-yl] 2-methylpropanoate, [(3S,6S,7R,8R)-8-benzyl-3-[[3-(1,3-benzodioxol-5-ylmethoxy)-4-methoxy-pyridine-2-carbonyl]amino]-6-methyl-4,9-dioxo-1,5-dioxonan-7-yl]2-methylpropanoate; (3S,6S,7R,8R)-3-[[(3-hydroxy-4-methoxy-2-pyridinyl)carbonyl]amino]-6-methyl-4,9-dioxo-8-(phenylmethyl)-1,5-dioxonan-7-yl 2-methylpropanoate

- inhibitors of complex II (e. g. carboxamides): benodanil, benzovindiflupyr, bixafen, boscalid, carboxin, fenfuram, fluopyram, flutolanil, fluxapyroxad, furametpyr, isopyrazam, mepronil, oxycarboxin, penflufen, penthiopyrad, sedaxane, tecloftalam, thifluzamide, N-(4'-trifluoromethylthiobiphenyl-2-yl)-3-difluoromethyl-1-methyl-1H-pyrazole-4-carboxamide, N-(2-(1,3,3-trimethyl-butyl)-phenyl)-1,3-dimethyl-5-fluoro-1H-pyrazole-4-carboxamide, 3-(difluoromethyl)-1-methyl-N-(1,1,3-trimethylindan-4-yl)pyrazole-4-carboxamide, 3-(trifluoromethyl)-1-methyl-N-(1,1,3-trimethylindan-4-yl)pyrazole-4-carboxamide, 1,3-dimethyl-N-(1,1,3-trimethylindan-4-yl)pyrazole-4-carboxamide, 3-(trifluoromethyl)-1,5-dimethyl-N-(1,1,3-trimethylindan-4-yl)pyrazole-4-carboxamide, 3-(difluoromethyl)-1,5-dimethyl-N-(1,1,3-trimethylindan-4-yl)pyrazole-4-carboxamide, 1,3,5-trimethyl-N-(1,1,3-trimethylindan-4-yl)pyrazole-4-carboxamide;

- other respiration inhibitors (e.g. complex I, uncouplers): diflumetorim, (5,8-difluoro-quinazolin-4-yl)-{2-[2-fluoro-4-(4-trifluoromethylpyridin-2-yloxy)-phenyl]-ethyl}amine; nitrophenyl derivates: binapacryl, dinobuton, dinocap, fluazinam; ferimzone; organometal compounds: fentin salts, such as fentin-acetate, fentin chloride or fentin hydroxide; ametoctradin; and silthiofam.

B') is defined as follows:

B') Sterol biosynthesis inhibitors (SBI fungicides)

- C14 demethylase inhibitors (DMI fungicides): triazoles: azaconazole, bitertanol, bromuconazole, cyproconazole, difenoconazole, diniconazole, diniconazole-M, epoxiconazole, fenbuconazole, fluquinconazole, flusilazole, flutriafol, hexaconazole, imibenconazole, ipconazole, metconazole, myclobutanil, oxpoconazole, paclobutrazole, penconazole, propiconazole, prothioconazole, simeconazole, tebuconazole, tetraconazole, triadimefon, triadimenol, triticonazole, uniconazole, 1-[*rel*-(2*S*;3*R*)-3-(2-chlorophenyl)-2-(2,4-difluorophenyl)-oxiranylmethyl]-5-thiocyanato-1H-[1,2,4]triazole, 2-[*rel*-(2*S*;3*R*)-3-(2-chlorophenyl)-2-(2,4-difluorophenyl)-oxiranylmethyl]-2H-[1,2,4]triazole-3-thiol; imidazoles: imazalil, pefurazoate, prochloraz, triflumizol; pyrimidines, pyridines and piperazines: fenarimol, nuarimol, pyrifenox, triforine;

- Delta14-reductase inhibitors: aldimorph, dodemorph, dodemorph-acetate, fenpropimorph, tridemorph, fenpropidin, piperalin, spiroxamine;

- Inhibitors of 3-keto reductase: fenhexamid.

E') is defined as follows:

E') Inhibitors of amino acid and protein synthesis

- methionine synthesis inhibitors (anilino-pyrimidines): cyprodinil, mepanipyrim, pyrimethanil;

- protein synthesis inhibitors: blasticidin-S, kasugamycin, kasugamycin hydrochloride-hydrate, mildiomycin, streptomycin, oxytetracyclin, polyoxine, validamycin A.

F') is defined as follows:

F') Signal transduction inhibitors

- MAP / histidine kinase inhibitors: fluoroimid, iprodione, procymidone, vinclozolin, fenpiclonil, fludioxonil;

- G protein inhibitors: quinoxyfen.

The component I is known from he prior art and can be obtained by routes described therein (cf. J. Agric. Food Chem. (2009) 57, 4854-4860; CN 1923819 A). The structure of component I is formula I

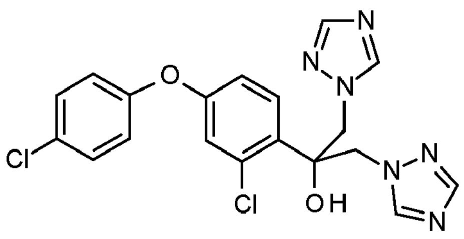

I

Owing to the basic character of their nitrogen atoms, the component I, is capable of forming salts or adducts with inorganic or organic acids or with metal ions, in particular salts with inorganic acids.

Examples of inorganic acids are hydrohalic acids, such as hydrogen fluoride, hydrogen chloride, hydrogen bromide and hydrogen iodide, carbonic acid, sulfuric acid, phosphoric acid and nitric acid.

Suitable organic acids are, for example, formic acid and alkanoic acids, such as acetic acid, trifluoroacetic acid, trichloroacetic acid and propionic acid, and also glycolic acid, thiocyanic acid, lactic acid, succinic acid, citric acid, benzoic acid and other arylcarboxylic acids, cinnamic acid, oxalic acid, alkylsulfonic acids (sulfonic acids having straight-chain or branched alkyl radicals of 1 to 20 carbon atoms), arylsulfonic acids or aryldisulfonic acids (aromatic radicals, such as phenyl and naphthyl, which carry one or two sulfonic acid groups), alkylphosphonic acids (phosphonic acids having straight-chain or branched alkyl radicals with 1 to 20 carbon atoms), arylphosphonic acids or aryldiphosphonic acids (aromatic radicals, such as phenyl and naphthyl, which carry one or two phosphoric acid radicals), where the alkyl or aryl radicals may carry further substituents, for example p-toluenesulfonic acid, salicylic acid, p-aminosalicylic acid, 2-phenoxybenzoic acid, 2-acetoxybenzoic acid etc. Suitable metal ions are in particular the ions of the elements of the second main group, in particular calcium and magnesium, of the third and fourth main group, in particular aluminum, tin and lead, and also of the elements of transition groups one to eight, in particular chromium, manganese, iron, cobalt, nickel, copper, zinc, and others. Particular preference is given to the metal ions of the elements of transition groups of the fourth period. The metals can be present in the various valencies that they can assume.

The active compounds of component II, component II', component III and any further component, selected from the groups A) to O) and A'), B'), C), D), E'), F') and G) to O), respectively, as detailled herein, their preparation and their action against harmful fungi are known (cf.: http://www.alanwood.net/pesticides/), and they are mainly commercially available. Commercially available active compounds can be found, for example, in The Pesticide Manual, 14th Edition, British Crop Protection Council (2006) and other publications. Fluxapyroxad (N-(3',4',5'-trifluorobiphenyl-2-yl)-3-difluoromethyl-1-methyl-1H-pyrazole-4-carboxamide) and its preparation and use is described in WO 2006/087343.

In the following, references for the active compounds of component II, component II', component III and any further component, selected from the groups A) to O) and A'), B'), C), D), E'), F') and G) to O), respectively, as detailled herein, are given: benalaxyl, methyl *N*-(phenylacetyl)-*N*-(2,6-xylyl)-DL-alaninate (DE 29 03 612); metalaxyl, methyl *N*-(methoxyacetyl)-*N*-(2,6-xylyl)-DL-alaninate (GB 15 00 581); ofurace, (RS)-$\alpha$-(2-chloro-*N*-2,6-xylylacetamido)-$\gamma$-butyrolactone [CAS RN 58810-48-3]; oxadixyl; *N*-(2,6-dimethylphenyl)-2-methoxy-*N*-(2-oxo-3-oxazolidinyl)acetamide (GB 20 58 059); aldimorph, "4-alkyl-2,5(or 2,6)-dimethylmorpholine", comprising 65-75% of 2,6-dimethylmorpholine and 25-35% of 2,5-dimethylmorpholine, comprising more than 85% of 4-dodecyl-2,5(or 2,6)-dimethylmorpholine, where "alkyl" also includes octyl, decyl, tetradecyl and hexadecyl, with a cis/trans ratio of 1:1 [CAS RN 91315-15-0]; dodine, 1-dodecylguanidinium acetate (Plant Dis. Rep., Vol. 41, p.1029 (1957)); dodemorph, 4-cyclododecyl-2,6-dimethylmorpholine (DE 1198125); fenpropimorph, (RS)-cis-4-[3-(4-tert-butylphenyl)-2-methylpropyl]-2,6-dimethylmorpholine (DE 27 52 096); fenpropidin, (RS)-1-[3-(4-tert-butylphenyl)-2-methylpropyl]piperidine (DE 27 52 096); guazatine, composition of the reaction products from the amidation of technical grade iminodi(octamethylene)diamine, comprising various guanidines and polyamines [CAS RN 108173-90-6]; iminoctadine, 1,1'-iminodi(octamethylene)diguanidine (Congr. Plant Pathol. 1, p.27 (1968); spiroxamine, (8-tert-butyl-1,4-dioxaspiro[4.5]dec-2-yl)diethylamine (EP-A 281 842); tridemorph, 2,6-dimethyl-4-tridecylmorpholine (DE 11 64 152); pyrimethanil, 4,6-dimethylpyrimidin-2-ylphenylamine (DD-A 151 404); mepanipyrim, (4-methyl-6-prop-1-ynylpyrimidin-2-yl)phenylamine (EP-A 224 339); cyprodinil, (4-cyclopropyl-6-methylpyrimidin-2-yl)phenylamine (EP-A 310 550); cycloheximid, 4-{(2R)-2-[(1S,3S,5S)-3,5-dimethyl-2-oxocyclohexyl]-2-hydroxyethyl}piperidine-2,6-dione [CAS RN 66-81-9]; griseofulvin, 7-chloro-2',4,6-trimethoxy-6'-methylspiro[benzofuran-2(3H),1'-cyclohex-2'-ene]-3,4'-dione [CAS RN 126-07-8]; kasugamycin, 3-O-[2-amino-4-[(carboxyiminomethyl)amino]-2,3,4,6-tetradeoxy-$\alpha$-D-arabino-hexopyranosyl]-D-chiro-inositol [CAS RN 6980-18-3]; natamycin, (8E,14E,16E,18E, 20E)-(1R,3S,5R, 7R,12R,22R,24S,25R,26S)-22-(3-amino-3,6-dideoxy-$\beta$-D-mannopyranosyloxy)-1,3,26-trihydroxy-12-methyl-10-oxo-6,11,28-trioxatricyclo[22.3.1.05,7]octacosa-8,14,16,18,20-pentaene-25-carboxylic acid [CAS RN 7681-93-8]; polyoxin, 5-(2-amino-5-O-carbamoyl-2-deoxy-L-xylonamido)-1-(5-carboxy-1,2,3,4-tetrahydro-2,4-dioxopyrimidin-1-yl)-1,5-dideoxy-β-D-allofuranuronic acid [CAS RN 22976-86-9]; streptomycin, 1,1'-{1-L-(1,3,5/2,4,6)-4-[5-deoxy-2-O-(2-deoxy-2-methylamino-α-L-glucopyranosyl)-3-C-formyl-α-L-lyxofuranosyloxy]-2,5,6-trihydroxycyclohex-1,3-ylene}diguanidine (J. Am. Chem. Soc. 69, p.1234 (1947)); bitertanol, β-([1,1'-biphenyl]-4-yloxy)-α-(1,1-dimethylethyl)-1H-1,2,4-triazole-1-ethanol (DE 23 24 020); bromuconazole, 1-[[4-bromo-2-(2,4-dichlorophenyl)tetrahydro-2-furanyl]methyl]-1H-1,2,4-triazole (Proc. Br. Crop. Prot. Conf. 1990 - Pests Dis. Vol. 1, p. 459); cyproconazole, 2-(4-chlorophenyl)-3-cyclopropyl-1-[1,2,4]triazol-1-ylbutan-2-ol (US 4 664 696); difenoconazole, 1-{2-[2-chloro-4-(4-chlorophenoxy)phenyl]-4-methyl-[1,3]dioxolan-2-ylmethyl}-1H-[1,2,4]triazole (GB-A 2 098 607); diniconazole, (βE)-β-[(2,4-dichlorophenyl)methylene]-α-(1,1-dimethylethyl)-1H-1,2,4-triazole-1-ethanol (Noyaku Kagaku, 1983, Vol. 8, p. 575); enilconazole (imazalil), 1-[2-(2,4-dichlorphenyl)-2-(2-propenyloxy)ethyl]-1H-imidazole (Fruits 28, p. 545, 1973); epoxiconazole, (2RS,3SR)-1-[3-(2-chlorophenyl)-2,3-epoxy-2-(4-fluorophenyl)propyl]-1H-1,2,4-triazole (EP-A 196 038); fenbuconazole, α-[2-(4-chlorophenyl)ethyl]-α-phenyl-1H-1,2,4-triazole-1-propanenitrile (Proc. Br. Crop Prot. Conf. 1988 - Pests Dis. Vol. 1, p. 33); fluquinconazole, 3-(2,4-dichlorophenyl)-6-fluoro-2-[1,2,4]-triazol-1-yl-3H-quinazolin-4-one (Proc. Br. Crop Prot. Conf.-Pests Dis., 5-3, 411 (1992)); flusilazole, 1-{[bis-(4-fluorophenyl)methylsilanyl]methyl}-1H-[1,2,4]triazole (Proc. Br. Crop Prot. Conf.-Pests Dis., 1, 413 (1984)); flutriafol, α-(2-fluorophenyl)-α-(4-fluorophenyl)-1H-1,2,4-triazole-1-ethanol (EP 15 756); hexaconazole, 2-(2,4-dichlorophenyl)-1-[1,2,4]triazol-1-ylhexan-2-ol (CAS RN 79983-71-4); ipconazole, 2-[(4-chlorophenyl)methyl]-5-(1-methylethyl)-1-(1H-1,2,4-triazol-1-ylmethyl)cyclopentanol (EP 267 778), metconazole, 5-(4-chlorobenzyl)-2,2-dimethyl-1-[1,2,4]triazol-1-ylmethylcyclopentanol (GB 857 383); myclobutanil, 2-(4-chlorophenyl)-2-[1,2,4]triazol-1-ylmethylpentanenitrile (CAS RN 88671-89-0); penconazole, 1-[2-(2,4-dichlorophenyl)pentyl]-1H-[1,2,4]triazole (Pesticide Manual, 12th Ed. (2000), S.712); propiconazole, 1-[[2-(2,4-dichlorophenyl)-4-propyl-1,3-dioxolan-2-yl]methyl]-1H-1,2,4-triazole (BE 835 579); prochloraz, *N*-(propyl-[2-(2,4,6-trichlorophenoxy)ethyl])imidazole-1-carboxamide (US 3 991 071); prothioconazole, 2-[2-(1-chlorocyclopropyl)-3-(2-chlorophenyl)-2-hydroxypropyl]-2,4-dihydro-[1,2,4]triazole-3-thione (WO 96/16048); simeconazole, α-(4-fluorophenyl)-α-[(trimethylsilyl)methyl]-1H-1,2,4-triazole-1-ethanol [CAS RN 149508-90-7]; tebuconazole, 1-(4-chlorophenyl)-4,4-dimethyl-3-[1,2,4]triazol-1-ylmethylpentan-3-ol (EP-A 40 345); tetraconazole, 1-[2-(2,4-dichlorophenyl)-3-(1,1,2,2-tetrafluoroethoxy)propyl]-1H-1,2,4-triazole (EP 234 242); triadimefon, 1-(4-chlorophenoxy)-3,3-dimethyl-1-(1H-1,2,4-triazol-1-yl)-2-butanone (BE 793 867); triadimenol, β-(4-chlorophenoxy)-α-(1,1-dimethylethyl)-1H-1,2,4-triazole-1-ethanol (DE 23 24 010); triflumizol, (4-chloro-2-trifluoro-methylphenyl)-(2-propoxy-1-[1,2,4]triazol-1-ylethyliden)-amine (JP-A 79/119 462); triticonazole, (5E)-5-[(4-chlorophenyl)methylene]-2,2-dimethyl-1-(1H-1,2,4-triazol-1-ylmethyl)cyclopentanol (FR 26 41 277); iprodione, *N*-isopropyl-3-(3,5-dichlorophenyl)-2,4-dioxoimidazolidine-1-carboxamide (GB 13 12 536); myclozolin, (RS)-3-(3,5-dichlorophenyl)-5-methoxymethyl-5-methyl-1,3-oxazolidine-2,4-dione [CAS RN 54864-61-8]; procymidone, *N*-(3,5-dichlorophenyl)-1,2-dimethylcyclopropane-1,2-dicarboximide (US 3 903 090); vinclozolin, 3-(3,5-dichlorophenyl)-5-methyl-5-vinyloxazolidine-2,4-dione (DE-A 22 07 576); ferbam, iron(3+) dimethyldithiocarbamate (US 1 972 961); nabam, disodium ethylenebis(dithiocarbamate) (US 2 317 765); maneb, manganese ethylenebis(dithiocarbamate) (US 2 504 404); mancozeb, manganese ethylenebis(dithiocarbamate) polymer complex zinc salt (GB 996 264); metam, methyldithiocarbaminic acid (US 2 791 605); metiram, zinc ammoniate ethylenebis(dithiocarbamate) (US 3 248 400); propineb, zinc propylenebis(dithiocarbamate) polymer (BE 611 960); polycarbamate, bis(dimethylcarbamodithioato-S,S')[μ-[[1,2-ethanediylbis[carbamodithioato-S,S']](2-)]]di[zinc] [CAS RN 64440-88-6]; thiram, bis(dimethylthiocarbamoyl) disulfide (DE 642 532); ziram, dimethyldithiocarbamate [CAS RN 137-30-4]; zineb, zinc ethylenebis(dithiocarbamate) (US 2 457 674); anilazine, 4,6-dichloro-*N*-(2-chlorophenyl)-1,3,5-triazine-2-amine (US 2 720 480); benomyl, *N*-butyl-2-acetylaminobenzo-imidazole-1-carboxamide (US 3 631 176); boscalid, 2-chloro-*N*-(4'-chlorobiphenyl-2-yl)-nicotinamide (EP-A 545 099); carbendazim, methyl (1 H-benzoimidazol-2-yl)carbamate (US 3 657 443); carboxin, 5,6-dihydro-2-methyl-*N*-phenyl-1,4-oxathiin-3-carboxamide (US 3 249 499); oxycarboxin, 5,6-dihydro-2-methyl-1,4-oxathiin-3-carboxanilide 4,4-dioxide (US 3 399 214); cyazofamid, 4-chloro-2-cyano-*N*,*N*-dimethyl-5-(4-methylphenyl)-1H-imidazole-1-sulfonamide (CAS RN 120116-88-3]; dazomet, 3,5-dimethyl-1,3,5-thiadiazinane-2-thione (Bull. Soc. Chim. Fr. 15, p. 891 (1897)); dithianon, 5,10-dioxo-5,10-dihydronaphtho[2,3-b][1,4]dithiin-2,3-dicarbonitrile (GB 857 383); famoxadone, (RS)-3-anilino-5-methyl-5-(4-phenoxyphenyl)-1,3-oxazolidine-2,4-dione [CAS RN 131807-57-3]; fenamidone, (S)-1-anilino-4-methyl-2-methylthio-4-phenylimidazolin-5-one [CAS RN 161326-34-7]; fenarimol, α-(2-chlorophenyl)-α-(4-chlorophenyl)-5-pyrimidinemethanol (GB 12 18 623); fuberidazole, 2-(2-furanyl)-1H-benzimidazole (DE 12 09 799); flutolanil, α,α,α-trifluoro-3'-isopropoxy-o-toluanilide (JP 1104514); furametpyr, 5-chloro-*N*-(1,3-dihydro-1,1,3-trimethyl-4-isobenzofuranyl)-1,3-dimethyl-1 H-pyrazole-4-carboxamide [CAS RN 123572-88-3]; isoprothiolane, diisopropyl 1,3-dithiolan-2-ylidenemalonate (Proc. Insectic. Fungic. Conf. 8. Vol. 2, p. 715 (1975)); mepronil, 3'-isopropoxy-o-toluanilide (US 3 937 840); nuarimol, α-(2-chlorophenyl)-α-(4-fluorophenyl)-5-pyrimidinemethanol (GB 12 18 623); fluopicolide (picobenzamid), 2,6-dichloro-*N*-(3-chloro-5-trifluoromethylpyridin-2-ylmethyl)benzamide (WO 99/42447); probenazole, 3-allyloxy-1,2-benzothiazole 1,1-dioxide (Agric. Biol. Chem. 37, p. 737 (1973)); proquinazid, 6-iodo-2-propoxy-3-propylquinazolin-4(3H)-one (WO 97/48684); pyrifenox, 2',4'-dichloro-2-(3-pyridyl)acetophenone (EZ)-O-methyloxime (EP 49 854); pyroquilon, 1,2,5,6-tetrahydropyrrolo[3,2,1-ij]quinolin-4-one (GB 139 43 373) quinoxyfen, 5,7-dichloro-4-(4-fluorophenoxy)quinoline (US 5 240 940); silthiofam, *N*-allyl-4,5-dimethyl-2-(trimethylsilyl)thiophene-3-carboxamide [CAS RN 175217-20-6]; thiabendazole, 2-(1,3-thiazol-4-yl)benzimidazole (US 3 017 415); thifluzamide, 2',6'-dibromo-2-methyl-4'-trifluormethoxy-4-trifluormethyl-1,3-thiazole-5-carboxanilide [CAS RN 130000-40-7]; thiophanate-methyl, 1,2-phenylenebis(iminocarbonothioyl)bis(dimethylcarbamate) (DE-A 19 30 540); tiadinil, 3'-chloro-4,4'-dimethyl-1,2,3-thiadiazole-5-carboxanilide [CAS RN 223580-51-6]; tricyclazole, 5-methyl-1,2,4-triazolo[3,4-b][1,3]benzothiazole [CAS RN 41814-78-2]; triforine, N,N'-{piperazine-1,4-diylbis[(trichlormethyl)methylene]}diformamide (DE 19 01 421); Bordeaux composition, composition of $CuSO_4$ x $3Cu(OH)_2$ x $3CaSO_4$ [CAS RN 8011-63-0]; copper acetate, $Cu(OCOCH_3)_2$ [CAS RN 8011-63-0]; copper oxychloride, $Cu_2Cl(OH)_3$ [CAS RN 1332-40-7]; basic copper sulfate, $CuSO_4$ [CAS RN 1344-73-6]; binapacryl, (RS)-2-sec-butyl-4,6-dinitrophenyl 3-methylcrotonate [CAS RN 485-31-4]; dinocap, composition of 2,6-dinitro-4-octyl-phenylcrotonate and 2,4-dinitro-6-octylphenylcrotonate, where "octyl" is a composition of 1-methylheptyl, 1-ethylhexyl and 1-propylpentyl (US 2 526 660); dinobuton, (RS)-2-sec-butyl-4,6-dinitrophenyl isopropyl carbonate [CAS RN 973-21-7]; nitrothal-isopropyl, diisopropyl 5-nitroisophthalate (Proc. Br. Insectic. Fungic. Conf. 7., Vol. 2, p. 673 (1973)); fenpiclonil, 4-(2,3-dichlorophenyl)-1 H-pyrrole-3-carbonitrile (Proc. 1988 Br. Crop Prot. Conf. - Pests Dis., Vol. 1, p. 65); fludioxonil, 4-(2,2-difluorobenzo[1,3]dioxol-4-yl)-1H-pyrrole-3-carbonitrile (The Pesticide Manual, publ. The British Crop Protection Council, 10th ed. (1995), p. 482); acibenzolar-S-methyl, methyl 1,2,3-benzothiadiazol-7-carbothioate [CAS RN 135158-54-2]; flubenthiavalicarb (benthiavalicarb), isopropyl {(S)-1-[(1R)-1-(6-fluorobenzothiazol-2-yl)-ethylcarbamoyl]-2-methylpropyl}carbamate (JP-A 09/323 984); carpropamid, 2,2-dichloro-*N*-[1-(4-chlorophenyl)ethyl]-1-ethyl-3-methylcyclopropanecarboxamide [CAS RN 104030-54-8]; chlorothalonil, 2,4,5,6-tetrachloroisophthalonitrile (US 3 290 353); cyflufenamid, (Z)-*N*-[α-(cyclopropylmethoxyimino)-2,3-difluoro-6-(trifluoromethyl)benzyl]-2-phenylacetamide (WO 96/19442); cymoxanil, 1-(2-cyano-2-methoxyiminoacetyl)-3-ethylurea (US 3 957 847); diclomezine, 6-(3,5-dichlorophenyl-p-tolyl)pyridazin-3(2H)-one (US 4 052 395) diclocymet, (RS)-2-cyano-*N*-[(R)-1-(2,4-dichlorophenyl)ethyl]-3,3-dimethylbutyramide [CAS RN 139920-32-4]; diethofencarb, isopropyl 3,4-diethoxycarbanilate (EP 78 663); edifenphos, O-ethyl S,S-diphenyl phosphorodithioate (DE 14 93 736) ethaboxam, *N*-(cyano-2-thienylmethyl)-4-ethyl-2-(ethylamino)-5-thiazolecarboxamide (EP-A 639 574); fenhexamid, *N*-(2,3-dichloro-4-hydroxyphenyl)-1-methylcyclohexanecarboxamide (Proc. Br. Crop Prot. Conf. - Pests Dis., 1998, Vol. 2, p. 327); fentin acetate, triphenyltin (US 3 499 086); fenoxanil, *N*-(1-cyano-1,2-dimethylpropyl)-2-(2,4-dichlorophenoxy)propanamide (EP 262 393); ferimzone, mepanipyrim, (Z)-2'-methylacetophenone-4,6-dimethylpyrimidin-2-ylhydrazone [CAS RN 89269-64-7]; fluazinam, 3-chloro-*N*-[3-chloro-2,6-dinitro-4-(trifluoromethyl)phenyl]-5-(trifluoromethyl)-2-pyridinamine (The Pesticide Manual, publ. The British Crop Protection Council, 10th ed. (1995), p. 474); fosetyl, fosetyl-aluminum, ethylphosphonate (FR 22 54 276); iprovalicarb, isopropyl [(1S)-2-methyl-1-(1-p-tolylethylcarbamoyl)propyl]carbamate (EP-A 472 996); hexachlorbenzene (C. R. Seances Acad. Agric. Fr. 31, p. 24, 1945); metrafenon, 3'-bromo-2,3,4,6'-tetramethoxy-2',6-dimethylbenzophenone (US 5 945 567); pencycuron, 1-(4-chlorobenzyl)-1-cyclopentyl-3-phenylurea (DE 27 32 257); penthiopyrad, (RS)-*N*-[2-(1,3-dimethylbutyl)-3-thienyl]-1-methyl-3-(trifluoromethyl)-1 H-pyrazole-4-carboxamide (JP 10130268); propamocarb, propyl 3-(dimethyl-amino)propylcarbamate (DE 15 67 169); phthalide (DE 16 43 347); toloclofos-methyl, O-2,6-dichloro-p-tolyl O,O-dimethyl phosphorothioate (GB 14 67 561); quintozene, pentachlornitrobenzene (DE 682 048); zoxamide, (RS)-3,5-dichloro-*N*-(3-chloro-1-ethyl-1-methyl-2-oxopropyl)-p-toluamide [CAS RN 156052-68-5]; azoxystrobin, methyl 2-{2-[6-(2-cyano-1-vinylpenta-1,3-dienyloxy)pyrimidin-4-yloxy]phenyl}-3-methoxyacrylate (EP 382 375), dimoxystrobin, (E)-2-(methoxyimino)-*N*-methyl-2-[α-(2,5-xylyloxy)-o-tolyl]acetamide (EP 477 631); enestroburin, methyl 2-{2-[3-(4-chlorophenyl)-1-methylallylideneaminooxymethyl]phenyl}-3-methoxyacrylate (EP 936 213); fluoxastrobin, (E)-{2-[6-(2-chlorophenoxy)-5-fluoropyrimidin-4-yloxy]phenyl}(5,6-dihydro-1,4,2-dioxazin-3-yl)methanone O-methyloxime (WO 97/27189); kresoxim-methyl, methyl (E)-methoxyimino[α-(o-tolyloxy)-o-tolyl]acetate (EP 253 213); metominostrobin, (E)-2-(methoxyimino)-*N*-methyl-2-(2-phenoxyphenyl)acetamide (EP 398 692); orysastrobin, (2E)-2-(methoxyimino)-2-{2-[(3E,5E,6E)-5-(methoxyimino)-4,6-dimethyl-2,8-dioxa-3,7-diazanona-3,6-dien-1-yl]phenyl}-*N*-methylacetamide (WO 97/15552); picoxystrobin, methyl 3-methoxy-2-[2-(6-trifluoromethylpyridin-2-yloxymethyl)phenyl]acrylate (EP 278 595); pyraclostrobin, methyl *N*-{2-[1-(4-chlorophenyl)-1H-pyrazol-3-yloxymethyl]phenyl}(*N*-methoxy)carbamate (WO 96/01256); trifloxystrobin, methyl (E)-methoxyimino-{(E)-α-[1-(α,α,α-trifluoro-m-tolyl)ethylideneaminooxy]-o-tolyl}acetate (EP 460 575); captafol, *N*-(1,1,2,2-tetrachloroethylthio)cyclohex-4-ene-1,2-dicarboximide (Phytopathology, Vol. 52, p. 754 (1962)); captan, *N*-(trichloromethylthio)cyclohex-4-ene-1,2-dicarboximide (US 2 553 770); dichlofluanid, *N*-dichlorofluoromethylthio-N',N'-dimethyl-*N*-phenylsulfamide (DE 11 93 498); folpet, *N*-(trichlormethylthio)phthalimide (US 2 553 770); tolylfluanid, *N*-dichlorofluoromethylthio-N',N'-dimethyl-N-p-tolylsulfamide (DE 11 93 498); dimethomorph, 3-(4-chlorophenyl)-3-(3,4-dimethoxyphenyl)-1-morpholin-4-yl-propenone (EP 120 321); flumetover, 2-(3,4-dimethoxyphenyl)-*N*-ethyl-α,α,α-trifluoro-*N*-methyl-p-toluamide [AGROW no. 243, 22 (1995)]; flumorph, 3-(4-fluorophenyl)-3-(3,4-dimethoxyphenyl)-1-morpholin-4-ylpropenone (EP 860 438); 5-Amino-2-isopropyl-3-oxo-4-o-tolyl-2,3-dihydro-pyrazole-1-carbothioic acid S-allyl ester (CN1939128).

The compounds described by IUPAC nomenclature, their preparation and their fungicidal activity are also known (cf. Can. J. Plant Sci. 48(6), 587-94, 1968; EP-A 141 317; EP-A 152 031; EP-A 226 917; EP-A 243 970; EP-A 256 503; EP-A 428 941; EP-A 532 022; EP-A 1 028 125; EP-A 1 035 122; EP-A 1 201 648; EP-A 1 122 244, JP 2002316902; DE 19650197; DE 10021412; DE 102005009458; US 3,296,272; US 3,325,503; WO 98/46608; WO 99/14187; WO 99/24413; WO 99/27783; WO 00/29404; WO 00/46148; WO 00/65913; WO 01/54501; WO 01/56358; WO 02/22583; WO 02/40431; WO 03/10149; WO 03/11853; WO 03/14103; WO 03/16286; WO 03/53145; WO 03/61388;

WO 03/66609; WO 03/74491; WO 04/49804; WO 04/83193; WO 05/120234; WO 05/123689; WO 05/123690; WO 05/63721; WO 05/87772; WO 05/87773; WO 06/15866; WO 06/87325; WO 06/87343; WO 07/82098; WO 07/90624, WO 11/028657). *N*-methyl-2-{1-[(5-methyl-3-trifluoromethyl-1H-pyrazol-1-yl)-acetyl]-piperidin-4-yl}-*N*-[(1R)-1,2,3,4-tetrahydronaphthalen-1-yl]-4-thiazolecarboxamide has been described in WO 2007/014290.

The active compounds of group O) and their pesticidal action and processes for their preparation are known (see also http://www.hclrss.demon.co.uk/index.html). Commercially available active compounds can be found, for example, in The Pesticide Manual, 14th Edition, British Crop Protection Council (2006) and other publications. The compound BB) of group I)

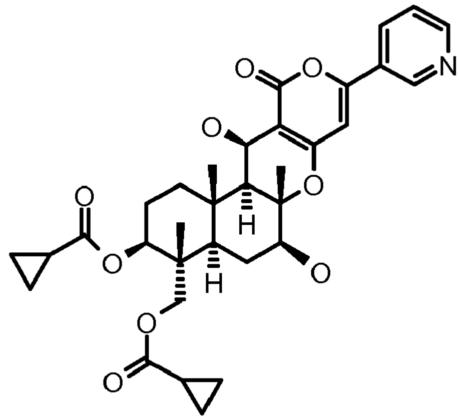

BB)

having the IUPAC name [(3S,4R,4aR,6S,6aS,12R,12aS,12bS)-3-(cyclopropanecarbonyloxy)-6,12-dihydroxy-4,6a,12b-trimethyl-11-oxo-9-(pyridin-3-yl)-1,2,3,4,4a,5,6,6a,12a,12b-decahydro-11H,12H-benzo[f]pyrano[4,3-b]chromen-4-yl]methyl cyclopropanecarboxylate and its pesticidal action are disclosed in WO2006/129714 and WO2009/081851.

The further component(s), i.e. component II, II', III, IV, V etc., according to the present invention, are selected from any one of groups A) to O) and A'), B'), C), D), E'), F') and G) to O), respectively, as given above, with the proviso that all of the components in one composition are different active ingredients.

In the following, the inventive compositions and their preferred uses are further described. In each case, according to the present invention, the use of the composition for controlling a particular phytopathogenic fungus is also meant to encompass the respective method for controlling the particular phytopathogenic fungi, wherein the fungi or the materials, plants, the soil or seed to be protected from fungal attack are treated with an effective amount of a composition as defined in that particular context.

According to one aspect, the present invention relates to two-component compositions, i.e. compositions comprising component I, and component II selected from groups A) to O). According to a specific embodiment thereof, only two active compounds as defined are present in these compositions (herein also called "binary compositions"). The composition may, of course, contain any kind of additive or the like as detailled below in order to provide a formulation suitable for use in agriculture.

The weight ratio of component I to component II generally depends from the properties of the active substances used and is usually in the range of from 1:100 to 100:1, frequently in the range of from 1:50 to 50:1, preferably in the range of from 1:20 to 20:1, particularly preferably in the range of from 1:10 to 10:1, in particular in the range of from 1:3 to 3:1. It may also be preferable for the weight ratio to be in the range of from 1:2 to 2:1.

According to further embodiments of the two-component compositions according to the invention, the weight ratio of component I to component II usually is in the range of from 100:1 to 1:1, regularly in the range of from 50:1 to 1:1, preferably in the range of from 20:1 to 1:1, more preferably in the range of from 10:1 to 1:1, even more preferably in the range of from 4:1 to 1:1 and in particular in the range of from 2:1 to 1:1.

According to still further embodiments of the two-component compositions according to the invention, the weight ratio of component I to component II usually is in the range of from 1:1 to 1:100, regularly in the range of from 1:1 to 1:50, preferably in the range of from 1:1 to 1:20, more preferably in the range of from 1:1 to 1:10, even more preferably in the range of from 1:1 to 1:4 and in particular in the range of from 1:1 to 1:2.

According to one embodiment of the two-component compositions, component I is as defined above and component II is selected from any one of groups A) to K).

One specific embodiment relates to two-component compositions, wherein component I is as defined above, and component II is selected from group A) of the respiration inhibitors. According to one embodiment thereof, component II is selected from the group of inhibitors of complex III at $Q_o$ site, in e.g. the strobilurins. Specifically, component II is selected from the group consisting of dimoxystrobin, kresoxim-methyl, orysastrobin, trifloxystrobin, famoxadone and

fenamidone. According to a further specific embodiment, these are binary compositions which, as active compounds, comprise in each case only the mentioned two active components.

According to a further embodiment thereof, component II is selected from the group of inhibitors of complex II, e.g. carboxamides. Specifically, component II is selected from the group consisting of benzovindiflupyr, bixafen, boscalid, fluopyram, fluxapyroxad, isopyrazam, penflufen, penthiopyrad and sedaxane. According to a further embodiment, component II is selected from the group of ametotradin, cyazofamid, fluazinam, fentin salts such as fentin acetate. According to a further specific embodiment, these are binary compositions which, as active compounds, comprise in each case only the mentioned two active components.

According to a further embodiment of the two-component compositions, component I is as defined above, and component II is selected from group B) of the sterol biosynthesis inhibitors (SBI fungicides). According to one embodiment thereof, component II is selected from the group of the C14 demethylase inhibitors (DMI fungicides), selected from cyproconazole, difenoconazole, fluquinconazole, flusilazole, flutriafol, metconazole, myclobutanil, penconazole, propiconazole, prothioconazole, triadimefon, triadimenol, tebuconazole, triticonazole, prochloraz, fenarimol and triforine. According to a further embodiment thereof, component II is selected from the group of the delta14-reductase inhibitors, in particular dodemorph, fenpropimorph, tridemorph, fenpropidin and spiroxamine. According to a further embodiment thereof, component II is selected from the group of Inhibitors of 3-keto reductase such as fenhexamid.

According to a further embodiment of the two-component compositions, component I is as defined above, and component II is selected from group C) of the Nucleic acid synthesis inhibitors and particularly selected from metalaxyl, (metalaxyl-M) mefenoxam, ofurace.

According to a further embodiment of the two-component compositions, component I is as defined above, and component II is selected from group D) of the inhibitors of cell division and cytoskeleton, such as benomyl, carbendazim, thiophanate-methyl, ethaboxam, fluopicolide, zoxamide, metrafenone, pyriofenone, in particular ethaboxam, zoxamide and metrafenone.

According to a further embodiment of the two-component compositions, component I is as defined above, and component II is selected from group E) of the inhibitors of amino acid and protein synthesis, in particular selected from mepanipyrim and pyrimethanil.

According to a further embodiment of the two-component compositions, component I is as defined above, and component II is selected from group F) of the signal transduction inhibitors, in particular selected from iprodione, vinclozolin and quinoxyfen.

According to a further embodiment of the two-component compositions, component I is as defined above, and component II is selected from group G) of the lipid and membrane synthesis inhibitors, such as dimethomorph, flumorph, iprovalicarb, benthiavalicarb, mandipropamid and propamocarb.

According to a further embodiment of the two-component compositions, component I is as defined above, and component II is selected from group H) of the inhibitors with Multi Site Action, in particular selected from copper acetate, copper hydroxide, copper oxychloride, copper sulfate, sulfur, (tri)basic copper sulfate, mancozeb, metiram, propineb, thiram, captafol, folpet, chlorothalonil, dichlofluanid, dithianon and 2,6-dimethyl-1H,5H-[1,4]dithiino[2,3-c:5,6-c']dipyrrole-1,3,5,7(2H,6H)-tetraone;

According to a further embodiment of the two-component compositions, component I is as defined above, and component II is selected from group I) of the cell wall synthesis inhibitors, in particular selected from carpropamid and fenoxanil.

According to a further embodiment of the two-component compositions, component I is as defined above, and component II is selected from group J) of the plant defence inducers, in particular selected from acibenzolar-S-methyl, probenazole, tiadinil, fosetyl, fosetyl-aluminium, phosphorous acid and salts thereof such as potassium salt of phosphorous acid, sodium salt of phosphorous acid, calcium salt of phosphorous acid, lithium salt of phosphorous acid and aluminium salt of phosphorous acid.

According to a further embodiment of the two-component compositions, component I is as defined above, and component II is selected from group K), in particular selected from cymoxanil, proquinazid and *N*-methyl-2-{1-[(5-methyl-3-trifluoromethyl-1H-pyrazol-1-yl)-acetyl]-piperidin-4-yl}-*N*-[(1R)-1,2,3,4-tetrahydronaphthalen-1-yl]-4-thiazolecarboxamide.

According to a further embodiment of the two-component compositions, component I is as defined above, and component II is selected from any one of group L) (antifungal biocontrol agents and plant bioactivators), in particular selected from *Bacillus subtilis* strain NRRL No. B-21661, *Bacillus pumilus* strain NRRL No. B-30087 and *Ulocladium oudemansii*.

According to a further embodiment of the two-component compositions, component I is as defined above, and component II is selected from any one of group M) (growth regulators). According to one specific embodiment, the growth regulator is selected from chlormequat (chlormequat chloride), mepiquat (mepiquat chloride), paclobutrazole, prohexadione (prohexadione-calcium), trinexapac-ethyl and uniconazole.

According to a particular embodiment of the inventive two-component compositions comprising two fungicides,

the composition comprises component I and a component II selected from fluxapyroxad, fenpropimorph, prothioconazole and chlorothalonil in a weight ratio from 1:20 to 20:1, particularly preferably in the range of from 1:10 to 10:1, in particular in the range of from 1:3 to 3:1. It may also be preferable that the weight ratio is in the range of from 1:2 to 2:1. In a particular embodiments, these compositions are "binary composition" that is, in the sense of the present invention, a composition, wherein only the said two active compounds are present. The composition may, of course contain any kind of additive or the like as detailled below in order to provide a formulation suitable for use in agriculture. Said two-component compositions comprising two fungicides as components I and II are in particular suitable as fungicides as detailled below.

According to a specific embodiment thereof, said compositions are used for the control of cereal pathogens. In particular, said compositions are suitable for controlling wheat pathogens. When used in wheat, especially preferred weight ratios of the active ingredients are 20:1 to 1:20, in particular 2:1 to 1:2, wherein it may be especially preferred if component I to II is present 1:1 to 2:1. Said compositios are particularly suitable for controlling the wheat pathogens selected from Septoria tritici, Stagonospora nodorum, Pyrenophora tritici repentis, Puccinia recondita, Puccinia striiformis and Blumeria graminis. Furthermore, said composition is useful for the control of the pathogens selected from Fusarium culmorum, Fusarium graminearum and Pseudocercosporella herpotrichoides. According to a further specific embodiment, said compositions are used for controlling barley pathogens. When used in barley, especially preferred weight ratios of the active ingredients are 20:1 to 1:20, in particular 2:1 to 1:2, wherein it may be especially preferred if component I to II is present 1:1 to 2:1. Said compositions are particularly suitable for controlling the barley pathogens, selected from Pyrenophera teres, Rhychosporium secalis, Puccinia hordei and Blumeria graminis. Furthermore, said compositions are useful for controlling the barley pathogens, selected from Ramularia collo-cygni and Pseudocercosporella herpotrichoides.

According to a further specific embodiment, said compositions are used for the control of soy pathogens. When used in soy, especially preferred weight ratios of the active ingredients are 20:1 to 1:20, in particular 3:1 to 1:3, wherein it may be especially preferred if component I to II is present 3:1 to 2:1. In particular, said compositions are suitable for controlling soy pathogens selected from phakopsora pachyrizi, P. meibomiae and Microsphaera diffusa. In soy, said compositions may also be effectlively used for the control of the so-called FDC (Foliar Disease Complex), e.g. against Septoria glycines, Cercospora kikuchii, C. sojina, Corynespora cassiicola and/or Alternaria spp..

According to a further specific embodiment, said compositions are used for the control of corn pathogens. When used in corn, especially preferred weight ratios of the active ingredients are 20:1 to 1:20, in particular 2:1 to 1:2, wherein it may be especially preferred if component I to II is present 2:1 to 1:1. In particular, said compositions are suitable for controlling corn pathogens selected from Cercospora zeae-maydis, Puccinia sorghi and Helminthosporium maydis.

According to still a further specific embodiment, said compositions are used for the control of sugar beet pathogens. When used in sugar beet, especially preferred weight ratios of the active ingredients are 20:1 to 1:20, in particular 2:1 to 1:2, wherein it may be especially preferred if component I to II is present 2:1 to 1:1. In particular, said compositions are suitable for controlling corn pathogens selected from Cercospora beticola, Erysiphe betae, Ramularia betae and Uromyces betae.

According to still a further specific embodiment, said compositions are used for the control of peanut pathogens, in particular selected from Mycosphaerella arachidis (= Cercospora) and Puccinia arachidis. When used in peanuts, especially preferred weight ratios of the active ingredients are 20:1 to 1:20, in particular 2:1 to 1:2, wherein it may be especially preferred if component I to II is present 2:1 to 1:1.

According to still a further specific embodiment, said compositions are used for the control of oil seed rape and canola pathogens, in particular selected from Sclerotinia sclerotiorum, Leptosphearia maculans and Alternaria alternate. When used in oil seed rape or canola, especially preferred weight ratios of the active ingredients are 20:1 to 1:20, in particular 2:1 to 1:2, wherein it may be especially preferred if component I to II is present 2:1 to 1:1.

According to still a further specific embodiment, said compositions are used for the control of rice pathogens, in particular selected from Rhizoctonia solani and Pyricularia oryzae. When used in rice, especially preferred weight ratios of the active ingredients are 20:1 to 1:20, in particular 2:1 to 1:2, wherein it may be especially preferred if component I to II is present 2:1 to 1:1.

Said compositions of component I and II is also suitable for the control of pathogens in speciality crops, such as turf, potato, tomato, cucurbits, grapes, apples, ornamentals and bananas. Turf pathogens that may be controlled according to the present invention are selected from Sclerotinia homeocarpa and Rhizoctonia solani. When used in turf, especially preferred weight ratios of the active ingredients are 20:1 bis 1:20, in particular 2:1 bis 1:2, wherein it may be especially preferred if component I to II is present 1:1 to 1:2. Potato and tomato pathogens that may be controlled according to the present invention are in particular selected from Alternaria solani, A. alternata and Rhizoctonia solani. A cucurbit pathogen that may be controlled according to the present invention is in particular Sphaerotheca fuliginea. A grape pathogen that may be controlled according to the present invention is in particular Uncinula necator and Botrytis cinerea. An apple pathogen that may be controlled according to the present invention is in particular Podosphaera leucotricha and Venturia inaequalis. Ornamental pathogens that may be controlled according to the present invention

are in particular selected from Sphaerotheca fuliginea, Diplocarpon spp., Alternaria spp. and Sclerotinia spp. Banana pathogens that may be controlled according to the present invention are in particular selected from Mycosphaerella fijiensis and Mycosphaerella musicola.

A specific embodiment of the above embodiment relates to the composition, comprising component I and fluxapyroxad as component II in a weight ratio of 20:1 to 1:20, more specifically 5:1 to 1:5, in particular 3:1 to 1:3, more specifically 2:1 to 1:2. Surprisingly, this composition shows synergistical effects and the components are in particular used in synergistically effective amounts.

A further specific embodiment of the above two-component compositions relates to the composition, comprising component I and as component II fenpropimorph in a weight ratio of 20:1 to 1:20, more specifically 5:1 to 1:5, in particular 3:1 to 1:3, more specifically 2:1 to 1:2. Surprisingly, this composition shows synergistical effects and the components are in particular used in synergistically effective amounts.

A further specific embodiment of the above two-component ompositions relates to the composition, comprising component I and as component II chlorothalonil in a weight ratio of 20:1 to 1:20, more specifically 5:1 to 1:5, in particular 3:1 to 1:3, more specifically 2:1 to 1:2. Surprisingly, this composition shows synergistical effects and the components are in particular used in synergistically effective amounts.

According to a further embodiment of the two-component compositions, component I is as defined above, and component II is selected from any one of group N) (herbicides).

According to a further embodiment of the two-component compositions, component I is as defined above, and component II is selected from any one of group O) (insecticides). According to one specific embodiment, the insecticide is selected from the group of the organo(thio)phosphates, in particular selected from the group consisting of acephate, chlorpyrifos, diazinon, dichlorvos, dimethoate, fenitrothion, methamidophos, methidathion, methyl-parathion, monocrotophos, phorate, profenofos and terbufos. According to a further specific embodiment, the insecticide is selected from the group of the carbamates, in particular selected from the group consisting of aldicarb, carbaryl, carbofuran, carbosulfan, methomyl and thiodicarb. According to a further specific embodiment, the insecticide is selected from the group of the pyrethroids, in particular selected from the group consisting of: bifenthrin, cyfluthrin, cypermethrin, alpha-cypermethrin, zeta-cypermethrin, deltamethrin, esfenvalerate, lambda-cyhalothrin and tefluthrin. According to still a further specific embodiment, the insecticide is selected from the group of insect growth regulators, in particular selected from the group consisting of lufenuron and spirotetramat. According to still a further specific embodiment, the insecticide is selected from the group of the nicotine receptor agonists/antagonists, in particular selected from the group consisting of: clothianidin, imidacloprid, thiamethoxam and thiacloprid. According to a further specific embodiment, the insecticide is selected from the group of the GABA antagonists, in particular selected from the group consisting of: endosulfan and fipronil. According to a further specific embodiment, the insecticide is selected from the group of the macrocyclic lactones, in particular selected from the group consisting of: abamectin, emamectin, spinosad and spinetoram. According to a further specific embodiment, the insecticide is hydramethylnon. According to a further specific embodiment, the insecticide is fenbutatin oxide. According to a further specific embodiment, the insecticide is selected from the group consisting of chlorfenapyr, indoxacarb, metaflumizone, flonicamid, flubendiamide, cyazypyr (HGW86) and cyflumetofen.

According to a preferred embodiment of the invention, component II is selected from the following fungicide compounds. Every composition of the respective component II with the component I as described above represents a particular embodiment of the present invention:

| | | | |
|---|---|---|---|
| II-1 | ametoctradin | II-6 | bixafen |
| II-2 | amisulbrom | II-7 | boscalid |
| II-4 | benthiavalicarb | II-8 | carbendazim |
| II-5 | benzovindiflupyr | II-9 | captan |
| II-10 | carboxin | II-23 | dimoxystrobin |
| II-11 | chlorothalonil | II-24 | diniconazole |
| II-12 | cyazofamid | II-25 | dithianon |
| II-13 | cyflufenamid | II-27 | ethaboxam |
| II-14 | cymoxanil | II-28 | famoxadone |
| II-15 | cyproconazole | II-29 | fenamidone |
| II-17 | copper | II-30 | fenhexamid |
| II-18 | copper hydroxide | II-31 | fenpropidin |
| II-19 | dodemorph | II-32 | fenpropimorph |
| II-20 | dodine | II-33 | fluazinam |
| II-21 | difenoconazole | | |
| II-22 | dimethomorph | | |

Inventive compositions:

B1) composition comprising component I and II-1
B2) composition comprising component I and II-2
B3) composition comprising component I and II-4
B4) composition comprising component I and II-5
B5) composition comprising component I and II-6
B6) composition comprising component I and II-7
B7) composition comprising component I and II-8
B8) composition comprising component I and II-9
B9) composition comprising component I and II-10
B10) composition comprising component I and II-11
B11) composition comprising component I and II-12
B12) composition comprising component I and II-13
B13) composition comprising component I and II-14
B14) composition comprising component I and II-15
B15) composition comprising component I and II-17
B16) composition comprising component I and II-18
B17) composition comprising component I and II-19
B18) composition comprising component I and II-20
B19) composition comprising component I and II-21
B20) composition comprising component I and II-22
B21) composition comprising component I and II-23
B22) composition comprising component I and II-24
B23) composition comprising component I and II-25
B24) composition comprising component I and II-27
B25) composition comprising component I and II-28
B26) composition comprising component I and II-29
B27) composition comprising component I and II-30
B28) composition comprising component I and II-31
B29) composition comprising component I and II-32
B30) composition comprising component I and II-33

According to a further preferred embodiment of the invention component II is selected from the following fungicide compounds. Every composition of the respective component II with the component I as described above represents a particular embodiment of the present invention:

| | | | |
|---|---|---|---|
| II-35 | fluopicolide | II-51 | iprovalicarb |
| II-36 | fluopyram | II-52 | kiralaxyl |
| II-38 | fluquinconazole | II-53 | kresoxim-methyl |
| II-39 | flusilazole | II-54 | mancozeb |
| II-40 | flutolanil | II-55 | mandipropamid |
| II-41 | flutriafol | II-56 | mefenoxam |
| II-42 | fluxapyroxad | II-57 | mepanipyrim |
| II-43 | folpet | II-58 | meptyldinocap |
| II-44 | fosetyl-Al | II-59 | metalaxyl |
| II-45 | guazatine | II-60 | metconazole |
| II-46 | hymexazole | II-61 | metiram |
| II-47 | imazalil | II-62 | metrafenone |
| II-48 | ipconazole | II-63 | myclobutanil |
| II-49 | iprodione | II-64 | orysastrobin |
| II-50 | isopyrazam | II-65 | proquinazid |

Further inventive compositions:

B31) composition comprising component I and II-35

B32) composition comprising component I and II-36
B33) composition comprising component I and II-38
B34) composition comprising component I and II-39
B35) composition comprising component I and II-40
B36) composition comprising component I and II-41
B37) composition comprising component I and II-42
B38) composition comprising component I and II-43
B39) composition comprising component I and II-44
B40) composition comprising component I and II-45
B41) composition comprising component I and II-46
B42) composition comprising component I and II-47
B43) composition comprising component I and II-48
B44) composition comprising component I and II-49
B45) composition comprising component I and II-50
B46) composition comprising component I and II-51
B47) composition comprising component I and II-52
B48) composition comprising component I and II-53
B49) composition comprising component I and II-54
B50) composition comprising component I and II-55
B51) composition comprising component I and II-56
B52) composition comprising component I and II-57
B53) composition comprising component I and II-58
B54) composition comprising component I and II-59
B55) composition comprising component I and II-60
B56) composition comprising component I and II-61
B57) composition comprising component I and II-62
B58) composition comprising component I and II-63
B59) composition comprising component I and II-64
B60) composition comprising component I and II-65

According to a further preferred embodiment of the invention, component II is selected from the following fungicide compounds. Every composition of the respective component II with the component I as described above represents a particular embodiment of the present invention:

| | | | |
|---|---|---|---|
| II-67 | penconazole | II-85 | sulfur |
| II-68 | penflufen | II-86 | tebuconazole |
| II-69 | phosporous acid | II-88 | thiabendazole |
| II-70 | potassium salt of phosphorous acid | II-89 | thiophanate-methyl |
| | | II-90 | thiram |
| II-71 | sodium salt of phosphorous acid | II-91 | triazoxide |
| II-72 | penthiopyrad | II-92 | trifloxystrobin |
| II-74 | prochloraz | II-93 | triticonazole |
| II-75 | propamocarb | II-94 | valifenalate |
| II-76 | propiconazole | II-95 | vinclozolin |
| II-77 | propineb | II-96 | ziram |
| II-78 | prothioconazole | II-97 | zoxamide |
| II-79 | pyrimethanil | II-98 | 2,6-dimethyl-1H,5H-[1,4]dithiino[2,3-c:5,6-c']dipyrrole-1,3,5,7(2H,6H)-tetraone |
| II-80 | pyriofenone | | |
| II-81 | quinoxyfen | | |
| II-82 | sedaxane | | |
| II-83 | silthiofam | | |
| II-84 | spiroxamine | | |

Further inventive compositions:

B61) composition comprising component I and II-67
B62) composition comprising component I and II-68
B63) composition comprising component I and II-69
B64) composition comprising component I and II-70
B65) composition comprising component I and II-71
B66) composition comprising component I and II-72
B67) composition comprising component I and II-74
B68) composition comprising component I and II-75
B69) composition comprising component I and II-76
B70) composition comprising component I and II-77
B71) composition comprising component I and II-78
B72) composition comprising component I and II-79
B73) composition comprising component I and II-80
B74) composition comprising component I and II-81
B75) composition comprising component I and II-82
B76) composition comprising component I and II-83
B77) composition comprising component I and II-84
B78) composition comprising component I and II-85
B79) composition comprising component I and II-86
B80) composition comprising component I and II-88
B81) composition comprising component I and II-89
B82) composition comprising component I and II-90
B83) composition comprising component I and II-91
B84) composition comprising component I and II-92
B85) composition comprising component I and II-93
B86) composition comprising component I and II-94
B87) composition comprising component I and II-95
B88) composition comprising component I and II-96
B89) composition comprising component I and II-97
B90) composition comprising component I and II-98
B91) composition comprising component I and II-99

According to a further embodiment, component II is selected from the following fungicides. Every composition of the respective component II with the component I as described above represents a particular embodiment of the present invention:

| | | | |
|---|---|---|---|
| II-5 | benzovindiflupyr | II-42 | fluxapyroxad |
| II-6 | bixafen | II-44 | fosetyl-Al |
| II-7 | boscalid | II-50 | isopyrazam |
| II-8 | carbendazim | II-53 | kresoxim-methyl |
| II-11 | chlorothalonil | II-60 | metconazole |
| II-21 | difenoconazole | II-62 | metrafenone |
| II-32 | fenpropimorph | II-69 | phosporous acid |
| II-33 | fluazinam | II-70 | potassium salt of phosphorous acid |
| II-39 | flusilazole | | |
| II-71 | sodium salt of phosphorous acid | II-85 | sulfur |
| | | II-86 | tebuconazole |
| II-72 | penthiopyrad | II-92 | trifloxystrobin |
| II-74 | prochloraz | II-98 | 2,6-dimethyl-1 H,5H-[1,4]dithiino[2,3-c:5,6-c']dipyrrole-1,3,5,7(2H,6H)-tetraone |
| II-76 | propiconazole | | |
| II-78 | prothioconazole | | |
| II-84 | spiroxamine | | |

According to a further embodiment, component II is selected from the following fungicides. Every composition of the respective component II with the component I as described above represents a particular embodiment of the present invention:

| | | | |
|---|---|---|---|
| II-5 | benzovindiflupyr | II-76 | propiconazole |
| II-6 | bixafen | II-78 | prothioconazole |
| II-7 | boscalid | II-69 | phosporous acid |
| II-8 | carbendazim | II-70 | potassium salt of phosphorous acid |
| II-11 | chlorothalonil | | |
| II-21 | difenoconazole | II-71 | sodium salt of phosphorous acid |
| II-32 | fenpropimorph | II-66 | pyraclostrobin |
| II-33 | fluazinam | II-84 | spiroxamine |
| II-42 | fluxapyroxad | II-85 | sulfur |
| II-44 | fosetyl-Al | II-86 | tebuconazole |
| II-53 | kresoxim-methyl | II-92 | trifloxystrobin |
| II-60 | metconazole | II-98 | 2,6-dimethyl-1 H,5H-[1,4]dithiino[2,3-c:5,6-c']dipyrrole-1,3,5,7(2H,6H)-tetraone |
| II-62 | metrafenone | | |
| II-72 | penthiopyrad | | |
| II-74 | prochloraz | | |

According to a further preferred embodiment of the invention, component II is selected from the following growth regulators. Every composition of the respective component II with the component I as described above represents a particular embodiment of the present invention:

| | |
|---|---|
| II-1a | mepiquat chloride |
| II-2a | chlormequat chloride |
| II-3a | trinexapac-ethyl |
| II-4a | prohexadione-calcium |
| II-5a | ethophon |

Further inventive compositions:

B1a) composition comprising component I and II-1a
B2a) composition comprising component I and II-2a
B3a) composition comprising component I and II-3a
B4a) composition comprising component I and II-4a
B5a) composition comprising component I and II-5a

According to a further preferred embodiment of the invention, component II is selected from the following herbicides. Every composition of the respective component II with the component I as described above represents a particular embodiment of the present invention:

| | | | |
|---|---|---|---|
| II-1b | glyphosate | II-5b | imazapic |
| II-2b | imazamox | II-6b | imazapyr |
| II-3b | dicamba | II-7b | imazethapyr |
| II-4b | glufosinate | | |

Further inventive compositions:

B1 b) composition comprising component I and II-1b
B2b) composition comprising component I and II-2b
B3b) composition comprising component I and II-3b
B4b) composition comprising component I and II-4b
B5b) composition comprising component I and II-5b
B6b) composition comprising component I and II-6b
B7b) composition comprising component I and II-7b

According to a further preferred embodiment of the invention, component II is selected from the following insecticides. Every composition of the respective component II with the component I as described above represents a particular embodiment of the present invention:

| | | | |
|---|---|---|---|
| II-1c | abamectin | II-16c | dinotefuran |
| II-2c | acephate | II-17c | endosulfan |
| II-3c | acetamiprid | II-18c | esfenvalerate |
| II-4c | aldicarb | II-19c | fenbutatin oxide |
| II-5c | alpha-cypermethrin | II-20c | fipronil |
| II-6c | betacyfluthrin | II-21c | flonicamid |
| II-7c | bifenthrin | II-22c | flubendiamide |
| II-8c | carbofuran | II-23c | hydramethylnon |
| II-9c | chlorfenapyr | II-24c | imidacloprid |
| II-1 | 0c chlorpyrifos | II-25c | indoxacarb |
| II-11c | clothianidin | II-26c | lambda-cyhalothrin |
| II-12c | cyazypyr | II-27c | metaflumizon |
| II-13c | cyflumetofen | II-28c | methamidophos |
| II-14c | deltamethrin | II-29c | metoxyfenozide |
| II-15c | dimethoate | II-30c | nitenpyram |
| II-31c | pirimicarb | II-38c | tebufernpyrad |
| II-32c | pymetrozine | II-39c | tefluthrin |
| II-33c | pyridabene | II-40c | terbufos |
| II-34c | rynaxapyr | II-41c | thiacloprid |
| II-35c | spirotetramat | II-42c | thiamethoxam |
| II-36c | spinosad | II-43c | zetacypermethrin |
| II-37c | spinetoram | | |
| II-44c | [(3S,4R,4aR,6S,6aS, 12R, 12aS, 12bS)-3-(cyclopropanecarbonyloxy)-6,12-dihydroxy-4,6a,12b-trimethyl-11-oxo-9-(pyridin-3-yl)-1,2,3,4,4a,5,6,6a,12a,12b-decahydro-11 H,12H-benzo[f]pyrano[4,3-b]chromen-4-yl]methyl cyclopropanecarboxylate. | | |

Further inventive compositions:

B1c) composition comprising component I and II-1c
B2c) composition comprising component I and II-2c
B3c) composition comprising component I and II-3c
B4c) composition comprising component I and II-4c
B5c) composition comprising component I and II-5c
B6c) composition comprising component I and II-6c
B7c) composition comprising component I and II-7c
B8c) composition comprising component I and II-8c
B9c) composition comprising component I and II-9c
B10c)composition comprising component I and II-10c
B11c)composition comprising component I and II-11c
B12c)composition comprising component I and II-12c
B13c)composition comprising component I and II-13c
B14c)composition comprising component I and II-14c
B15c)composition comprising component I and II-15c
B16c)composition comprising component I and II-16c
B17c)composition comprising component I and II-17c
B18c)composition comprising component I and II-18c
B19c)composition comprising component I and II-19c
B20c)composition comprising component I and II-20c
B21c)composition comprising component I and II-21c
B22c)composition comprising component I and II-22c
B23c)composition comprising component I and II-23c

B24c)composition comprising component I and II-24c
B25c)composition comprising component I and II-25c
B26c)composition comprising component I and II-26c
B27c)composition comprising component I and II-27c
B28c)composition comprising component I and II-28c
B29c)composition comprising component I and II-29c
B30c)composition comprising component I and II-30c
B31c)composition comprising component I and II-31c
B32c)composition comprising component I and II-32c
B33c)composition comprising component I and II-33c
B34c)composition comprising component I and II-34c
B35c)composition comprising component I and II-35c
B36c)composition comprising component I and II-36c
B37c)composition comprising component I and II-37c
B38c)composition comprising component I and II-38c
B39c)composition comprising component I and II-39c
B40c)composition comprising component I and II-40c
B41c)composition comprising component I and II-41c
B42c)composition comprising component I and II-42c
B43c)composition comprising component I and II-43c
B44c)composition comprising component I and II-44c

According to a more specific embodiment thereof, component II is selected from the following insecticides. Every composition of the respective component II with the component I as described above represents a particular embodiment of the present invention:

| | | | |
|---|---|---|---|
| II-1c | abamectin | II-25c | indoxacarb |
| II-3c | acetamiprid | II-26c | lambda-cyhalothrin |
| II-5c | alpha-cypermethrin | II-27c | metaflumizon |
| II-6c | betacyfluthrin | II-29c | metoxyfenozide |
| II-7c | bifenthrin | II-30c | nitenpyram |
| II-9c | chlorfenapyr | II-31c | pirimicarb |
| II-10c | chlorpyrifos | II-32c | pymetrozine |
| II-11c | clothianidin | II-33c | pyridabene |
| II-12c | cyazypyr | II-34c | rynaxapyr |
| II-13c | cyflumetofen | II-35c | spirotetramat |
| II-14c | deltamethrin | II-36c | spinosad |
| II-16c | dinotefuran | II-37c | spinetoram |
| II-18c | esfenvalerate | II-38c | tebufernpyrad |
| II-20c | fipronil | II-39c | tefluthrin |
| II-21c | flonicamid | II-41c | thiacloprid |
| II-22c | flubendiamide | II-42c | thiamethoxam |
| II-24c | imidacloprid | II-43c | zetacypermethrin, and |

II-44c [(3S,4R,4aR,6S,6aS,12R,12aS,12bS)-3-(cyclopropanecarbonyloxy)-6,12-dihydroxy-4,6a,12b-trimethyl-11-oxo-9-(pyridin-3-yl)-1,2,3,4,4a,5,6,6a,12a,12b-decahydro-11H,12H-benzo[f]pyrano[4,3-b]chromen-4-yl]methyl cyclopropanecarboxylate.

According to a further aspect, the present invention relates to three-component compositions, i.e. compositions comprising component I, a component II' and a component III each independently selected from groups A'), B'), C), D), E'), F') and G) to O), wherein component II' and III are not identical. In particular, the component II' in each case is selected from the preferred groups or preferred active compounds as given above for component II and given below for II', and component III is selected from groups A'), B'), C), D), E'), F') and G) to O), in particular from the preferred active compounds used as component III as defined in the following.

According to a specific embodiment thereof, exactly three active compounds as defined are present in these compositions (herein also called "ternary compositions"). The composition may, of course, contain any kind of additive

or the like as detailled below in order to provide a formulation suitable for use in agriculture.

In the inventive three-component-compositions, the weight ratio of component I to the 1st further active compound (component II') depends on the properties of the active compounds in question; preferably, it is in the range of from 1:100 to 100:1, preferably in the range of from 1:50 to 50:1 and in particular in the range of from 1:20 to 20:1. It may be preferable for the weight ratio to be in the region of from 1:10 to 10:1, preferably from 1:3 to 3:1, in particular from 1:2 to 2:1. The weight ratio of component I to the 2nd further active compound (component III) is preferably in the range of from 1:100 to 100:1, preferably in the range of from 1:50 to 50:1 and in particular in the range of from 1:20 to 20:1. It may be preferable for the weight ratio to be in the region of from 1:10 to 10:1, preferably from 1:3 to 3:1, in particular from 1:2 to 2:1. The weight ratio of 1st further active compound (component II') to 2nd further active compound (component III) is preferably in the range of from 1:100 to 100:1, frequently in the range of from 1:50 to 50:1, preferably in the range of from 1:20 to 20:1, and in particular in the range of from 1:10 to 10:1. It may be preferable for the weight to be in the range of from 1:3 to 3:1, in particular from 1:2 to 2:1.

According to one embodiment, the present invention relates to three-component compositions, comprising component I, a component II' and a component III each independently selected from groups A'), B'), C), D), E'), F') and G) to K).

One specific embodiment relates to three-component compositions, wherein component I is as defined above and component II' is selected from group A') of the respiration inhibitors of complex III at $Q_o$ site and component III is selected from the group of B) of the sterol biosynthesis inhibitors (SBI fungicides). According to one specific embodiment thereof, component II' is selected from the group of strobilurins. Specifically, component II' is selected from the group consisting of azoxystrobin, dimoxystrobin, fluoxastrobin, kresoxim-methyl, orysastrobin, picoxystrobin, pyraclostrobin and trifloxystrobin. According to a further specific embodiment thereof, component III is selected from the group of the C14 demethylase inhibitors (DMI fungicides), in particular selected from cyproconazole, difenoconazole, epoxiconazole, fluquinconazole, flusilazole, flutriafol, metconazole, myclobutanil, penconazole, propiconazole, prothioconazole, triadimefon, triadimenol, tebuconazole, tetraconazole, triticonazole and prochloraz. According to a further specific embodiment, these are ternary compositions which, as active compounds, comprise in each case only the mentioned three active components I, II' and III.

A further specific embodiment relates to three-component compositions, wherein component I is as defined above and component II' and component III are selected from the respiration inhibitors of complex III at $Q_o$ site, wherein component II' and III are not the same. In particular, component II and III are selected from the group of the strobilurins. Specifically, component II' and III are selected from the group consisting of azoxystrobin, dimoxystrobin, fluoxastrobin, kresoxim-methyl, orysastrobin, picoxystrobin, pyraclostrobin and trifloxystrobin. According to a specific embodiment, these are ternary compositions which, as active compounds, comprise in each case only the mentioned three active components I, II' and III.

Still a further specific embodiment relates to three-component compositions, wherein component I is as defined above, component II' is selected from the sterol biosynthesis inhibitors (SBI fungicides) and component III is selected from the respiration inhibitors of complex II. According to one specific embodiment thereof, component II' is selected from is selected from the group of the C14 demethylase inhibitors (DMI fungicides), in particular selected from cyproconazole, difenoconazole, epoxiconazole, fluquinconazole, flusilazole, flutriafol, metconazole, myclobutanil, penconazole, propiconazole, prothioconazole, triadimefon, triadimenol, tebuconazole, tetraconazole, triticonazole and prochloraz. According to a further specific embodiment, component III is selected from the group of the carboxamides, in particular selected from benodanil, benzovindiflupyr, bixafen, boscalid, carboxin, fenfuram, fluopyram, flutolanil, fluxapyroxad, furametpyr, isopyrazam, mepronil, oxycarboxin, penflufen, penthiopyrad, sedaxane, tecloftalam, thifluzamide, N-(4'-trifluoromethylthiobiphenyl-2-yl)-3-difluoromethyl-1-methyl-1H-pyrazole-4-carboxamide, N-(2-(1,3,3-trimethylbutyl)-phenyl)-1,3-dimethyl-5-fluoro-1H-pyrazole-4-carboxamide, 3-(difluoromethyl)-1-methyl-N-(1,1,3-trimethyl-indan-4-yl)pyrazole-4-carboxamide, 3-(trifluoromethyl)-1-methyl-N-(1,1,3-trimethylindan-4-yl)-pyrazole-4-carboxamide, 1,3-dimethyl-N-(1,1,3-trimethylindan-4-yl)pyrazole-4-carboxamide, 3-(trifluoromethyl)-1,5-dimethyl-N-(1,1,3-trimethylindan-4-yl)pyrazole-4-carboxamide, 3-(difluoromethyl)-1,5-dimethyl-N-(1,1,3-trimethylindan-4-yl)pyrazole-4-carboxamide and 1,3,5-trimethyl-N-(1,1,3-trimethylindan-4-yl)pyrazole-4-carboxamide, in particular selected from benzovindiflupyr, bixafen, boscalid, fluopyram, fluxapyroxad, isopyrazam, penflufen, penthiopyrad and sedaxane. According to a further specific embodiment, these are ternary compositions which, as active compounds, comprise in each case only the mentioned three active components I, II' and III.

Still a further specific embodiment relates to three-component compositions, wherein component I is as defined above, component II' is selected the respiration inhibitors of complex III at $Q_o$ site and component III is selected from the respiration inhibitors of complex II. In particular, component II' is selected from the group of the strobilurins. Specifically, component II' is selected from the group consisting of azoxystrobin, dimoxystrobin, fluoxastrobin, kresoxim-methyl, orysastrobin, picoxystrobin, pyraclostrobin and trifloxystrobin. According to a further specific embodiment, component III is selected from the group of the carboxamides, in particular selected from benodanil, benzovindiflupyr, bixafen, boscalid, carboxin, fenfuram, fluopyram, flutolanil, fluxapyroxad, furametpyr, isopyrazam, mepronil, oxycarboxin, penflufen, penthiopyrad, sedaxane, tecloftalam, thifluzamide, N-(4'-trifluoromethylthiobiphenyl-2-yl)-3-difluoromethyl-1-methyl-1H-pyrazole-4-carboxamide, N-(2-(1,3,3-trimethyl-butyl)-phenyl)-1,3-dimethyl-5-fluoro-1 H-pyrazole-4-carboxamide, 3-(difluoromethyl)-1-methyl-N-(1,1,3-trimethyl-indan-4-yl)pyrazole-4-carboxamide, 3-(trifluoromethyl)-1-methyl-N-(1,1,3-trimethylindan-4-yl)-pyrazole-4-carboxamide, 1,3-dimethyl-N-(1,1,3-trimethylindan-4-yl)pyrazole-4-carboxamide, 3-(trifluoromethyl)-1,5-dimethyl-N-(1,1,3-trimethylindan-4-yl)pyrazole-4-carboxamide, 3-(difluoro-methyl)-1,5-dimethyl-N-(1,1,3-trimethylindan-4-yl)pyrazole-4-carboxamide and 1,3,5-trimethyl-N-(1,1,3-trimethylindan-4-yl)pyrazole-4-carboxamide, in particular selected from benzovindiflupyr, bixafen, boscalid, fluopyram, fluxapyroxad, isopyrazam, penflufen, penthiopyrad and sedaxane. According to a further specific embodiment, these are ternary compositions which, as active compounds, comprise in each case only the mentioned three active components I, II' and III.

Still a further specific embodiment relates to three-component compositions, wherein component I is as defined above, component II' is selected the respiration inhibitors of complex III at $Q_o$ site and component III is selected from the Sterol biosynthesis inhibitors (SBI fungicides), in particular Delta14-reductase inhibitors. In a specific embodiment, component II' is selected from the group of the strobilurins. Specifically, component II' is selected from the group consisting of azoxystrobin, dimoxystrobin, fluoxastrobin, kresoxim-methyl, orysastrobin, picoxystrobin, pyraclostrobin and trifloxystrobin. In a further specific embodiment, component III is fenpropimorph. According to a further specific embodiment, these are ternary compositions which, as active compounds, comprise in each case only the mentioned three active components I, II' and III.

Still a further specific embodiment relates to three-component compositions, wherein component I is as defined above, component II' is selected from the respiration inhibitors of complex III at $Q_o$ site and component III is selected from the Inhibitors of cell division and cytoskeleton. In a specific embodiment, component II' is selected from the group of the strobilurins. Specifically, component II' is selected from the group consisting of azoxystrobin, dimoxystrobin, fluoxastrobin, kresoxim-methyl, orysastrobin, picoxystrobin, pyraclostrobin and trifloxystrobin. In a further specific embodiment, component III is selected from tubulin inhibitors such as carbendazim. In a further specific embodiment, component III is selected from sell division inhibitors such as tubulin inhibitors such as metrafenone. According to a further specific embodiment, these are ternary compositions which, as active compounds, comprise in each case only the mentioned three active components I, II' and III.

Still a further specific embodiment relates to three-component compositions, wherein component I is as defined above, component II' is selected the respiration inhibitors of complex III at $Q_o$ site and component III is selected from the Inhibitors with Multi Site Action. In a specific embodiment, component II' is selected from the group of the strobilurins. Specifically, component II' is selected from the group consisting of azoxystrobin, dimoxystrobin, fluoxastrobin, kresoxim-methyl, orysastrobin, picoxystrobin, pyraclostrobin and trifloxystrobin. In a further specific embodiment, component III is chlorothalonil. According to a further specific embodiment, these are ternary compositions which, as active compounds, comprise in each case only the mentioned three active components I, II' and III.

According to one embodiment, the present invention relates to three-component compositions, comprising component I, a component II' selected from groups groups A'), B'), C), D), E'), F') and G) to K), and a component III selected from groups A'), B'), C), D), E'), F') and G) to K).

According to a particular embodiment of the inventive three-component compositions comprising three fungicides, the composition comprises compound I, fluxapyroxad as component I and pyraclostrobin or fenpropimorph as component III. In a further specific embodiment of the present invention, the inventive three-component compositions comprise compound I, prothioconazole as component II' and fluxapyroxad, bixafen, pyraclostrobin, dimoxystrobin, picoxystrobin, fluoxastrobin, fluopyram or penflufen as component III. In said three-component compositions the weight ratio of component I to component II' is 1:20 to 20:1. It may be preferable for the weight ratio to be in the region of from 1:10 to 10:1, preferably from 1:3 to 3:1, in particular from 1:2 to 2:1. The weight ratio of component I to the component III is in the range of from 1:20 to 20:1. It may be preferable for the weight ratio to be in the region of from 1:10 to 10:1, preferably from 1:3 to 3:1, in particular from 1:2 to 2:1. The weight ratio of component I component III is in the range of from 1:20 to 20:1, and in particular in the range of from 1:10 to 10:1. It may be preferable for the weight to be in the range of from 1:3 to 3:1, in particular from 1:2 to 2:1. Said three-component compositions comprising three fungicides as components I, II' and III are in particular suitable as fungicides as detailled below.

According to another embodiment the present invention relates to the use of said compositions for the control of cereal pathogens, wherein the components are used in the above mentioned weight ratios. According to one specific embodiment, said compositions are used for controlling wheat pathogens, wherein the wheat pathogens are in particular selected from Septoria tritici, Stagonospora nodorum, Pyrenophora tritici repentis, Puccinia recondita, Puccinia striiformis and Blumeria graminis. Furthermore, said compositions are useful for the control of the wheat pathogens selected from Fusarium culmorum, Fusarium graminearum and Pseudocercosporella herpotrichoides. According to another specific embodiment, said compositions are used for controlling barley pathogens, selected from Pyrenophera teres, Rhychosporium secalis, Puccinia hordei and Blumeria graminis. Furthermore, said compositions are suitable for the control of barley pathogens selected from Ramularia collo-cygni and Pseudocercosporella herpotrichoides.

According to still another specific embodiment, said compositions are used for controlling soy pathogens, in

particular selected from phakopsora pachyrizi, P. meibomiae and Microsphaera diffusa. In soy, said compositions may also be effectively used for the control of the so-called FDC (Foliar Disease Complex), e.g. against Septoria glycines, Cercospora kikuchii, C. sojina, Corynespora cassiicola and/or Alternaria spp..

According to still another specific embodiment, said compositions are used for controlling corn pathogens, in particular selected from Cercospora zeae-maydis, Puccinia sorghi and Helminthosporium maydis.

According to still another specific embodiment, said compositions are used for controlling sugar beet pathogens, in particular selected from Cercospora beticola, Erysiphe betae, Ramularia betae and Uromyces betae.

According to still another specific embodiment, said compositions are used for the control of peanut pathogens, in particular selected from Mycosphaerella arachidis (= Cercospora) and Puccinia arachidis.

According to still another specific embodiment, said compositions are used for the control of oil seed rape and canola pathogens, in particular selected from Sclerotinia sclerotiorum, Leptosphearia maculans and Alternaria alternate.

According to still another specific embodiment, said compositions are used for the control of rice pathogens, in particular selected from Rhizoctonia solani and Pyricularia oryzae.

According to still another specific embodiment, said compositions are used for the control of pathogens in speciality crops, such as for example in turf, potato, tomato, cucurbits, grapes, apples, ornamentals and bananas. Turf pathogens that may be controlled using said compositions according to the present invention are in particular selected from Sclerotinia homeocarpon and Rhizoctonia solani. Potato and tomato pathogens that may be controlled according to the present invention are in particular selected from Alternaria solani, A. alternata and Rhizoctonia solani. A cucurbit pathogen that may be controlled using said compositions according to the present invention is in particular Sphaerotheca fuliginea. A grape pathogen that may be controlled using said compositions according to the present invention is in particular Uncinula necator and Botrytis cinerea. An apple pathogen that may be controlled using said compositions according to the present invention is in particular Podosphaera leucotricha and Venturia inaequalis . Ornamental pathogens that may be controlled using said compositions according to the present invention are in particular selected from Sphaerotheca fuliginea, Diplocarpon spp., Alternaria spp. and Sclerotinia spp. Banana pathogens that may be controlled using said compositions according to the present invention are in particular selected from Mycosphaerella fijiensis and Mycosphaerella musicola.

According to one embodiment thereof, the present invention relates to the composition of component I, fluxapyroxad and pyraclostrobin, wherein two of the components are present in a weight ratio of 20:1 to 1:20, more specifically 5:1 to 1:5, in particular 2:1 to 1:2. In particular, the weight ratios for the three components are component I to component II' 1:1 to 2:1; component I to component III 1:1 to 2:1 and component II' to component III 1:1 to 1:2. It may be preferred if the components are present in a weight ratio of 1:1:1 to 2:1:2 or 2:1:2 to 2:1:1. The components are in particular used in synergistically effective amounts.

According to another embodiment, the present invention relates to the composition comprising component I, fluxapyroxad and fenpropimorph, wherein two of the components are present in a weight ratio of 20:1 to 1:20, more specifically 5:1 to 1:5, in particular 2:1 to 1:2. In particular, the weight ratios for the three components are component I to component II' 1:1 to 2:1; component I to component III 1:3 to 1:6 and component II' to component III 1:3 to 1:6. It may be preferred if the components are present in a weight ratio of 1:1:3 to 1:1:6. The components are in particular used in synergistically effective amounts.

A further embodiment of the invention relates to three-component compositions, comprising component I, and components II' and III, wherein at least one of components II' and III selected from Group M), the growth regulators, in particular selected from chlormequat (chlormequat chloride), mepiquat (mepiquat chloride), paclobutrazole, prohexadione (prohexadione-calcium), trinexapac-ethyl and uniconazole. According to one specific embodiment thereof, components II' is selected from groups A'), B'), C), D), E'), F') and G) to K), or any of the preferred embodiment thereof given herein, and component III is selected from Group M), the growth regulators, in particular selected from chlormequat (chlormequat chloride), mepiquat (mepiquat chloride), paclobutrazole, prohexadione (prohexadione-calcium), trinexapac-ethyl and uniconazole. According to another specific embodiment thereof, both components II' and III are selected from Group M), the growth regulators, in particular selected from chlormequat (chlormequat chloride), mepiquat (mepiquat chloride), paclobutrazole, prohexadione (prohexadione-calcium), trinexapac-ethyl and uniconazole.

A further embodiment of the invention relates to three-component compositions, comprising component I, component II' selected from any one of groups A'), B'), C), D), E'), F') and G) to K), or any preferred embodiment thereof, and component III selected from the insecticides of group O).

According to one more specific embodiment, component I is as defined above, component II' is selected from the respiration inhibitors of complex III at $Q_o$, in particular selected from the group of the strobilurins, and component III is an insecticide, in particular one of the insecticides as defined below. Specifically, component II' is selected from the group consisting of azoxystrobin, dimoxystrobin, fluoxastrobin, kresoxim-methyl, orysastrobin, picoxystrobin, pyraclostrobin and trifloxystrobin.

Still a further specific embodiment relates to three-component compositions, wherein component I is as defined above, component II' is selected from the sterol biosynthesis inhibitors (SBI fungicides) and component III is an insecticide,

in particular one of the insecticides as defined below. Specifically, component II' is selected from the group of the C14 demethylase inhibitors (DMI fungicides), in particular selected from cyproconazole, difenoconazole, epoxiconazole, fluquinconazole, flusilazole, flutriafol, metconazole, myclobutanil, penconazole, propiconazole, prothioconazole, triadimefon, triadimenol, tebuconazole, tetraconazole, triticonazole and prochloraz.

A further embodiment of the invention relates to three-component compositions, comprising component I, and components II' and III that are selected from the insecticides of group O).

In the three-component compositions of the inventions comprising an insecticide, the insecticide is, according to one embodiment, selected from the group of the organo(thio)phosphates, in particular selected from the group consisting of acephate, chlorpyrifos, diazinon, dichlorvos, dimethoate, fenitrothion, methamidophos, methidathion, methyl-parathion, monocrotophos, phorate, profenofos and terbufos. According to a further specific embodiment, the insecticide in the three-component compositions is selected from the group of the carbamates, in particular selected from the group consisting of aldicarb, carbaryl, carbofuran, carbosulfan, methomyl and thiodicarb. According to a further specific embodiment, the insecticide in the three-component compositions is selected from the group of the pyrethroids, in particular selected from the group consisting of: bifenthrin, cyfluthrin, cypermethrin, alpha-cypermethrin, zeta-cypermethrin, deltamethrin, esfenvalerate, lambda-cyhalothrin and tefluthrin. According to still a further specific embodiment, the insecticide in the three-component compositions is selected from the group of insect growth regulators, in particular selected from the group consisting of lufenuron and spirotetramat. According to still a further specific embodiment, the insecticide in the three-component compositions is selected from the group of the nicotine receptor agonists/antagonists, in particular selected from the group consisting of: clothianidin, imidacloprid, thiamethoxam and thiacloprid. According to a further specific embodiment, the insecticide in the three-component compositions is selected from the group of the GABA antagonists, in particular selected from the group consisting of: endosulfan and fipronil. According to a further specific embodiment, the insecticide in the three-component compositions is selected from the group of the macrocyclic lactones, in particular selected from the group consisting of: abamectin, emamectin, spinosad and spinetoram. According to a further specific embodiment, the insecticide in the three-component compositions is hydramethylnon. According to a further specific embodiment, the insecticide in the three-component compositions is fenbutatin oxide. According to a further specific embodiment, the insecticide in the three-component compositions is selected from the group consisting of chlorfenapyr, indoxacarb, metaflumizone, flonicamid, flubendiamide, cyazypyr (HGW86) and cyflumetofen.

Particularly preferred fungicidal components III used in the inventive compositions, are compounds selected from the group of the following compounds:

| | | | |
|---|---|---|---|
| II-1 | ametoctradin | II-33 | fluazinam |
| II-2 | amisulbrom | II-34 | fludioxonil |
| II-3 | azoxystrobin | II-35 | fluopicolide |
| II-4 | benthiavalicarb | II-36 | fluopyram |
| II-5 | benzovindiflupyr | II-37 | fluoxastrobin |
| II-6 | bixafen | II-38 | fluquinconazole |
| II-7 | boscalid | II-39 | flusilazole |
| II-8 | carbendazim | II-42 | fluxapyroxad |
| II-11 | chlorothalonil | II-43 | folpet |
| II-12 | cyazofamid | II-50 | fosetyl-Al |
| II-13 | cyflufenamid | II-51 | isopyrazam |
| II-15 | cyproconazole | II-51 | iprovalicarb |
| II-16 | cyprodinil | II-53 | kresoxim-methyl |
| II-21 | difenoconazole | II-54 | kresoxim-methylmancozeb |
| II-23 | dimoxystrobin | II-60 | metconazole |
| II-25 | dithianon | II-61 | metiram |
| II-26 | epoxiconazole | II-62 | metrafenone |
| II-27 | ethaboxam | II-65 | proquinazid |
| II-31 | fenpropidin | II-66 | pyraclostrobin |
| II-32 | fenpropimorph | II-68 | penflufen |
| II-69 | phosporous acid | II-83 | silthiofam |
| II-70 | potassium salt of phosphorous acid | II-84 | spiroxamine |
| | | II-85 | sulfur |
| II-71 | sodium salt of phosphorous acid | II-86 | tebuconazole |
| II-72 | penthiopyrad | II-89 | thiophanate-methyl |

(continued)

| | | | |
|---|---|---|---|
| II-73 | picoxystrobin | II-92 | trifloxystrobin |
| II-74 | prochloraz | II-93 | triticonazole |
| II-76 | propiconazole | II-97 | zoxamide |
| II-78 | prothioconazole | | |

Also particularly preferred fungicidal components III are compounds selected from the group of the following compounds:

| | | | |
|---|---|---|---|
| II-3 | azoxystrobin | II-60 | metconazole |
| II-5 | benzovindiflupyr | II-62 | metrafenone |
| II-6 | bixafen | II-66 | pyraclostrobin |
| II-7 | boscalid | II-69 | phosporous acid |
| II-8 | carbendazim | II-70 | potassium salt of phosphorous acid |
| II-11 | chlorothalonil | | |
| II-16 | cyprodinil | II-71 | sodium salt of phosphorous acid |
| II-21 | difenoconazole | | |
| II-26 | epoxiconazole | II-72 | penthiopyrad |
| II-32 | fenpropimorph | II-74 | prochloraz |
| II-33 | fluazinam | II-76 | propiconazole |
| II-37 | fluoxastrobin | II-78 | prothioconazole |
| II-39 | flusilazole | II-84 | spiroxamine |
| II-42 | fluxapyroxad | II-85 | sulfur |
| II-44 | fosetyl-Al | II-86 | tebuconazole |
| II-50 | isopyrazam | II-92 | trifloxystrobin |
| II-53 | kresoxim-methyl | | |

Particularly preferred compositions are the three-component compositions, wherein component I is as defined above, and components II' and III are selected from

| | | | |
|---|---|---|---|
| II-3 | azoxystrobin | II-33 | fluazinam |
| II-5 | benzovindiflupyr | II-37 | fluoxastrobin |
| II-6 | bixafen | II-39 | flusilazole |
| II-7 | boscalid | II-42 | fluxapyroxad |
| II-8 | carbendazim | II-44 | fosetyl-Al |
| II-11 | chlorothalonil | II-50 | isopyrazam |
| II-16 | cyprodinil | II-53 | kresoxim-methyl |
| II-21 | difenoconazole | II-60 | metconazole |
| II-26 | epoxiconazole | II-62 | metrafenone |
| II-32 | fenpropimorph | II-66 | pyraclostrobin |
| II-69 | phosporous acid | II-76 | propiconazole |
| II-70 | potassium salt of phosphorous acid | II-78 | prothioconazole |
| | | II-84 | spiroxamine |
| II-71 | sodium salt of phosphorous acid | II-85 | sulfur |
| | | II-86 | tebuconazole |
| II-72 | penthiopyrad | II-92 | trifloxystrobin |
| II-74 | prochloraz | | |

wherein components II' and III are different from each other. Particularly preferred compositions of these compositions are compiled in Table T1, where each row corresponds to one embodiment of the compositions according to the invention, i.e. one specific individualized three-component composition. According to one specific aspect, these are ternary compositions which each only contain these three components as the active compound. Furthermore, also every combination

of the compositions individualized in this table represent embodiments of the present invention.

Table T1: Three-component compositions comprising component I, a component II' a component III, wherein component II' and III are selected from the preferred fungicides detailled above, wherein components II' and III are different from each other.

| composition | I | II' | III |
|---|---|---|---|
| T1-1 | I | II-3 | II-5 |
| T1-2 | I | II-3 | II-6 |
| T1-3 | I | II-3 | II-7 |
| T1-4 | I | II-3 | II-8 |
| T1-5 | I | II-3 | II-11 |
| T1-6 | I | II-3 | II-16 |
| T1-7 | I | II-3 | II-21 |
| T1-8 | I | II-3 | II-26 |
| T1-9 | I | II-3 | II-32 |
| T1-10 | I | II-3 | II-33 |
| T1-11 | I | II-3 | II-37 |
| T1-12 | I | II-3 | II-39 |
| T1-13 | I | II-3 | II-42 |
| T1-14 | I | II-3 | II-44 |
| T1-15 | I | II-3 | II-50 |
| T1-16 | I | II-3 | II-53 |
| T1-17 | I | II-3 | II-60 |
| T1-18 | I | II-3 | II-62 |
| T1-19 | I | II-3 | II-66 |
| T1-20 | I | II-3 | II-69 |
| T1-21 | I | II-3 | II-70 |
| T1-22 | I | II-3 | II-71 |

| composition | I | II' | III |
|---|---|---|---|
| T1-23 | I | II-3 | II-72 |
| T1-24 | I | II-3 | II-74 |
| T1-25 | I | II-3 | II-76 |
| T1-26 | I | II-3 | II-78 |
| T1-27 | I | II-3 | II-84 |
| T1-28 | I | II-3 | II-85 |
| T1-29 | I | II-3 | II-86 |
| T1-30 | I | II-3 | II-92 |
| T1-31 | I | II-5 | II-6 |
| T1-32 | I | II-5 | II-7 |
| T1-33 | I | II-5 | II-8 |
| T1-34 | I | II-5 | II-11 |
| T1-35 | I | II-5 | II-16 |
| T1-36 | I | II-5 | II-21 |
| T1-37 | I | II-5 | II-26 |
| T1-38 | I | II-5 | II-32 |
| T1-39 | I | II-5 | II-33 |
| T1-40 | I | II-5 | II-37 |
| T1-41 | I | II-5 | II-39 |
| T1-42 | I | II-5 | II-42 |
| T1-43 | I | II-5 | II-44 |
| T1-44 | I | II-5 | II-50 |

| composition | I | II' | III |
|---|---|---|---|
| T1-125 | I | II-8 | II-50 |
| T1-126 | I | II-8 | II-53 |
| T1-127 | I | II-8 | II-60 |
| T1-128 | I | II-8 | II-62 |
| T1-129 | I | II-8 | II-66 |
| T1-130 | I | II-8 | II-69 |
| T1-131 | I | II-8 | II-70 |
| T1-132 | I | II-8 | II-71 |
| T1-133 | I | II-8 | II-72 |
| T1-134 | I | II-8 | II-74 |
| T1-135 | I | II-8 | II-76 |
| T1-136 | I | II-8 | II-78 |
| T1-137 | I | II-8 | II-84 |
| T1-138 | I | II-8 | II-85 |
| T1-139 | I | II-8 | II-86 |
| T1-140 | I | II-8 | II-92 |
| T1-141 | I | II-11 | II-16 |
| T1-142 | I | II-11 | II-21 |
| T1-143 | I | II-11 | II-26 |
| T1-144 | I | II-11 | II-32 |
| T1-145 | I | II-11 | II-33 |
| T1-146 | I | II-11 | II-37 |
| T1-147 | I | II-11 | II-39 |
| T1-148 | I | II-11 | II-42 |
| T1-149 | I | II-11 | II-44 |
| T1-150 | I | II-11 | II-50 |
| T1-151 | I | II-11 | II-53 |
| T1-152 | I | II-11 | II-60 |
| T1-153 | I | II-11 | II-62 |
| T1-154 | I | II-11 | II-66 |
| T1-155 | I | II-11 | II-69 |
| T1-156 | I | II-11 | II-70 |
| T1-157 | I | II-11 | II-71 |
| T1-158 | I | II-11 | II-72 |
| T1-159 | I | II-11 | II-74 |
| T1-160 | I | II-11 | II-76 |
| T1-161 | I | II-11 | II-78 |
| T1-162 | I | II-11 | II-84 |
| T1-163 | I | II-11 | II-85 |
| T1-164 | I | II-11 | II-86 |

| composition | I | II' | III |
|---|---|---|---|
| T1-165 | I | II-11 | II-92 |
| T1-166 | I | II-16 | II-21 |
| T1-167 | I | II-16 | II-26 |
| T1-168 | I | II-16 | II-32 |
| T1-169 | I | II-16 | II-33 |
| T1-170 | I | II-16 | II-37 |
| T1-171 | I | II-16 | II-39 |
| T1-172 | I | II-16 | II-42 |
| T1-173 | I | II-16 | II-44 |
| T1-174 | I | II-16 | II-50 |
| T1-175 | I | II-16 | II-53 |
| T1-176 | I | II-16 | II-60 |
| T1-177 | I | II-16 | II-62 |
| T1-178 | I | II-16 | II-66 |
| T1-179 | I | II-16 | II-69 |
| T1-180 | I | II-16 | II-70 |
| T1-181 | I | II-16 | II-71 |
| T1-182 | I | II-16 | II-72 |
| T1-183 | I | II-16 | II-74 |
| T1-184 | I | II-16 | II-76 |
| T1-185 | I | II-16 | II-78 |
| T1-186 | I | II-16 | II-84 |
| T1-187 | I | II-16 | II-85 |
| T1-188 | I | II-16 | II-86 |
| T1-189 | I | II-16 | II-92 |
| T1-190 | I | II-21 | II-26 |
| T1-191 | I | II-21 | II-32 |
| T1-192 | I | II-21 | II-33 |
| T1-193 | I | II-21 | II-37 |
| T1-194 | I | II-21 | II-39 |
| T1-195 | I | II-21 | II-42 |
| T1-196 | I | II-21 | II-44 |
| T1-197 | I | II-21 | II-50 |
| T1-198 | I | II-21 | II-53 |
| T1-199 | I | II-21 | II-60 |
| T1-200 | I | II-21 | II-62 |
| T1-201 | I | II-21 | II-66 |
| T1-202 | I | II-21 | II-69 |
| T1-203 | I | II-21 | II-70 |
| T1-204 | I | II-21 | II-71 |

| composition | I | II' | III |
|---|---|---|---|
| T1-205 | I | II-21 | II-72 |
| T1-206 | I | II-21 | II-74 |
| T1-207 | I | II-21 | II-76 |
| T1-208 | I | II-21 | II-78 |
| T1-209 | I | II-21 | II-84 |
| T1-210 | I | II-21 | II-85 |
| T1-211 | I | II-21 | II-86 |
| T1-212 | I | II-21 | II-92 |
| T1-213 | I | II-26 | II-32 |
| T1-214 | I | II-26 | II-33 |
| T1-215 | I | II-26 | II-37 |
| T1-216 | I | II-26 | II-39 |
| T1-217 | I | II-26 | II-42 |
| T1-218 | I | II-26 | II-44 |
| T1-219 | I | II-26 | II-50 |
| T1-220 | I | II-26 | II-53 |
| T1-221 | I | II-26 | II-60 |
| T1-222 | I | II-26 | II-62 |
| T1-223 | I | II-26 | II-66 |
| T1-224 | I | II-26 | II-69 |
| T1-225 | I | II-26 | II-70 |
| T1-226 | I | II-26 | II-71 |
| T1-227 | I | II-26 | II-72 |
| T1-228 | I | II-26 | II-74 |
| T1-229 | I | II-26 | II-76 |
| T1-230 | I | II-26 | II-78 |
| T1-231 | I | II-26 | II-84 |
| T1-232 | I | II-26 | II-85 |
| T1-233 | I | II-26 | II-86 |
| T1-234 | I | II-26 | II-92 |
| T1-235 | I | II-32 | II-33 |
| T1-236 | I | II-32 | II-37 |
| T1-237 | I | II-32 | II-39 |
| T1-238 | I | II-32 | II-42 |
| T1-239 | I | II-32 | II-44 |
| T1-240 | I | II-32 | II-50 |
| T1-241 | I | II-32 | II-53 |
| T1-242 | I | II-32 | II-60 |
| T1-243 | I | II-32 | II-62 |
| T1-244 | I | II-32 | II-66 |

| composition | I | II' | III |
|---|---|---|---|
| T1-245 | I | II-32 | II-69 |
| T1-246 | I | II-32 | II-70 |
| T1-247 | I | II-32 | II-71 |
| T1-248 | I | II-32 | II-72 |
| T1-249 | I | II-32 | II-74 |
| T1-250 | I | II-32 | II-76 |
| T1-251 | I | II-32 | II-78 |
| T1-252 | I | II-32 | II-84 |
| T1-253 | I | II-32 | II-85 |
| T1-254 | I | II-32 | II-86 |
| T1-255 | I | II-32 | II-92 |
| T1-256 | I | II-33 | II-37 |
| T1-257 | I | II-33 | II-39 |
| T1-258 | I | II-33 | II-42 |
| T1-259 | I | II-33 | II-44 |
| T1-260 | I | II-33 | II-50 |
| T1-261 | I | II-33 | II-53 |
| T1-262 | I | II-33 | II-60 |
| T1-263 | I | II-33 | II-62 |
| T1-264 | I | II-33 | II-66 |
| T1-265 | I | II-33 | II-69 |
| T1-266 | I | II-33 | II-70 |
| T1-267 | I | II-33 | II-71 |
| T1-268 | I | II-33 | II-72 |
| T1-269 | I | II-33 | II-74 |
| T1-270 | I | II-33 | II-76 |
| T1-271 | I | II-33 | II-78 |
| T1-272 | I | II-33 | II-84 |
| T1-273 | I | II-33 | II-85 |
| T1-274 | I | II-33 | II-86 |
| T1-275 | I | II-33 | II-92 |
| T1-276 | I | II-37 | II-39 |
| T1-277 | I | II-37 | II-42 |
| T1-278 | I | II-37 | II-44 |
| T1-279 | I | II-37 | II-50 |
| T1-280 | I | II-37 | II-53 |
| T1-281 | I | II-37 | II-60 |
| T1-282 | I | II-37 | II-62 |
| T1-283 | I | II-37 | II-66 |
| T1-284 | I | II-37 | II-69 |

| composition | I | II' | III |
|---|---|---|---|
| T1-285 | I | II-37 | II-70 |
| T1-286 | I | II-37 | II-71 |
| T1-287 | I | II-37 | II-72 |
| T1-288 | I | II-37 | II-74 |
| T1-289 | I | II-37 | II-76 |
| T1-290 | I | II-37 | II-78 |
| T1-291 | I | II-37 | II-84 |
| T1-292 | I | II-37 | II-85 |
| T1-293 | I | II-37 | II-86 |
| T1-294 | I | II-37 | II-92 |
| T1-295 | I | II-39 | II-42 |
| T1-296 | I | II-39 | II-44 |
| T1-297 | I | II-39 | II-50 |
| T1-298 | I | II-39 | II-53 |
| T1-299 | I | II-39 | II-60 |
| T1-300 | I | II-39 | II-62 |
| T1-301 | I | II-39 | II-66 |
| T1-302 | I | II-39 | II-69 |
| T1-303 | I | II-39 | II-70 |
| T1-304 | I | II-39 | II-71 |
| T1-305 | I | II-39 | II-72 |
| T1-306 | I | II-39 | II-74 |
| T1-307 | I | II-39 | II-76 |
| T1-308 | I | II-39 | II-78 |
| T1-309 | I | II-39 | II-84 |
| T1-310 | I | II-39 | II-85 |
| T1-311 | I | II-39 | II-86 |
| T1-312 | I | II-39 | II-92 |
| T1-313 | I | II-42 | II-44 |
| T1-314 | I | II-42 | II-50 |
| T1-315 | I | II-42 | II-53 |
| T1-316 | I | II-42 | II-60 |
| T1-317 | I | II-42 | II-62 |
| T1-318 | I | II-42 | II-66 |
| T1-319 | I | II-42 | II-69 |
| T1-320 | I | II-42 | II-70 |
| T1-321 | I | II-42 | II-71 |
| T1-322 | I | II-42 | II-72 |
| T1-323 | I | II-42 | II-74 |
| T1-324 | I | II-42 | II-76 |

| composition | I | II' | III |
|---|---|---|---|
| T1-325 | I | II-42 | II-78 |
| T1-326 | I | II-42 | II-84 |
| T1-327 | I | II-42 | II-85 |
| T1-328 | I | II-42 | II-86 |
| T1-329 | I | II-42 | II-92 |
| T1-330 | I | II-44 | II-50 |
| T1-331 | I | II-44 | II-53 |
| T1-332 | I | II-44 | II-60 |
| T1-333 | I | II-44 | II-62 |
| T1-334 | I | II-44 | II-66 |
| T1-335 | I | II-44 | II-69 |
| T1-336 | I | II-44 | II-70 |
| T1-337 | I | II-44 | II-71 |
| T1-338 | I | II-44 | II-72 |
| T1-339 | I | II-44 | II-74 |
| T1-340 | I | II-44 | II-76 |
| T1-341 | I | II-44 | II-78 |
| T1-342 | I | II-44 | II-84 |
| T1-343 | I | II-44 | II-85 |
| T1-344 | I | II-44 | II-86 |
| T1-345 | I | II-44 | II-92 |
| T1-346 | I | II-50 | II-53 |
| T1-347 | I | II-50 | II-60 |
| T1-348 | I | II-50 | II-62 |
| T1-349 | I | II-50 | II-66 |
| T1-350 | I | II-50 | II-69 |
| T1-351 | I | II-50 | II-70 |
| T1-352 | I | II-50 | II-71 |
| T1-353 | I | II-50 | II-72 |
| T1-354 | I | II-50 | II-74 |
| T1-355 | I | II-50 | II-76 |
| T1-356 | I | II-50 | II-78 |
| T1-357 | I | II-50 | II-84 |
| T1-358 | I | II-50 | II-85 |
| T1-359 | I | II-50 | II-86 |
| T1-360 | I | II-50 | II-92 |
| T1-361 | I | II-53 | II-60 |
| T1-362 | I | II-53 | II-62 |
| T1-363 | I | II-53 | II-66 |
| T1-364 | I | II-53 | II-69 |

| composition | I | II' | III |
|---|---|---|---|
| T1-365 | I | II-53 | II-70 |
| T1-366 | I | II-53 | II-71 |
| T1-367 | I | II-53 | II-72 |
| T1-368 | I | II-53 | II-74 |
| T1-369 | I | II-53 | II-76 |
| T1-370 | I | II-53 | II-78 |
| T1-371 | I | II-53 | II-84 |
| T1-372 | I | II-53 | II-85 |
| T1-373 | I | II-53 | II-86 |
| T1-374 | I | II-53 | II-92 |
| T1-375 | I | II-60 | II-62 |
| T1-376 | I | II-60 | II-66 |
| T1-377 | I | II-60 | II-69 |
| T1-378 | I | II-60 | II-70 |
| T1-379 | I | II-60 | II-71 |
| T1-380 | I | II-60 | II-72 |
| T1-381 | I | II-60 | II-74 |
| T1-382 | I | II-60 | II-76 |
| T1-383 | I | II-60 | II-78 |
| T1-384 | I | II-60 | II-84 |
| T1-385 | I | II-60 | II-85 |
| T1-386 | I | II-60 | II-86 |
| T1-387 | I | II-60 | II-92 |
| T1-388 | I | II-62 | II-66 |
| T1-389 | I | II-62 | II-69 |
| T1-390 | I | II-62 | II-70 |
| T1-391 | I | II-62 | II-71 |
| T1-392 | I | II-62 | II-72 |
| T1-393 | I | II-62 | II-74 |
| T1-394 | I | II-62 | II-76 |
| T1-395 | I | II-62 | II-78 |
| T1-396 | I | II-62 | II-84 |
| T1-397 | I | II-62 | II-85 |
| T1-398 | I | II-62 | II-86 |
| T1-399 | I | II-62 | II-92 |
| T1-400 | I | II-66 | II-69 |
| T1-401 | I | II-66 | II-70 |
| T1-402 | I | II-66 | II-71 |
| T1-403 | I | II-66 | II-72 |
| T1-404 | I | II-66 | II-74 |

| composition | I | II' | III |
|---|---|---|---|
| T1-405 | I | II-66 | II-76 |
| T1-406 | I | II-66 | II-78 |
| T1-407 | I | II-66 | II-84 |
| T1-408 | I | II-66 | II-85 |
| T1-409 | I | II-66 | II-86 |
| T1-410 | I | II-66 | II-92 |
| T1-411 | I | II-69 | II-70 |
| T1-412 | I | II-69 | II-71 |
| T1-413 | I | II-69 | II-72 |
| T1-414 | I | II-69 | II-74 |
| T1-415 | I | II-69 | II-76 |
| T1-416 | I | II-69 | II-78 |
| T1-417 | I | II-69 | II-84 |
| T1-418 | I | II-69 | II-85 |
| T1-419 | I | II-69 | II-86 |
| T1-420 | I | II-69 | II-92 |
| T1-421 | I | II-70 | II-71 |
| T1-422 | I | II-70 | II-72 |
| T1-423 | I | II-70 | II-74 |
| T1-424 | I | II-70 | II-76 |
| T1-425 | I | II-70 | II-78 |
| T1-426 | I | II-70 | II-84 |
| T1-427 | I | II-70 | II-85 |
| T1-428 | I | II-70 | II-86 |
| T1-429 | I | II-70 | II-92 |
| T1-430 | I | II-71 | II-72 |
| T1-431 | I | II-71 | II-74 |
| T1-432 | I | II-71 | II-76 |
| T1-433 | I | II-71 | II-78 |
| T1-434 | I | II-71 | II-84 |
| T1-435 | I | II-71 | II-85 |
| T1-436 | I | II-71 | II-86 |
| T1-437 | I | II-71 | II-92 |
| T1-438 | I | II-72 | II-74 |
| T1-439 | I | II-74 | II-76 |
| T1-440 | I | II-74 | II-78 |
| T1-441 | I | II-74 | II-84 |
| T1-442 | I | II-74 | II-85 |
| T1-443 | I | II-74 | II-86 |
| T1-444 | I | II-74 | II-92 |

| composition | I | II' | III |
|---|---|---|---|
| T1-445 | I | II-76 | II-78 |
| T1-446 | I | II-76 | II-84 |
| T1-447 | I | II-76 | II-85 |
| T1-448 | I | II-76 | II-86 |
| T1-449 | I | II-76 | II-92 |
| T1-450 | I | II-78 | II-84 |
| T1-451 | I | II-78 | II-85 |
| T1-452 | I | II-78 | II-86 |
| T1-453 | I | II-78 | II-92 |

| composition | I | II' | III |
|---|---|---|---|
| T1-454 | I | II-84 | II-85 |
| T1-455 | I | II-84 | II-86 |
| T1-456 | I | II-84 | II-92 |
| T1-457 | I | II-85 | II-86 |
| T1-458 | I | II-85 | II-92 |
| T1-459 | I | II-86 | II-92 |

Particularly preferred compositions are the three-component compositions, wherein component I is as defined above, component II' is selected from

| | | | |
|---|---|---|---|
| II-3 | azoxystrobin | II-53 | kresoxim-methyl |
| II-5 | benzovindiflupyr | II-60 | metconazole |
| II-6 | bixafen | II-62 | metrafenone |
| II-7 | boscalid | II-66 | pyraclostrobin |
| II-8 | carbendazim | II-69 | phosporous acid |
| II-11 | chlorothalonil | II-70 | potassium salt of phosphorous acid |
| II-16 | cyprodinil | | |
| II-21 | difenoconazole | II-71 | sodium salt of phosphorous acid |
| II-26 | epoxiconazole | II-72 | penthiopyrad |
| II-32 | fenpropimorph | II-74 | prochloraz |
| II-33 | fluazinam | II-76 | propiconazole |
| II-37 | fluoxastrobin | II-78 | prothioconazole |
| II-39 | flusilazole | II-84 | spiroxamine |
| II-42 | fluxapyroxad | II-85 | sulfur |
| II-44 | fosetyl-Al | II-86 | tebuconazole |
| II-50 | isopyrazam | II-92 | trifloxystrobin |

and component III is a growth regulator, selected from:

| | |
|---|---|
| II-1a | mepiquat chloride |
| II-2a | chlormequat chloride |
| II-3a | trinexapac-ethyl |
| II-4a | prohexadione-calcium |
| II-5a | ethophon |

Particularly preferred compositions of these compositions are compiled in Table T2, where each row corresponds to one embodiment of the compositions according to the invention, i.e. one specific individualized three-component composition. According to one specific aspect, these are ternary compositions which each only contain these three components as the active compound. Furthermore, also every combination of the compositions individualized in this table represent embodiments of the present invention.

Table T2: Three-component compositions comprising component I, a fungicidal component II' and a growth regulator as component III,

| composition | I | II' | III |
|---|---|---|---|
| T2-1 | I | II-3 | II-1a |
| T2-2 | I | II-5 | II-1a |
| T2-3 | I | II-6 | II-1a |
| T2-4 | I | II-7 | II-1a |
| T2-5 | I | II-8 | II-1a |
| T2-6 | I | II-11 | II-1a |
| T2-7 | I | II-16 | II-1a |
| T2-8 | I | II-21 | II-1a |
| T2-9 | I | II-26 | II-1a |
| T2-10 | I | II-32 | II-1a |
| T2-11 | I | II-33 | II-1a |
| T2-12 | I | II-37 | II-1a |
| T2-13 | I | II-39 | II-1a |
| T2-14 | I | II-42 | II-1a |
| T2-15 | I | II-44 | II-1a |
| T2-16 | I | II-50 | II-1a |
| T2-17 | I | II-53 | II-1a |
| T2-18 | I | II-60 | II-1a |
| T2-19 | I | II-62 | II-1a |
| T2-20 | I | II-66 | II-1a |
| T2-21 | I | II-69 | II-1a |
| T2-22 | I | II-70 | II-1a |
| T2-23 | I | II-71 | II-1a |
| T2-24 | I | II-72 | II-1a |
| T2-25 | I | II-74 | II-1a |
| T2-26 | I | II-76 | II-1a |
| T2-27 | I | II-78 | II-1a |
| T2-28 | I | II-84 | II-1a |
| T2-29 | I | II-85 | II-1a |
| T2-30 | I | II-86 | II-1a |
| T2-31 | I | II-92 | II-1a |
| T2-32 | I | II-3 | II-2a |
| T2-33 | I | II-5 | II-2a |
| T2-34 | I | II-6 | II-2a |
| T2-35 | I | II-7 | II-2a |

| composition | I | II' | III |
|---|---|---|---|
| T2-36 | I | II-8 | II-2a |
| T2-37 | I | II-11 | II-2a |
| T2-38 | I | II-16 | II-2a |
| T2-39 | I | II-21 | II-2a |
| T2-40 | I | II-26 | II-2a |
| T2-41 | I | II-32 | II-2a |
| T2-42 | I | II-33 | II-2a |
| T2-43 | I | II-37 | II-2a |
| T2-44 | I | II-39 | II-2a |
| T2-45 | I | II-42 | II-2a |
| T2-46 | I | II-44 | II-2a |
| T2-47 | I | II-50 | II-2a |
| T2-48 | I | II-53 | II-2a |
| T2-49 | I | II-60 | II-2a |
| T2-50 | I | II-62 | II-2a |
| T2-51 | I | II-66 | II-2a |
| T2-52 | I | II-69 | II-2a |
| T2-53 | I | II-70 | II-2a |
| T2-54 | I | II-71 | II-2a |
| T2-55 | I | II-72 | II-2a |
| T2-56 | I | II-74 | II-2a |
| T2-57 | I | II-76 | II-2a |
| T2-58 | I | II-78 | II-2a |
| T2-59 | I | II-84 | II-2a |
| T2-60 | I | II-85 | II-2a |
| T2-61 | I | II-86 | II-2a |
| T2-62 | I | II-92 | II-2a |
| T2-63 | I | II-3 | II-3a |
| T2-64 | I | II-5 | II-3a |
| T2-65 | I | II-6 | II-3a |
| T2-66 | I | II-7 | II-3a |
| T2-67 | I | II-8 | II-3a |
| T2-68 | I | II-11 | II-3a |
| T2-69 | I | II-16 | II-3a |
| T2-70 | I | II-21 | II-3a |

| composition | I | II' | III |
|---|---|---|---|
| T2-71 | I | II-26 | II-3a |
| T2-72 | I | II-32 | II-3a |
| T2-73 | I | II-33 | II-3a |
| T2-74 | I | II-37 | II-3a |
| T2-75 | I | II-39 | II-3a |
| T2-76 | I | II-42 | II-3a |
| T2-77 | I | II-44 | II-3a |
| T2-78 | I | II-50 | II-3a |
| T2-79 | I | II-53 | II-3a |
| T2-80 | I | II-60 | II-3a |
| T2-81 | I | II-62 | II-3a |
| T2-82 | I | II-66 | II-3a |
| T2-83 | I | II-69 | II-3a |
| T2-84 | I | II-70 | II-3a |
| T2-85 | I | II-71 | II-3a |
| T2-86 | I | II-72 | II-3a |
| T2-87 | I | II-74 | II-3a |
| T2-88 | I | II-76 | II-3a |
| T2-89 | I | II-78 | II-3a |
| T2-90 | I | II-84 | II-3a |
| T2-91 | I | II-85 | II-3a |
| T2-92 | I | II-86 | II-3a |
| T2-93 | I | II-92 | II-3a |
| T2-94 | I | II-3 | II-4a |
| T2-95 | I | II-5 | II-4a |
| T2-96 | I | II-6 | II-4a |
| T2-97 | I | II-7 | II-4a |
| T2-98 | I | II-8 | II-4a |
| T2-99 | I | II-11 | II-4a |
| T2-100 | I | II-16 | II-4a |
| T2-101 | I | II-21 | II-4a |
| T2-102 | I | II-26 | II-4a |
| T2-103 | I | II-32 | II-4a |
| T2-104 | I | II-33 | II-4a |
| T2-105 | I | II-37 | II-4a |
| T2-106 | I | II-39 | II-4a |
| T2-107 | I | II-42 | II-4a |
| T2-108 | I | II-44 | II-4a |
| T2-109 | I | II-50 | II-4a |
| T2-110 | I | II-53 | II-4a |

| composition | I | II' | III |
|---|---|---|---|
| T2-111 | I | II-60 | II-4a |
| T2-112 | I | II-62 | II-4a |
| T2-113 | I | II-66 | II-4a |
| T2-114 | I | II-69 | II-4a |
| T2-115 | I | II-70 | II-4a |
| T2-116 | I | II-71 | II-4a |
| T2-117 | I | II-72 | II-4a |
| T2-118 | I | II-74 | II-4a |
| T2-119 | I | II-76 | II-4a |
| T2-120 | I | II-78 | II-4a |
| T2-121 | I | II-84 | II-4a |
| T2-122 | I | II-85 | II-4a |
| T2-123 | I | II-86 | II-4a |
| T2-124 | I | II-92 | II-4a |
| T2-125 | I | II-3 | II-5a |
| T2-126 | I | II-5 | II-5a |
| T2-127 | I | II-6 | II-5a |
| T2-128 | I | II-7 | II-5a |
| T2-129 | I | II-8 | II-5a |
| T2-130 | I | II-11 | II-5a |
| T2-131 | I | II-16 | II-5a |
| T2-132 | I | II-21 | II-5a |
| T2-133 | I | II-26 | II-5a |
| T2-134 | I | II-32 | II-5a |
| T2-135 | I | II-33 | II-5a |
| T2-136 | I | II-37 | II-5a |
| T2-137 | I | II-39 | II-5a |
| T2-138 | I | II-42 | II-5a |
| T2-139 | I | II-44 | II-5a |
| T2-140 | I | II-50 | II-5a |
| T2-141 | I | II-53 | II-5a |
| T2-142 | I | II-60 | II-5a |
| T2-143 | I | II-62 | II-5a |
| T2-144 | I | II-66 | II-5a |
| T2-145 | I | II-69 | II-5a |
| T2-146 | I | II-70 | II-5a |
| T2-147 | I | II-71 | II-5a |
| T2-148 | I | II-72 | II-5a |
| T2-149 | I | II-74 | II-5a |
| T2-150 | I | II-76 | II-5a |

| composition | I | II' | III |
|---|---|---|---|
| T2-151 | I | II-78 | II-5a |
| T2-152 | I | II-84 | II-5a |
| T2-153 | I | II-85 | II-5a |
| T2-154 | I | II-86 | II-5a |
| T2-155 | I | II-92 | II-5a |

Particularly preferred compositions are the three-component compositions, wherein component I is as defined above, and components II' and III are growth regulators, selected from:

| | |
|---|---|
| II-1a | mepiquat chloride |
| II-2a | chlormequat chloride |
| II-3a | trinexapac-ethyl |
| II-4a | prohexadione-calcium |
| II-5a | ethophon |

wherein components II' and III are different from each other.

Particularly preferred compositions of these compositions are compiled in Table T3, where each row corresponds to one embodiment of the compositions according to the invention, i.e. one specific individualized three-component composition. According to one specific aspect, these are ternary compositions which each only contain these three components as the active compound. Furthermore, also every combination of the compositions individualized in this table represent embodiments of the present invention.

Table T3: Three-component compositions comprising component I and two plant growth regulators as component II' and component III, wherein components II' and III are different from each other.

| composition | I | II' | III |
|---|---|---|---|
| T3-1 | I | II-1a | II-2a |
| T3-2 | I | II-1a | II-3a |
| T3-3 | I | II-1a | II-4a |
| T3-4 | I | II-1a | II-5a |
| T3-5 | I | II-2a | II-3a |
| T3-6 | I | II-2a | II-4a |
| T3-7 | I | II-2a | II-5a |
| T3-8 | I | II-3a | II-4a |
| T3-9 | I | II-3a | II-5a |
| T3-10 | I | II-4a | II-5a |

Particularly preferred compositions are the three-component compositions, wherein component I is as defined above, component II' is selected from the following fungicidal compounds

| | |
|---|---|
| II-3 | azoxystrobin |
| II-5 | benzovindiflupyr |
| II-6 | bixafen |
| II-7 | boscalid |
| II-8 | carbendazim |
| II-11 | chlorothalonil |
| II-16 | cyprodinil |
| II-21 | difenoconazole |
| II-26 | epoxiconazole |
| II-60 | metconazole |
| II-62 | metrafenone |
| II-66 | pyraclostrobin |
| II-69 | phosporous acid |
| II-70 | potassium salt of phosphorous acid |
| II-32 | fenpropimorph |
| II-33 | fluazinam |
| II-37 | fluoxastrobin |
| II-39 | flusilazole |
| II-42 | fluxapyroxad |
| II-44 | fosetyl-Al |
| II-50 | isopyrazam |
| II-53 | kresoxim-methyl |
| II-74 | prochloraz |
| II-76 | propiconazole |
| II-78 | prothioconazole |
| II-84 | spiroxamine |
| II-85 | sulfur |
| II-86 | tebuconazole |

(continued)

| | | | |
|---|---|---|---|
| II-71 | sodium salt of phosphorous acid | II-92 | trifloxystrobin |
| II-72 | penthiopyrad | | |

and component III is an insecticide selected from

| | |
|---|---|
| II-11c | clothianidin |
| II-20c | fipronil |
| II-24c | imidacloprid; and |
| II-42c | thiamethoxam |

Particularly preferred compositions of these compositions are compiled in Table T4, where each row corresponds to one embodiment of the compositions according to the invention, i.e. one specific individualized three-component composition. According to one specific aspect, these are ternary compositions which each only contain these three components as the active compound. Furthermore, also every combination of the compositions individualized in this table represent embodiments of the present invention.

Table T4: Three-component compositions comprising component I, a further specific fungicide compound as component II' and an insecticide as component III.

| composition | I | II' | III |
|---|---|---|---|
| T4-1 | I | II-3 | II-11c |
| T4-2 | I | II-5 | II-11c |
| T4-3 | I | II-6 | II-11c |
| T4-4 | I | II-7 | II-11c |
| T4-5 | I | II-8 | II-11c |
| T4-6 | I | II-11 | II-11c |
| T4-7 | I | II-16 | II-11c |
| T4-8 | I | II-21 | II-11c |
| T4-9 | I | II-26 | II-11c |
| T4-10 | I | II-32 | II-11c |
| T4-11 | I | II-33 | II-11c |
| T4-12 | I | II-37 | II-11c |
| T4-13 | I | II-39 | II-11c |
| T4-14 | I | II-42 | II-11c |
| T4-15 | I | II-44 | II-11c |
| T4-16 | I | II-50 | II-11c |
| T4-17 | I | II-53 | II-11c |
| T4-18 | I | II-60 | II-11c |
| T4-19 | I | II-62 | II-11c |
| T4-20 | I | II-66 | II-11c |
| T4-21 | I | II-69 | II-11c |
| T4-22 | I | II-70 | II-11c |
| T4-23 | I | II-71 | II-11c |
| T4-24 | I | II-72 | II-11c |
| T4-25 | I | II-74 | II-11c |
| T4-26 | I | II-76 | II-11c |
| T4-27 | I | II-78 | II-11c |
| T4-28 | I | II-84 | II-11c |
| T4-29 | I | II-85 | II-11c |
| T4-30 | I | II-86 | II-11c |
| T4-31 | I | II-92 | II-11c |
| T4-32 | I | II-3 | II-20c |

| composition | I | II' | III |
|---|---|---|---|
| T4-33 | I | II-5 | II-20c |
| T4-34 | I | II-6 | II-20c |
| T4-35 | I | II-7 | II-20c |
| T4-36 | I | II-8 | II-20c |
| T4-37 | I | II-11 | II-20c |
| T4-38 | I | II-16 | II-20c |
| T4-39 | I | II-21 | II-20c |
| T4-40 | I | II-26 | II-20c |
| T4-41 | I | II-32 | II-20c |
| T4-42 | I | II-33 | II-20c |
| T4-43 | I | II-37 | II-20c |
| T4-44 | I | II-39 | II-20c |
| T4-45 | I | II-42 | II-20c |
| T4-46 | I | II-44 | II-20c |
| T4-47 | I | II-50 | II-20c |
| T4-48 | I | II-53 | II-20c |
| T4-49 | I | II-60 | II-20c |
| T4-50 | I | II-62 | II-20c |
| T4-51 | I | II-66 | II-20c |
| T4-52 | I | II-69 | II-20c |
| T4-53 | I | II-70 | II-20c |
| T4-54 | I | II-71 | II-20c |
| T4-55 | I | II-72 | II-20c |
| T4-56 | I | II-74 | II-20c |
| T4-57 | I | II-76 | II-20c |
| T4-58 | I | II-78 | II-20c |
| T4-59 | I | II-84 | II-20c |
| T4-60 | I | II-85 | II-20c |
| T4-61 | I | II-86 | II-20c |
| T4-62 | I | II-92 | II-20c |
| T4-63 | I | II-3 | II-24c |
| T4-64 | I | II-5 | II-24c |
| T4-65 | I | II-6 | II-24c |
| T4-66 | I | II-7 | II-24c |
| T4-67 | I | II-8 | II-24c |
| T4-68 | I | II-11 | II-24c |
| T4-69 | I | II-16 | II-24c |
| T4-70 | I | II-21 | II-24c |
| T4-71 | I | II-26 | II-24c |
| T4-72 | I | II-32 | II-24c |

| composition | I | II' | III |
|---|---|---|---|
| T4-73 | I | II-33 | II-24c |
| T4-74 | I | II-37 | II-24c |
| T4-75 | I | II-39 | II-24c |
| T4-76 | I | II-42 | II-24c |
| T4-77 | I | II-44 | II-24c |
| T4-78 | I | II-50 | II-24c |
| T4-79 | I | II-53 | II-24c |
| T4-80 | I | II-60 | II-24c |
| T4-81 | I | II-62 | II-24c |
| T4-82 | I | II-66 | II-24c |
| T4-83 | I | II-69 | II-24c |
| T4-84 | I | II-70 | II-24c |
| T4-85 | I | II-71 | II-24c |
| T4-86 | I | II-72 | II-24c |
| T4-87 | I | II-74 | II-24c |
| T4-88 | I | II-76 | II-24c |
| T4-89 | I | II-78 | II-24c |
| T4-90 | I | II-84 | II-24c |
| T4-91 | I | II-85 | II-24c |
| T4-92 | I | II-86 | II-24c |
| T4-93 | I | II-92 | II-24c |
| T4-94 | I | II-3 | II-42c |
| T4-95 | I | II-5 | II-42c |
| T4-96 | I | II-6 | II-42c |
| T4-97 | I | II-7 | II-42c |
| T4-98 | I | II-8 | II-42c |
| T4-99 | I | II-11 | II-42c |
| T4-100 | I | II-16 | II-42c |
| T4-101 | I | II-21 | II-42c |
| T4-102 | I | II-26 | II-42c |
| T4-103 | I | II-32 | II-42c |
| T4-104 | I | II-33 | II-42c |
| T4-105 | I | II-37 | II-42c |
| T4-106 | I | II-39 | II-42c |
| T4-107 | I | II-42 | II-42c |
| T4-108 | I | II-44 | II-42c |
| T4-109 | I | II-50 | II-42c |
| T4-110 | I | II-53 | II-42c |
| T4-111 | I | II-60 | II-42c |
| T4-112 | I | II-62 | II-42c |

| composition | I | II’ | III |
|---|---|---|---|
| T4-113 | I | II-66 | II-42c |
| T4-114 | I | II-69 | II-42c |
| T4-115 | I | II-70 | II-42c |
| T4-116 | I | II-71 | II-42c |
| T4-117 | I | II-72 | II-42c |
| T4-118 | I | II-74 | II-42c |
| T4-119 | I | II-76 | II-42c |
| T4-120 | I | II-78 | II-42c |
| T4-121 | I | II-84 | II-42c |
| T4-122 | I | II-85 | II-42c |
| T4-123 | I | II-86 | II-42c |
| T4-124 | I | II-92 | II-42c |

Particularly preferred compositions are the three-component compositions, wherein component I is as defined above, and component II’ is selected from the following insecticides

II-11c clothianidin
II-24c imidacloprid
II-42c thiamethoxam,

and component III is fipronil (compound II-20c).

Particularly preferred compositions of these compositions are compiled in Table T5, where each row corresponds to one embodiment of the compositions according to the invention, i.e. one specific individualized three-component composition. According to one specific aspect, these are ternary compositions which each only contain these three components as the active compound.

Table T5: Three-component compositions comprising component I, an insecticide compound as component II’ and fipronil as component III.

| composition | I | II’ | III |
|---|---|---|---|
| T5-1 | I | II-11c | II-20c |
| T5-2 | I | II-24c | II-20c |
| T5-3 | I | II-42c | II-20c |

According to a further aspect, the present invention relates to four-component compositions, i.e. compositions comprising component I, a component II’ selected from groups A’), B’), C), D), E’), F’) and G) to O), a component III selected from groups A’), B’), C), D), E’), F’) and G) to O) and a component IV, also selected from groups A’), B’), C), D), E’), F’) and G) to O), wherein components II’, III and IV are diferent active ingredients. According to a specific embodiment thereof, exactly four active compounds as defined are present in these compositions (herein also called "quarternary compositions"). The composition may, of course, contain any kind of additive or the like as detailled below in order to provide a formulation suitable for use in agriculture.

In the four-component compositions of the invention, the weight ratio of component I to the 1st further active compound (component II’) depends on the properties of the active compounds in question; preferably, it is in the range of from 1:100 to 100:1, preferably in the range of from 1:50 to 50:1 and in particular in the range of from 1:20 to 20:1. It may be preferable for the weight ratio to be in the region of from 1:10 to 10:1, preferably from 1:3 to 3:1, in particular from 1:2 to 2:1. The weight ratio of compound I to the 2nd further active compound (component III) is preferably in the range of from 1:100 to 100:1, preferably in the range of from 1:50 to 50:1 and in particular in the range of from 1:20 to 20:1. It may be preferable for the weight ratio to be in the region of from 1:10 to 10:1, preferably from 1:3 to 3:1, in particular from 1:2 to 2:1. The weight ratio of compound I to the 3rd further active compound (component IV) is preferably in the range of from 1:100 to 100:1, preferably in the range of from 1:50 to 50:1 and in particular in the range of from 1:20 to 20:1. It may be preferable for the weight ratio to be in the region of from 1:10 to 10:1, preferably from 1:3 to 3:1, in particular from 1:2 to 2:1. The weight ratio of 1st further active compound (component II’) to 2nd further active compound (component III) is preferably in the range of from 1:100 to 100:1, preferably in the range of from 1:50 to 50:1 and in particular in the range of from 2:10 to 20:1. It may be preferable for the weight ratio to be in the region of from 1:10 to 10:1, preferably from 1:3 to 3:1, in particular from 1:2 to 2:1. The weight ratio of 1st further active compound (component II’) to 3rd further active compound (component IV) is preferably in the range of from 1:100 to 100:1, preferably in the

range of from 1:50 to 50:1 and in particular in the range of from 1:20 to 20:1. It may be preferable for the weight ratio to be in the region of from 1:10 to 10:1, preferably from 1:3 to 3:1, in particular from 1:2 to 2:1. The weight ratio of 2nd further active compound (component III) to 3rd further active compound (component IV) is preferably in the range of from 1:100 to 100:1, preferably in the range of from 1:50 to 50:1,and in particular in the range of from 1:20 to 20:1. It may be preferable for the weight ratio to be in the region of from 1:10 to 10:1, preferably from 1:3 to 3:1, in particular from 1:2 to 2:1.

According to one embodiment, the present invention relates to four-component compositions, comprising component I, a component II' selected from groups groups A'), B'), C), D), E'), F') and G) to K), a component III selected from groups A'), B'), C), D), E'), F') and G) to K) and a component IV selected from groups A'), B'), C), D), E'), F') and G) to K), wherein components II', III and IV are different active compounds.

One specific embodiment relates to four-component compositions, wherein component I is as defined above and component II' is selected from group A) of the respiration inhibitors of complex III at $Q_o$ site, component III is selected from the group of B) of the sterol biosynthesis inhibitors (SBI fungicides) and component IV is selected from the respiration inhibitors of complex II. According to one specific embodiment thereof, component II' is selected from the group of strobilurins. Specifically, component II' is selected from the group consisting of azoxystrobin, dimoxystrobin, fluoxastrobin, kresoxim-methyl, orysastrobin, picoxystrobin, pyraclostrobin and trifloxystrobin. According to a further specific embodiment thereof, component III is selected from the group of the C14 demethylase inhibitors (DMI fungicides), in particular selected from cyproconazole, difenoconazole, epoxiconazole, fluquinconazole, flusilazole, flutriafol, metconazole, myclobutanil, penconazole, propiconazole, prothioconazole, triadimefon, triadimenol, tebuconazole, tetraconazole, triticonazole and prochloraz. According to a further specific embodiment thereof, component IV is selected from the group of the carboxamides, in particular selected from benodanil, benzovindiflupyr, bixafen, boscalid, carboxin, fenfuram, fluopyram, flutolanil, fluxapyroxad, furametpyr, isopyrazam, mepronil, oxycarboxin, penflufen, penthiopyrad, sedaxane, tecloftalam, thifluzamide, N-(4'-trifluoromethylthiobiphenyl-2-yl)-3-difluoromethyl-1-methyl-1H-pyrazole-4-carboxamide, N-(2-(1,3,3-trimethyl-butyl)-phenyl)-1,3-dimethyl-5-fluoro-1H-pyrazole-4-carboxamide, 3-(difluoromethyl)-1-methyl-N-(1,1,3-trimethylindan-4-yl)pyrazole-4-carboxamide, 3-(trifluoromethyl)-1-methyl-N-(1,1,3-trimethylindan-4-yl)pyrazole-4-carboxamide, 1,3-dimethyl-N-(1,1,3-trimethylindan-4-yl)pyrazole-4-carboxamide, 3-(trifluoromethyl)-1,5-dimethyl-N-(1,1,3-trimethylindan-4-yl)pyrazole-4-carboxamide, 3-(difluoromethyl)-1,5-dimethyl-N-(1,1,3-trimethylindan-4-yl)pyrazole-4-carboxamide and 1,3,5-trimethyl-N-(1,1,3-trimethylindan-4-yl)pyrazole-4-carboxamide, in particular selected from benzovindiflupyr, bixafen, boscalid, fluopyram, fluxapyroxad, isopyrazam, penflufen, penthiopyrad and sedaxane. According to a further specific embodiment, these are quarternary compositions which, as active compounds, comprise in each case only the mentioned four active components I, II', III and IV.

One further specific embodiment relates to four-component compositions, wherein component I is as defined above and component II' is selected from group A) of the respiration inhibitors of complex III at $Q_o$ site, component III is selected from the group of B) of the sterol biosynthesis inhibitors (SBI fungicides) and component IV is selected from the Inhibitors with Multi Site Action. According to one specific embodiment thereof, component II' is selected from the group of strobilurins. Specifically, component II' is selected from the group consisting of azoxystrobin, dimoxystrobin, fluoxastrobin, kresoxim-methyl, orysastrobin, picoxystrobin, pyraclostrobin and trifloxystrobin. According to a further specific embodiment thereof, component III is selected from the group of the C14 demethylase inhibitors (DMI fungicides), in particular selected from cyproconazole, difenoconazole, epoxiconazole, fluquinconazole, flusilazole, flutriafol, metconazole, myclobutanil, penconazole, propiconazole, prothioconazole, triadimefon, triadimenol, tebuconazole, tetraconazole, triticonazole and prochloraz. According to a further specific embodiment thereof, component IV is chlorothalonil. According to a further specific embodiment, these are quarternary compositions which, as active compounds, comprise in each case only the mentioned four active components I, II', III and IV.

One further specific embodiment relates to four-component compositions, wherein component I is as defined above and component II' is selected from group A) of the respiration inhibitors of complex III at $Q_o$ site, component III is selected from the group of B) of the respiration inhibitors of complex II and component IV is selected IV is selected from the Inhibitors with Multi Site Action. According to one specific embodiment thereof, component II' is selected from the group of strobilurins. Specifically, component II' is selected from the group consisting of azoxystrobin, dimoxystrobin, fluoxastrobin, kresoxim-methyl, orysastrobin, picoxystrobin, pyraclostrobin and trifloxystrobin. According to a further specific embodiment thereof, component III is selected from the group of the carboxamides, in particular selected from benodanil, benzovindiflupyr, bixafen, boscalid, carboxin, fenfuram, fluopyram, flutolanil, fluxapyroxad, furametpyr, isopyrazam, mepronil, oxycarboxin, penflufen, penthiopyrad, sedaxane, tecloftalam, thifluzamide, N-(4'-trifluoromethylthiobiphenyl-2-yl)-3-difluoromethyl-1-methyl-1H-pyrazole-4-carboxamide, N-(2-(1,3,3-trimethyl-butyl)-phenyl)-1,3-dimethyl-5-fluoro-1H-pyrazole-4-carboxamide, 3-(difluoromethyl)-1-methyl-N-(1,1,3-trimethylindan-4-yl)pyrazole-4-carboxamide, 3-(trifluoromethyl)-1-methyl-N-(1,1,3-trimethylindan-4-yl)pyrazole-4-carboxamide, 1,3-dimethyl-N-(1,1,3-trimethylindan-4-yl)pyrazole-4-carboxamide, 3-(trifluoromethyl)-1 ,5-dimethyl-N-(1,1,3-trimethylindan-4-yl)pyrazole-4-carboxamide, 3-(difluoromethyl)-1,5-dimethyl-N-(1,1,3-trimethylindan-4-yl)pyrazole-4-carboxamide and 1,3,5-trimethyl-N-(1,1,3-trimethylindan-4-yl)pyrazole-4-carboxamide, in particular selected from benzovindiflupyr, bixafen, boscalid,

fluopyram, fluxapyroxad, isopyrazam, penflufen, penthiopyrad and sedaxane. According to a further specific embodiment thereof, component IV is chlorothalonil According to a further specific embodiment, these are quarternary compositions which, as active compounds, comprise in each case only the mentioned four active components I, II', III and IV.

One further specific embodiment relates to four-component compositions, wherein component I is as defined above, component II' is selected from group A) of the respiration inhibitors of complex III at $Q_o$ site, component III is selected from the group of B) of the respiration inhibitors of complex II and component IV is selected from the Sterol biosynthesis inhibitors (SBI fungicides), in particular Delta14-reductase inhibitors. According to one specific embodiment thereof, component II' is selected from the group of strobilurins. Specifically, component II' is selected from the group consisting of azoxystrobin, dimoxystrobin, fluoxastrobin, kresoxim-methyl, orysastrobin, picoxystrobin, pyraclostrobin and trifloxystrobin. According to a further specific embodiment thereof, component III is selected from the group of the carboxamides, in particular selected from benodanil, benzovindiflupyr, bixafen, boscalid, carboxin, fenfuram, fluopyram, flutolanil, fluxapyroxad, furametpyr, isopyrazam, mepronil, oxycarboxin, penflufen, penthiopyrad, sedaxane, tecloftalam, thifluzamide, N-(4'-trifluoromethylthiobiphenyl-2-yl)-3-difluoromethyl-1-methyl-1H-pyrazole-4-carboxamide, N-(2-(1,3,3-trimethyl-butyl)-phenyl)-1,3-dimethyl-5-fluoro-1H-pyrazole-4-carboxamide, 3-(difluoromethyl)-1-methyl-N-(1,1,3-trimethyl-indan-4-yl)pyrazole-4-carboxamide, 3-(trifluoromethyl)-1-methyl-N-(1,1,3-trimethylindan-4-yl)-pyrazole-4-carboxamide, 1,3-dimethyl-N-(1,1,3-trimethylindan-4-yl)pyrazole-4-carboxamide, 3-(trifluoromethyl)-1,5-dimethyl-N-(1,1,3-trimethylindan-4-yl)pyrazole-4-carboxamide, 3-(difluoromethyl)-1,5-dimethyl-N-(1,1,3-trimethylindan-4-yl)pyrazole-4-carboxamide and 1,3,5-trimethyl-N-(1,1,3-trimethylindan-4-yl)pyrazole-4-carboxamide, in particular selected from benzovindiflupyr, bixafen, boscalid, fluopyram, fluxapyroxad, isopyrazam, penflufen, penthiopyrad and sedaxane. According to a further specific embodiment thereof, component IV is fenpropimorph According to a further specific embodiment, these are quarternary compositions which, as active compounds, comprise in each case only the mentioned four active components I, II', III and IV.

One further specific embodiment relates to four-component compositions, wherein component I is as defined above, component II' is selected from group A) of the respiration inhibitors of complex III at $Q_o$ site, component III is selected from the group of B) of the respiration inhibitors of complex II and component IV is selected from the from the Inhibitors of cell division and cytoskeleton. According to one specific embodiment thereof, component II' is selected from the group of strobilurins. Specifically, component II is selected from the group consisting of azoxystrobin, dimoxystrobin, fluoxastrobin, kresoxim-methyl, orysastrobin, picoxystrobin, pyraclostrobin and trifloxystrobin. According to a further specific embodiment thereof, component III is selected from the group of the carboxamides, in particular selected from benodanil, benzovindiflupyr, bixafen, boscalid, carboxin, fenfuram, fluopyram, flutolanil, fluxapyroxad, furametpyr, isopyrazam, mepronil, oxycarboxin, penflufen, penthiopyrad, sedaxane, tecloftalam, thifluzamide, N-(4'-trifluoromethylthiobiphenyl-2-yl)-3-difluoromethyl-1-methyl-1 H-pyrazole-4-carboxamide, N-(2-(1,3,3-trimethyl-butyl)-phenyl)-1,3-dimethyl-5-fluoro-1H-pyrazole-4-carboxamide, 3-(difluoromethyl)-1-methyl-N-(1,1,3-trimethylindan-4-yl)pyrazole-4-carboxamide, 3-(trifluoromethyl)-1-methyl-N-(1,1,3-trimethylindan-4-yl)pyrazole-4-carboxamide, 1,3-dimethyl-N-(1,1,3-trimethylindan-4-yl)pyrazole-4-carboxamide, 3-(trifluoromethyl)-1,5-dimethyl-N-(1,1,3-trimethylindan-4-yl)pyrazole-4-carboxamide, 3-(difluoro-methyl)-1,5-dimethyl-N-(1,1,3-trimethylindan-4-yl)pyrazole-4-carboxamide and 1,3,5-trimethyl-N-(1,1,3-trimethylindan-4-yl)pyrazole-4-carboxamide, in particular selected from benzovindiflupyr, bixafen, boscalid, fluopyram, fluxapyroxad, isopyrazam, penflufen, penthiopyrad and sedaxane. According to a further specific embodiment thereof, component IV is selected from cell division inhibitors such as tubulin inhibitors such as metrafenone. According to a further specific embodiment, these are quarternary compositions which, as active compounds, comprise in each case only the mentioned four active components I, II', III and IV.

According to a further embodiment of the four-component compositions, component I is as defined above and components II', III and IV are selected from Group M), the growth regulators, in particular selected from chlormequat (chlormequat chloride), mepiquat (mepiquat chloride), paclobutrazole, prohexadione (prohexadione-calcium), trinexapac-ethyl and uniconazole, wherein components II', III and IV are different active ingredients.

Particularly preferred compositions are the four-component compositions, wherein component I is as defined above, and component II' and III are selected from the following fungicides and growth regulators

| | | | |
|---|---|---|---|
| II-3 | azoxystrobin | II-62 | metrafenone |
| II-6 | bixafen | II-66 | pyraclostrobin |
| II-8 | carbendazim | II-76 | propiconazole |
| II-11 | chlorothalonil | II-78 | prothioconazole |
| II-16 | cyprodinil | II-84 | spiroxamine |
| II-21 | difenoconazole | II-86 | tebuconazole |
| II-26 | epoxiconazole | II-92 | trifloxystrobin |
| II-32 | fenpropimorph | II-1a | mepiquat chloride |
| II-37 | fluoxastrobin | II-2a | chlormequat chloride |

(continued)

| | | | |
|---|---|---|---|
| II-39 | flusilazole | II-3a | trinexapac-ethyl |
| II-42 | fluxapyroxad | II-4a | prohexadione-calcium |
| II-50 | isopyrazam | II-5a | ethophon |

and component IV is

| | |
|---|---|
| II-42 | fluxapyroxad or |
| II-66 | pyraclostrobin |

wherein components II', III and IV are different active compounds.

These compositions are compiled in Table Q1, where each row corresponds to one embodiment of the compositions according to the invention, i.e. one specific individualized four-component composition. According to one specific aspect, these are quarternary compositions which each only contain these four components as the active compound. Furthermore, also every combination of the compositions individualized in this table represent embodiments of the present invention.

Table Q1: Four-component compositions comprising component I, a fungicide or growth regulator as component II' and III and a fungicidal component IV.

| composition | I | II' | III | IV |
|---|---|---|---|---|
| Q1-1 | I | II-3 | II-6 | II-42 |
| Q1-2 | I | II-3 | II-8 | II-42 |
| Q1-3 | I | II-3 | II-11 | II-42 |
| Q1-4 | I | II-3 | II-16 | II-42 |
| Q1-5 | I | II-3 | II-21 | II-42 |
| Q1-6 | I | II-3 | II-26 | II-42 |
| Q1-7 | I | II-3 | II-32 | II-42 |
| Q1-8 | I | II-3 | II-37 | II-42 |
| Q1-9 | I | II-3 | II-39 | II-42 |
| Q1-10 | I | II-3 | II-50 | II-42 |
| Q1-11 | I | II-3 | II-62 | II-42 |
| Q1-12 | I | II-3 | II-76 | II-42 |
| Q1-13 | I | II-3 | II-78 | II-42 |
| Q1-14 | I | II-3 | II-84 | II-42 |
| Q1-15 | I | II-3 | II-86 | II-42 |
| Q1-16 | I | II-3 | II-92 | II-42 |
| Q1-17 | I | II-3 | II-1a | II-42 |
| Q1-18 | I | II-3 | II-2a | II-42 |
| Q1-19 | I | II-3 | II-3a | II-42 |
| Q1-20 | I | II-3 | II-4a | II-42 |
| Q1-21 | I | II-3 | II-5a | II-42 |
| Q1-22 | I | II-6 | II-8 | II-42 |
| Q1-23 | I | II-6 | II-11 | II-42 |
| Q1-24 | I | II-6 | II-16 | II-42 |
| Q1-25 | I | II-6 | II-21 | II-42 |
| Q1-26 | I | II-6 | II-26 | II-42 |
| Q1-27 | I | II-6 | II-32 | II-42 |
| Q1-28 | I | II-6 | II-37 | II-42 |
| Q1-29 | I | II-6 | II-39 | II-42 |
| Q1-30 | I | II-6 | II-50 | II-42 |
| Q1-31 | I | II-6 | II-62 | II-42 |
| Q1-32 | I | II-6 | II-76 | II-42 |
| Q1-33 | I | II-6 | II-78 | II-42 |
| Q1-34 | I | II-6 | II-84 | II-42 |
| Q1-35 | I | II-6 | II-86 | II-42 |
| Q1-36 | I | II-6 | II-92 | II-42 |

| composition | I | II' | III | IV |
|---|---|---|---|---|
| Q1-37 | I | II-6 | II-1a | II-42 |
| Q1-38 | I | II-6 | II-2a | II-42 |
| Q1-39 | I | II-6 | II-3a | II-42 |
| Q1-40 | I | II-6 | II-4a | II-42 |
| Q1-41 | I | II-6 | II-5a | II-42 |
| Q1-42 | I | II-8 | II-11 | II-42 |
| Q1-43 | I | II-8 | II-16 | II-42 |
| Q1-44 | I | II-8 | II-21 | II-42 |
| Q1-45 | I | II-8 | II-26 | II-42 |
| Q1-46 | I | II-8 | II-32 | II-42 |
| Q1-47 | I | II-8 | II-37 | II-42 |
| Q1-48 | I | II-8 | II-39 | II-42 |
| Q1-49 | I | II-8 | II-50 | II-42 |
| Q1-50 | I | II-8 | II-62 | II-42 |
| Q1-51 | I | II-8 | II-76 | II-42 |
| Q1-52 | I | II-8 | II-78 | II-42 |
| Q1-53 | I | II-8 | II-84 | II-42 |
| Q1-54 | I | II-8 | II-86 | II-42 |
| Q1-55 | I | II-8 | II-92 | II-42 |
| Q1-56 | I | II-8 | II-1a | II-42 |
| Q1-57 | I | II-8 | II-2a | II-42 |
| Q1-58 | I | II-8 | II-3a | II-42 |
| Q1-59 | I | II-8 | II-4a | II-42 |
| Q1-60 | I | II-8 | II-5a | II-42 |
| Q1-61 | I | II-11 | II-16 | II-42 |
| Q1-62 | I | II-11 | II-21 | II-42 |
| Q1-63 | I | II-11 | II-26 | II-42 |
| Q1-64 | I | II-11 | II-32 | II-42 |
| Q1-65 | I | II-11 | II-37 | II-42 |
| Q1-66 | I | II-11 | II-39 | II-42 |
| Q1-67 | I | II-11 | II-50 | II-42 |
| Q1-68 | I | II-11 | II-62 | II-42 |
| Q1-69 | I | II-11 | II-76 | II-42 |
| Q1-70 | I | II-11 | II-78 | II-42 |
| Q1-71 | I | II-11 | II-84 | II-42 |
| Q1-72 | I | II-11 | II-86 | II-42 |

| composition | I | II' | III | IV |
|---|---|---|---|---|
| Q1-73 | I | II-11 | II-92 | II-42 |
| Q1-74 | I | II-11 | II-1a | II-42 |
| Q1-75 | I | II-11 | II-2a | II-42 |
| Q1-76 | I | II-11 | II-3a | II-42 |
| Q1-77 | I | II-11 | II-4a | II-42 |
| Q1-78 | I | II-11 | II-5a | II-42 |
| Q1-79 | I | II-16 | II-21 | II-42 |
| Q1-80 | I | II-16 | II-26 | II-42 |
| Q1-81 | I | II-16 | II-32 | II-42 |
| Q1-82 | I | II-16 | II-37 | II-42 |
| Q1-83 | I | II-16 | II-39 | II-42 |
| Q1-84 | I | II-16 | II-50 | II-42 |
| Q1-85 | I | II-16 | II-62 | II-42 |
| Q1-86 | I | II-16 | II-76 | II-42 |
| Q1-87 | I | II-16 | II-78 | II-42 |
| Q1-88 | I | II-16 | II-84 | II-42 |
| Q1-89 | I | II-16 | II-86 | II-42 |
| Q1-90 | I | II-16 | II-92 | II-42 |
| Q1-91 | I | II-16 | II-1a | II-42 |
| Q1-92 | I | II-16 | II-2a | II-42 |
| Q1-93 | I | II-16 | II-3a | II-42 |
| Q1-94 | I | II-16 | II-4a | II-42 |
| Q1-95 | I | II-16 | II-5a | II-42 |
| Q1-96 | I | II-21 | II-26 | II-42 |
| Q1-97 | I | II-21 | II-32 | II-42 |
| Q1-98 | I | II-21 | II-37 | II-42 |
| Q1-99 | I | II-21 | II-39 | II-42 |
| Q1-100 | I | II-21 | II-50 | II-42 |
| Q1-101 | I | II-21 | II-62 | II-42 |
| Q1-102 | I | II-21 | II-76 | II-42 |
| Q1-103 | I | II-21 | II-78 | II-42 |
| Q1-104 | I | II-21 | II-84 | II-42 |
| Q1-105 | I | II-21 | II-86 | II-42 |
| Q1-106 | I | II-21 | II-92 | II-42 |
| Q1-107 | I | II-21 | II-1a | II-42 |
| Q1-108 | I | II-21 | II-2a | II-42 |
| Q1-109 | I | II-21 | II-3a | II-42 |
| Q1-110 | I | II-21 | II-4a | II-42 |
| Q1-111 | I | II-21 | II-5a | II-42 |
| Q1-112 | I | II-26 | II-32 | II-42 |

| composition | I | II' | III | IV |
|---|---|---|---|---|
| Q1-113 | I | II-26 | II-37 | II-42 |
| Q1-114 | I | II-26 | II-39 | II-42 |
| Q1-115 | I | II-26 | II-50 | II-42 |
| Q1-116 | I | II-26 | II-62 | II-42 |
| Q1-117 | I | II-26 | II-76 | II-42 |
| Q1-118 | I | II-26 | II-78 | II-42 |
| Q1-119 | I | II-26 | II-84 | II-42 |
| Q1-120 | I | II-26 | II-86 | II-42 |
| Q1-121 | I | II-26 | II-92 | II-42 |
| Q1-122 | I | II-26 | II-1a | II-42 |
| Q1-123 | I | II-26 | II-2a | II-42 |
| Q1-124 | I | II-26 | II-3a | II-42 |
| Q1-125 | I | II-26 | II-4a | II-42 |
| Q1-126 | I | II-26 | II-5a | II-42 |
| Q1-127 | I | II-32 | II-37 | II-42 |
| Q1-128 | I | II-32 | II-39 | II-42 |
| Q1-129 | I | II-32 | II-50 | II-42 |
| Q1-130 | I | II-32 | II-62 | II-42 |
| Q1-131 | I | II-32 | II-76 | II-42 |
| Q1-132 | I | II-32 | II-78 | II-42 |
| Q1-133 | I | II-32 | II-84 | II-42 |
| Q1-134 | I | II-32 | II-86 | II-42 |
| Q1-135 | I | II-32 | II-92 | II-42 |
| Q1-136 | I | II-32 | II-1a | II-42 |
| Q1-137 | I | II-32 | II-2a | II-42 |
| Q1-138 | I | II-32 | II-3a | II-42 |
| Q1-139 | I | II-32 | II-4a | II-42 |
| Q1-140 | I | II-32 | II-5a | II-42 |
| Q1-141 | I | II-37 | II-39 | II-42 |
| Q1-142 | I | II-37 | II-50 | II-42 |
| Q1-143 | I | II-37 | II-62 | II-42 |
| Q1-144 | I | II-37 | II-76 | II-42 |
| Q1-145 | I | II-37 | II-78 | II-42 |
| Q1-146 | I | II-37 | II-84 | II-42 |
| Q1-147 | I | II-37 | II-86 | II-42 |
| Q1-148 | I | II-37 | II-92 | II-42 |
| Q1-149 | I | II-37 | II-1a | II-42 |
| Q1-150 | I | II-37 | II-2a | II-42 |
| Q1-151 | I | II-37 | II-3a | II-42 |
| Q1-152 | I | II-37 | II-4a | II-42 |

| composition | I | II' | III | IV |
|---|---|---|---|---|
| Q1-153 | I | II-37 | II-5a | II-42 |
| Q1-154 | I | II-39 | II-50 | II-42 |
| Q1-155 | I | II-39 | II-62 | II-42 |
| Q1-156 | I | II-39 | II-76 | II-42 |
| Q1-157 | I | II-39 | II-78 | II-42 |
| Q1-158 | I | II-39 | II-84 | II-42 |
| Q1-159 | I | II-39 | II-86 | II-42 |
| Q1-160 | I | II-39 | II-92 | II-42 |
| Q1-161 | I | II-39 | II-1a | II-42 |
| Q1-162 | I | II-39 | II-2a | II-42 |
| Q1-163 | I | II-39 | II-3a | II-42 |
| Q1-164 | I | II-39 | II-4a | II-42 |
| Q1-165 | I | II-39 | II-5a | II-42 |
| Q1-166 | I | II-50 | II-62 | II-42 |
| Q1-167 | I | II-50 | II-76 | II-42 |
| Q1-168 | I | II-50 | II-78 | II-42 |
| Q1-169 | I | II-50 | II-84 | II-42 |
| Q1-170 | I | II-50 | II-86 | II-42 |
| Q1-171 | I | II-50 | II-92 | II-42 |
| Q1-172 | I | II-50 | II-1a | II-42 |
| Q1-173 | I | II-50 | II-2a | II-42 |
| Q1-174 | I | II-50 | II-3a | II-42 |
| Q1-175 | I | II-50 | II-4a | II-42 |
| Q1-176 | I | II-50 | II-5a | II-42 |
| Q1-177 | I | II-62 | II-76 | II-42 |
| Q1-178 | I | II-62 | II-78 | II-42 |
| Q1-179 | I | II-62 | II-84 | II-42 |
| Q1-180 | I | II-62 | II-86 | II-42 |
| Q1-181 | I | II-62 | II-92 | II-42 |
| Q1-182 | I | II-62 | II-1a | II-42 |
| Q1-183 | I | II-62 | II-2a | II-42 |
| Q1-184 | I | II-62 | II-3a | II-42 |
| Q1-185 | I | II-62 | II-4a | II-42 |
| Q1-186 | I | II-62 | II-5a | II-42 |
| Q1-187 | I | II-76 | II-78 | II-42 |
| Q1-188 | I | II-76 | II-84 | II-42 |
| Q1-189 | I | II-76 | II-86 | II-42 |
| Q1-190 | I | II-76 | II-92 | II-42 |
| Q1-191 | I | II-76 | II-1a | II-42 |
| Q1-192 | I | II-76 | II-2a | II-42 |

| composition | I | II' | III | IV |
|---|---|---|---|---|
| Q1-193 | I | II-76 | II-3a | II-42 |
| Q1-194 | I | II-76 | II-4a | II-42 |
| Q1-195 | I | II-76 | II-5a | II-42 |
| Q1-196 | I | II-78 | II-84 | II-42 |
| Q1-197 | I | II-78 | II-86 | II-42 |
| Q1-198 | I | II-78 | II-92 | II-42 |
| Q1-199 | I | II-78 | II-1a | II-42 |
| Q1-200 | I | II-78 | II-2a | II-42 |
| Q1-201 | I | II-78 | II-3a | II-42 |
| Q1-202 | I | II-78 | II-4a | II-42 |
| Q1-203 | I | II-78 | II-5a | II-42 |
| Q1-204 | I | II-84 | II-86 | II-42 |
| Q1-205 | I | II-84 | II-92 | II-42 |
| Q1-206 | I | II-84 | II-1a | II-42 |
| Q1-207 | I | II-84 | II-2a | II-42 |
| Q1-208 | I | II-84 | II-3a | II-42 |
| Q1-209 | I | II-84 | II-4a | II-42 |
| Q1-210 | I | II-84 | II-5a | II-42 |
| Q1-211 | I | II-86 | II-92 | II-42 |
| Q1-212 | I | II-86 | II-1a | II-42 |
| Q1-213 | I | II-86 | II-2a | II-42 |
| Q1-214 | I | II-86 | II-3a | II-42 |
| Q1-215 | I | II-86 | II-4a | II-42 |
| Q1-216 | I | II-86 | II-5a | II-42 |
| Q1-217 | I | II-92 | II-1a | II-42 |
| Q1-218 | I | II-92 | II-2a | II-42 |
| Q1-219 | I | II-92 | II-3a | II-42 |
| Q1-220 | I | II-92 | II-4a | II-42 |
| Q1-221 | I | II-92 | II-5a | II-42 |
| Q1-222 | I | II-1a | II-2a | II-42 |
| Q1-223 | I | II-1a | II-3a | II-42 |
| Q1-224 | I | II-1a | II-4a | II-42 |
| Q1-225 | I | II-1a | II-5a | II-42 |
| Q1-226 | I | II-2a | II-3a | II-42 |
| Q1-227 | I | II-2a | II-4a | II-42 |
| Q1-228 | I | II-2a | II-5a | II-42 |
| Q1-229 | I | II-3a | II-4a | II-42 |
| Q1-230 | I | II-3a | II-5a | II-42 |
| Q1-231 | I | II-4a | II-5a | II-42 |
| Q1-232 | I | II-3 | II-6 | II-66 |

| composition | I | II' | III | IV |
|---|---|---|---|---|
| Q1-233 | I | II-3 | II-8 | II-66 |
| Q1-234 | I | II-3 | II-11 | II-66 |
| Q1-235 | I | II-3 | II-16 | II-66 |
| Q1-236 | I | II-3 | II-21 | II-66 |
| Q1-237 | I | II-3 | II-26 | II-66 |
| Q1-238 | I | II-3 | II-32 | II-66 |
| Q1-239 | I | II-3 | II-37 | II-66 |
| Q1-240 | I | II-3 | II-39 | II-66 |
| Q1-241 | I | II-3 | II-42 | II-66 |
| Q1-242 | I | II-3 | II-50 | II-66 |
| Q1-243 | I | II-3 | II-62 | II-66 |
| Q1-244 | I | II-3 | II-76 | II-66 |
| Q1-245 | I | II-3 | II-78 | II-66 |
| Q1-246 | I | II-3 | II-84 | II-66 |
| Q1-247 | I | II-3 | II-86 | II-66 |
| Q1-248 | I | II-3 | II-92 | II-66 |
| Q1-249 | I | II-3 | II-1a | II-66 |
| Q1-250 | I | II-3 | II-2a | II-66 |
| Q1-251 | I | II-3 | II-3a | II-66 |
| Q1-252 | I | II-3 | II-4a | II-66 |
| Q1-253 | I | II-3 | II-5a | II-66 |
| Q1-254 | I | II-6 | II-8 | II-66 |
| Q1-255 | I | II-6 | II-11 | II-66 |
| Q1-256 | I | II-6 | II-16 | II-66 |
| Q1-257 | I | II-6 | II-21 | II-66 |
| Q1-258 | I | II-6 | II-26 | II-66 |
| Q1-259 | I | II-6 | II-32 | II-66 |
| Q1-260 | I | II-6 | II-37 | II-66 |
| Q1-261 | I | II-6 | II-39 | II-66 |
| Q1-262 | I | II-6 | II-42 | II-66 |
| Q1-263 | I | II-6 | II-50 | II-66 |
| Q1-264 | I | II-6 | II-62 | II-66 |
| Q1-265 | I | II-6 | II-76 | II-66 |
| Q1-266 | I | II-6 | II-78 | II-66 |
| Q1-267 | I | II-6 | II-84 | II-66 |
| Q1-268 | I | II-6 | II-86 | II-66 |
| Q1-269 | I | II-6 | II-92 | II-66 |
| Q1-270 | I | II-6 | II-1a | II-66 |
| Q1-271 | I | II-6 | II-2a | II-66 |
| Q1-272 | I | II-6 | II-3a | II-66 |

| composition | I | II' | III | IV |
|---|---|---|---|---|
| Q1-273 | I | II-6 | II-4a | II-66 |
| Q1-274 | I | II-6 | II-5a | II-66 |
| Q1-275 | I | II-8 | II-11 | II-66 |
| Q1-276 | I | II-8 | II-16 | II-66 |
| Q1-277 | I | II-8 | II-21 | II-66 |
| Q1-278 | I | II-8 | II-26 | II-66 |
| Q1-279 | I | II-8 | II-32 | II-66 |
| Q1-280 | I | II-8 | II-37 | II-66 |
| Q1-281 | I | II-8 | II-39 | II-66 |
| Q1-282 | I | II-8 | II-42 | II-66 |
| Q1-283 | I | II-8 | II-50 | II-66 |
| Q1-284 | I | II-8 | II-62 | II-66 |
| Q1-285 | I | II-8 | II-76 | II-66 |
| Q1-286 | I | II-8 | II-78 | II-66 |
| Q1-287 | I | II-8 | II-84 | II-66 |
| Q1-288 | I | II-8 | II-86 | II-66 |
| Q1-289 | I | II-8 | II-92 | II-66 |
| Q1-290 | I | II-8 | II-1a | II-66 |
| Q1-291 | I | II-8 | II-2a | II-66 |
| Q1-292 | I | II-8 | II-3a | II-66 |
| Q1-293 | I | II-8 | II-4a | II-66 |
| Q1-294 | I | II-8 | II-5a | II-66 |
| Q1-295 | I | II-11 | II-16 | II-66 |
| Q1-296 | I | II-11 | II-21 | II-66 |
| Q1-297 | I | II-11 | II-26 | II-66 |
| Q1-298 | I | II-11 | II-32 | II-66 |
| Q1-299 | I | II-11 | II-37 | II-66 |
| Q1-300 | I | II-11 | II-39 | II-66 |
| Q1-301 | I | II-11 | II-42 | II-66 |
| Q1-302 | I | II-11 | II-50 | II-66 |
| Q1-303 | I | II-11 | II-62 | II-66 |
| Q1-304 | I | II-11 | II-76 | II-66 |
| Q1-305 | I | II-11 | II-78 | II-66 |
| Q1-306 | I | II-11 | II-84 | II-66 |
| Q1-307 | I | II-11 | II-86 | II-66 |
| Q1-308 | I | II-11 | II-92 | II-66 |
| Q1-309 | I | II-11 | II-1a | II-66 |
| Q1-310 | I | II-11 | II-2a | II-66 |
| Q1-311 | I | II-11 | II-3a | II-66 |
| Q1-312 | I | II-11 | II-4a | II-66 |

| composition | I | II' | III | IV |
|---|---|---|---|---|
| Q1-313 | I | II-11 | II-5a | II-66 |
| Q1-314 | I | II-16 | II-21 | II-66 |
| Q1-315 | I | II-16 | II-26 | II-66 |
| Q1-316 | I | II-16 | II-32 | II-66 |
| Q1-317 | I | II-16 | II-37 | II-66 |
| Q1-318 | I | II-16 | II-39 | II-66 |
| Q1-319 | I | II-16 | II-42 | II-66 |
| Q1-320 | I | II-16 | II-50 | II-66 |
| Q1-321 | I | II-16 | II-62 | II-66 |
| Q1-322 | I | II-16 | II-76 | II-66 |
| Q1-323 | I | II-16 | II-78 | II-66 |
| Q1-324 | I | II-16 | II-84 | II-66 |
| Q1-325 | I | II-16 | II-86 | II-66 |
| Q1-326 | I | II-16 | II-92 | II-66 |
| Q1-327 | I | II-16 | II-1a | II-66 |
| Q1-328 | I | II-16 | II-2a | II-66 |
| Q1-329 | I | II-16 | II-3a | II-66 |
| Q1-330 | I | II-16 | II-4a | II-66 |
| Q1-331 | I | II-16 | II-5a | II-66 |
| Q1-332 | I | II-21 | II-26 | II-66 |
| Q1-333 | I | II-21 | II-32 | II-66 |
| Q1-334 | I | II-21 | II-37 | II-66 |
| Q1-335 | I | II-21 | II-39 | II-66 |
| Q1-336 | I | II-21 | II-42 | II-66 |
| Q1-337 | I | II-21 | II-50 | II-66 |
| Q1-338 | I | II-21 | II-62 | II-66 |
| Q1-339 | I | II-21 | II-76 | II-66 |
| Q1-340 | I | II-21 | II-78 | II-66 |
| Q1-341 | I | II-21 | II-84 | II-66 |
| Q1-342 | I | II-21 | II-86 | II-66 |
| Q1-343 | I | II-21 | II-92 | II-66 |
| Q1-344 | I | II-21 | II-1a | II-66 |
| Q1-345 | I | II-21 | II-2a | II-66 |
| Q1-346 | I | II-21 | II-3a | II-66 |
| Q1-347 | I | II-21 | II-4a | II-66 |
| Q1-348 | I | II-21 | II-5a | II-66 |
| Q1-349 | I | II-26 | II-32 | II-66 |
| Q1-350 | I | II-26 | II-37 | II-66 |
| Q1-351 | I | II-26 | II-39 | II-66 |
| Q1-352 | I | II-26 | II-42 | II-66 |

| composition | I | II' | III | IV |
|---|---|---|---|---|
| Q1-353 | I | II-26 | II-50 | II-66 |
| Q1-354 | I | II-26 | II-62 | II-66 |
| Q1-355 | I | II-26 | II-76 | II-66 |
| Q1-356 | I | II-26 | II-78 | II-66 |
| Q1-357 | I | II-26 | II-84 | II-66 |
| Q1-358 | I | II-26 | II-86 | II-66 |
| Q1-359 | I | II-26 | II-92 | II-66 |
| Q1-360 | I | II-26 | II-1a | II-66 |
| Q1-361 | I | II-26 | II-2a | II-66 |
| Q1-362 | I | II-26 | II-3a | II-66 |
| Q1-363 | I | II-26 | II-4a | II-66 |
| Q1-364 | I | II-26 | II-5a | II-66 |
| Q1-365 | I | II-32 | II-37 | II-66 |
| Q1-366 | I | II-32 | II-39 | II-66 |
| Q1-367 | I | II-32 | II-42 | II-66 |
| Q1-368 | I | II-32 | II-50 | II-66 |
| Q1-369 | I | II-32 | II-62 | II-66 |
| Q1-370 | I | II-32 | II-76 | II-66 |
| Q1-371 | I | II-32 | II-78 | II-66 |
| Q1-372 | I | II-32 | II-84 | II-66 |
| Q1-373 | I | II-32 | II-86 | II-66 |
| Q1-374 | I | II-32 | II-92 | II-66 |
| Q1-375 | I | II-32 | II-1a | II-66 |
| Q1-376 | I | II-32 | II-2a | II-66 |
| Q1-377 | I | II-32 | II-3a | II-66 |
| Q1-378 | I | II-32 | II-4a | II-66 |
| Q1-379 | I | II-32 | II-5a | II-66 |
| Q1-380 | I | II-37 | II-39 | II-66 |
| Q1-381 | I | II-37 | II-42 | II-66 |
| Q1-382 | I | II-37 | II-50 | II-66 |
| Q1-383 | I | II-37 | II-62 | II-66 |
| Q1-384 | I | II-37 | II-76 | II-66 |
| Q1-385 | I | II-37 | II-78 | II-66 |
| Q1-386 | I | II-37 | II-84 | II-66 |
| Q1-387 | I | II-37 | II-86 | II-66 |
| Q1-388 | I | II-37 | II-92 | II-66 |
| Q1-389 | I | II-37 | II-1a | II-66 |
| Q1-390 | I | II-37 | II-2a | II-66 |
| Q1-391 | I | II-37 | II-3a | II-66 |
| Q1-392 | I | II-37 | II-4a | II-66 |

| composition | I | II' | III | IV |
|---|---|---|---|---|
| Q1-393 | I | II-37 | II-5a | II-66 |
| Q1-394 | I | II-39 | II-42 | II-66 |
| Q1-395 | I | II-39 | II-50 | II-66 |
| Q1-396 | I | II-39 | II-62 | II-66 |
| Q1-397 | I | II-39 | II-76 | II-66 |
| Q1-398 | I | II-39 | II-78 | II-66 |
| Q1-399 | I | II-39 | II-84 | II-66 |
| Q1-400 | I | II-39 | II-86 | II-66 |
| Q1-401 | I | II-39 | II-92 | II-66 |
| Q1-402 | I | II-39 | II-1a | II-66 |
| Q1-403 | I | II-39 | II-2a | II-66 |
| Q1-404 | I | II-39 | II-3a | II-66 |
| Q1-405 | I | II-39 | II-4a | II-66 |
| Q1-406 | I | II-39 | II-5a | II-66 |
| Q1-407 | I | II-42 | II-50 | II-66 |
| Q1-408 | I | II-42 | II-62 | II-66 |
| Q1-409 | I | II-42 | II-76 | II-66 |
| Q1-410 | I | II-42 | II-78 | II-66 |
| Q1-411 | I | II-42 | II-84 | II-66 |
| Q1-412 | I | II-42 | II-86 | II-66 |
| Q1-413 | I | II-42 | II-92 | II-66 |
| Q1-414 | I | II-42 | II-1a | II-66 |
| Q1-415 | I | II-42 | II-2a | II-66 |
| Q1-416 | I | II-42 | II-3a | II-66 |
| Q1-417 | I | II-42 | II-4a | II-66 |
| Q1-418 | I | II-42 | II-5a | II-66 |
| Q1-419 | I | II-50 | II-62 | II-66 |
| Q1-420 | I | II-50 | II-76 | II-66 |
| Q1-421 | I | II-50 | II-78 | II-66 |
| Q1-422 | I | II-50 | II-84 | II-66 |
| Q1-423 | I | II-50 | II-86 | II-66 |
| Q1-424 | I | II-50 | II-92 | II-66 |
| Q1-425 | I | II-50 | II-1a | II-66 |
| Q1-426 | I | II-50 | II-2a | II-66 |
| Q1-427 | I | II-50 | II-3a | II-66 |
| Q1-428 | I | II-50 | II-4a | II-66 |
| Q1-429 | I | II-50 | II-5a | II-66 |
| Q1-430 | I | II-62 | II-76 | II-66 |
| Q1-431 | I | II-62 | II-78 | II-66 |
| Q1-432 | I | II-62 | II-84 | II-66 |

| composition | I | II' | III | IV |
|---|---|---|---|---|
| Q1-433 | I | II-62 | II-86 | II-66 |
| Q1-434 | I | II-62 | II-92 | II-66 |
| Q1-435 | I | II-62 | II-1a | II-66 |
| Q1-436 | I | II-62 | II-2a | II-66 |
| Q1-437 | I | II-62 | II-3a | II-66 |
| Q1-438 | I | II-62 | II-4a | II-66 |
| Q1-439 | I | II-62 | II-5a | II-66 |
| Q1-440 | I | II-76 | II-78 | II-66 |
| Q1-441 | I | II-76 | II-84 | II-66 |
| Q1-442 | I | II-76 | II-86 | II-66 |
| Q1-443 | I | II-76 | II-92 | II-66 |
| Q1-444 | I | II-76 | II-1a | II-66 |
| Q1-445 | I | II-76 | II-2a | II-66 |
| Q1-446 | I | II-76 | II-3a | II-66 |
| Q1-447 | I | II-76 | II-4a | II-66 |
| Q1-448 | I | II-76 | II-5a | II-66 |
| Q1-449 | I | II-78 | II-84 | II-66 |
| Q1-450 | I | II-78 | II-86 | II-66 |
| Q1-451 | I | II-78 | II-92 | II-66 |
| Q1-452 | I | II-78 | II-1a | II-66 |
| Q1-453 | I | II-78 | II-2a | II-66 |
| Q1-454 | I | II-78 | II-3a | II-66 |
| Q1-455 | I | II-78 | II-4a | II-66 |
| Q1-456 | I | II-78 | II-5a | II-66 |
| Q1-457 | I | II-84 | II-86 | II-66 |
| Q1-458 | I | II-84 | II-92 | II-66 |
| Q1-459 | I | II-84 | II-1a | II-66 |
| Q1-460 | I | II-84 | II-2a | II-66 |
| Q1-461 | I | II-84 | II-3a | II-66 |
| Q1-462 | I | II-84 | II-4a | II-66 |
| Q1-463 | I | II-84 | II-5a | II-66 |
| Q1-464 | I | II-86 | II-92 | II-66 |
| Q1-465 | I | II-86 | II-1a | II-66 |
| Q1-466 | I | II-86 | II-2a | II-66 |
| Q1-467 | I | II-86 | II-3a | II-66 |
| Q1-468 | I | II-86 | II-4a | II-66 |
| Q1-469 | I | II-86 | II-5a | II-66 |
| Q1-470 | I | II-92 | II-1a | II-66 |
| Q1-471 | I | II-92 | II-2a | II-66 |
| Q1-472 | I | II-92 | II-3a | II-66 |

| composition | I | II' | III | IV |
|---|---|---|---|---|
| Q1-473 | I | II-92 | II-4a | II-66 |
| Q1-474 | I | II-92 | II-5a | II-66 |
| Q1-475 | I | II-1a | II-2a | II-66 |
| Q1-476 | I | II-1a | II-3a | II-66 |
| Q1-477 | I | II-1a | II-4a | II-66 |
| Q1-478 | I | II-1a | II-5a | II-66 |
| Q1-479 | I | II-2a | II-3a | II-66 |
| Q1-480 | I | II-2a | II-4a | II-66 |
| Q1-481 | I | II-2a | II-5a | II-66 |
| Q1-482 | I | II-3a | II-4a | II-66 |
| Q1-483 | I | II-3a | II-5a | II-66 |
| Q1-484 | I | II-4a | II-5a | II-66 |

Further particularly preferred compositions are the four-component compositions, wherein component I is as defined above, and components II', III and IV are selected from the following fungicides

| | | | |
|---|---|---|---|
| II-6 | bixafen | II-62 | metrafenone |
| II-11 | chlorothalonil | II-76 | propiconazole |
| II-15 | cyproconazole | II-78 | prothioconazole |
| II-26 | epoxiconazole | II-84 | spiroxamine |
| II-32 | fenpropimorph | II-86 | tebuconazole |

wherein components II', III and IV are different active compounds.

Specifically preferred embodiments of these compositions are compiled in Table Q2, where each row corresponds to one embodiment of the compositions according to the invention, i.e. one specific individualized four-component composition. According to one specific aspect, these are quarternary compositions which each only contain these four components as the active compound. Furthermore, also every combination of the compositions individualized in this table represent embodiments of the present invention.

Table Q2: Four-component compositions comprising component I and fungicidal compounds as components II', III and IV.

| composition | I | II' | III | IV |
|---|---|---|---|---|
| Q2-1 | I | II-6 | II-11 | II-15 |
| Q2-2 | I | II-6 | II-11 | II-26 |
| Q2-3 | I | II-6 | II-11 | II-32 |
| Q2-4 | I | II-6 | II-11 | II-62 |
| Q2-5 | I | II-6 | II-11 | II-76 |
| Q2-6 | I | II-6 | II-11 | II-78 |
| Q2-7 | I | II-6 | II-11 | II-84 |
| Q2-8 | I | II-6 | II-11 | II-86 |
| Q2-9 | I | II-6 | II-15 | II-26 |
| Q2-10 | I | II-6 | II-15 | II-32 |
| Q2-11 | I | II-6 | II-15 | II-62 |
| Q2-12 | I | II-6 | II-15 | II-76 |
| Q2-13 | I | II-6 | II-15 | II-78 |
| Q2-14 | I | II-6 | II-15 | II-84 |
| Q2-15 | I | II-6 | II-15 | II-86 |
| Q2-16 | I | II-6 | II-26 | II-32 |
| Q2-17 | I | II-6 | II-26 | II-62 |
| Q2-18 | I | II-6 | II-26 | II-76 |
| Q2-19 | I | II-6 | II-26 | II-78 |
| Q2-20 | I | II-6 | II-26 | II-84 |
| Q2-21 | I | II-6 | II-26 | II-86 |
| Q2-22 | I | II-6 | II-32 | II-62 |

| composition | I | II' | III | IV |
|---|---|---|---|---|
| Q2-23 | I | II-6 | II-32 | II-76 |
| Q2-24 | I | II-6 | II-32 | II-78 |
| Q2-25 | I | II-6 | II-32 | II-84 |
| Q2-26 | I | II-6 | II-32 | II-86 |
| Q2-27 | I | II-6 | II-62 | II-76 |
| Q2-28 | I | II-6 | II-62 | II-78 |
| Q2-29 | I | II-6 | II-62 | II-84 |
| Q2-30 | I | II-6 | II-62 | II-86 |
| Q2-31 | I | II-6 | II-76 | II-78 |
| Q2-32 | I | II-6 | II-76 | II-84 |
| Q2-33 | I | II-6 | II-76 | II-86 |
| Q2-34 | I | II-6 | II-78 | II-84 |
| Q2-35 | I | II-6 | II-78 | II-86 |
| Q2-36 | I | II-6 | II-84 | II-86 |
| Q2-37 | I | II-11 | II-15 | II-26 |
| Q2-38 | I | II-11 | II-15 | II-32 |
| Q2-39 | I | II-11 | II-15 | II-62 |
| Q2-40 | I | II-11 | II-15 | II-76 |
| Q2-41 | I | II-11 | II-15 | II-78 |
| Q2-42 | I | II-11 | II-15 | II-84 |
| Q2-43 | I | II-11 | II-15 | II-86 |
| Q2-44 | I | II-11 | II-26 | II-32 |
| Q2-45 | I | II-11 | II-26 | II-62 |
| Q2-46 | I | II-11 | II-26 | II-76 |
| Q2-47 | I | II-11 | II-26 | II-78 |
| Q2-48 | I | II-11 | II-26 | II-84 |
| Q2-49 | I | II-11 | II-26 | II-86 |
| Q2-50 | I | II-11 | II-32 | II-62 |
| Q2-51 | I | II-11 | II-32 | II-76 |
| Q2-52 | I | II-11 | II-32 | II-78 |
| Q2-53 | I | II-11 | II-32 | II-84 |
| Q2-54 | I | II-11 | II-32 | II-86 |
| Q2-55 | I | II-11 | II-62 | II-76 |
| Q2-56 | I | II-11 | II-62 | II-78 |
| Q2-57 | I | II-11 | II-62 | II-84 |
| Q2-58 | I | II-11 | II-62 | II-86 |
| Q2-59 | I | II-11 | II-76 | II-78 |
| Q2-60 | I | II-11 | II-76 | II-84 |
| Q2-61 | I | II-11 | II-76 | II-86 |
| Q2-62 | I | II-11 | II-78 | II-84 |

| composition | I | II' | III | IV |
|---|---|---|---|---|
| Q2-63 | I | II-11 | II-78 | II-86 |
| Q2-64 | I | II-11 | II-84 | II-86 |
| Q2-65 | I | II-15 | II-26 | II-32 |
| Q2-66 | I | II-15 | II-26 | II-62 |
| Q2-67 | I | II-15 | II-26 | II-76 |
| Q2-68 | I | II-15 | II-26 | II-78 |
| Q2-69 | I | II-15 | II-26 | II-84 |
| Q2-70 | I | II-15 | II-26 | II-86 |
| Q2-71 | I | II-15 | II-32 | II-62 |
| Q2-72 | I | II-15 | II-32 | II-76 |
| Q2-73 | I | II-15 | II-32 | II-78 |
| Q2-74 | I | II-15 | II-32 | II-84 |
| Q2-75 | I | II-15 | II-32 | II-86 |
| Q2-76 | I | II-15 | II-62 | II-76 |
| Q2-77 | I | II-15 | II-62 | II-78 |
| Q2-78 | I | II-15 | II-62 | II-84 |
| Q2-79 | I | II-15 | II-62 | II-86 |
| Q2-80 | I | II-15 | II-76 | II-78 |
| Q2-81 | I | II-15 | II-76 | II-84 |
| Q2-82 | I | II-15 | II-76 | II-86 |
| Q2-83 | I | II-15 | II-78 | II-84 |
| Q2-84 | I | II-15 | II-78 | II-86 |
| Q2-85 | I | II-15 | II-84 | II-86 |
| Q2-86 | I | II-26 | II-32 | II-62 |
| Q2-87 | I | II-26 | II-32 | II-76 |
| Q2-88 | I | II-26 | II-32 | II-78 |
| Q2-89 | I | II-26 | II-32 | II-84 |
| Q2-90 | I | II-26 | II-32 | II-86 |
| Q2-91 | I | II-26 | II-62 | II-76 |
| Q2-92 | I | II-26 | II-62 | II-78 |
| Q2-93 | I | II-26 | II-62 | II-84 |
| Q2-94 | I | II-26 | II-62 | II-86 |
| Q2-95 | I | II-26 | II-76 | II-78 |
| Q2-96 | I | II-26 | II-76 | II-84 |
| Q2-97 | I | II-26 | II-76 | II-86 |
| Q2-98 | I | II-26 | II-78 | II-84 |
| Q2-99 | I | II-26 | II-78 | II-86 |
| Q2-100 | I | II-26 | II-84 | II-86 |
| Q2-101 | I | II-32 | II-62 | II-76 |
| Q2-102 | I | II-32 | II-62 | II-78 |

| composition | I | II’ | III | IV | composition | I | II’ | III | IV |
|---|---|---|---|---|---|---|---|---|---|
| Q2-103 | I | II-32 | II-62 | II-84 | Q2-112 | I | II-62 | II-76 | II-84 |
| Q2-104 | I | II-32 | II-62 | II-86 | Q2-113 | I | II-62 | II-76 | II-86 |
| Q2-105 | I | II-32 | II-76 | II-78 | Q2-114 | I | II-62 | II-78 | II-84 |
| Q2-106 | I | II-32 | II-76 | II-84 | Q2-115 | I | II-62 | II-78 | II-86 |
| Q2-107 | I | II-32 | II-76 | II-86 | Q2-116 | I | II-62 | II-84 | II-86 |
| Q2-108 | I | II-32 | II-78 | II-84 | Q2-117 | I | II-76 | II-78 | II-84 |
| Q2-109 | I | II-32 | II-78 | II-86 | Q2-118 | I | II-76 | II-78 | II-86 |
| Q2-110 | I | II-32 | II-84 | II-86 | Q2-119 | I | II-76 | II-84 | II-86 |
| Q2-111 | I | II-62 | II-76 | II-78 | Q2-120 | I | II-78 | II-84 | II-86 |

Further particularly preferred compositions are the four-component compositions, wherein component I is as defined above, and components II’, III and IV are selected from the following growth regulators

| | | | |
|---|---|---|---|
| II-1a | mepiquat chloride | II-4a | prohexadione-calcium |
| II-2a | chlormequat chloride | II-5a | ethophon |
| II-3a | trinexapac-ethyl | | |

wherein components II’, III and IV are different active compounds.

Specifically preferred embodiments of these compositions are compiled in Table Q3, where each row corresponds to one embodiment of the compositions according to the invention, i.e. one specific individualized four-component composition. According to one specific aspect, these are quarternary compositions which each only contain these four components as the active compound. Furthermore, also every combination of the compositions individualized in this table represent embodiments of the present invention.

Table Q3: Four-component compositions comprising component I and growth regulators as components II’, III and IV.

| composition | I | II’ | III | IV | composition | I | II’ | III | IV |
|---|---|---|---|---|---|---|---|---|---|
| Q3-1 | I | II-1a | II-2a | II-3a | Q3-6 | I | II-1a | II-4a | II-5a |
| Q3-2 | I | II-1a | II-2a | II-4a | Q3-7 | I | II-2a | II-3a | II-4a |
| Q3-3 | I | II-1a | II-2a | II-5a | Q3-8 | I | II-2a | II-3a | II-5a |
| Q3-4 | I | II-1a | II-3a | II-4a | Q3-9 | I | II-2a | II-4a | II-5a |
| Q3-5 | I | II-1a | II-3a | II-5a | Q3-10 | I | II-3a | II-4a | II-5a |

Further particularly preferred compositions are the four-component compositions, wherein component I is as defined above, components II’ is selected from the following fungicides

| | | | |
|---|---|---|---|
| II-3 | azoxystrobin | II-66 | pyraclostrobin |
| II-42 | fluxapyroxad | II-72 | penthiopyrad |
| II-53 | kresoxim-methyl | II-92 | trifloxystrobin |

and component III is selected from the group of the following compounds:

| | |
|---|---|
| II-11c | clothianidin |
| II-24c | imidacloprid |
| II-42c | thiamethoxam, |

and component IV is fipronil (compound II-20c).

Specifically preferred embodiments of these compositions are compiled in Table Q4, where each row corresponds to one embodiment of the compositions according to the invention, i.e. one specific individualized four-component composition. According to one specific aspect, these are quarternary compositions which each only contain these four components as the active compound. Furthermore, also every combination of the compositions individualized in this table represent embodiments of the present invention.

Table Q4: Four-component compositions comprising component I, a particular fungicide as component II' and specific insecticides as components III and IV.

| composition | I | II' | III | IV | | composition | I | II' | III | IV |
|---|---|---|---|---|---|---|---|---|---|---|
| Q4-1 | I | II-3 | II-11c | II-20c | | Q4-10 | I | II-66 | II-11c | II-20c |
| Q4-2 | I | II-3 | II-24c | II-20c | | Q4-11 | I | II-66 | II-24c | II-20c |
| Q4-3 | I | II-3 | II-42c | II-20c | | Q4-12 | I | II-66 | II-42c | II-20c |
| Q4-4 | I | II-42 | II-11c | II-20c | | Q4-13 | I | II-72 | II-11c | II-20c |
| Q4-5 | I | II-42 | II-24c | II-20c | | Q4-14 | I | II-72 | II-24c | II-20c |
| Q4-6 | I | II-42 | II-42c | II-20c | | Q4-15 | I | II-72 | II-42c | II-20c |
| Q4-7 | I | II-53 | II-11c | II-20c | | Q4-16 | I | II-92 | II-11c | II-20c |
| Q4-8 | I | II-53 | II-24c | II-20c | | Q4-17 | I | II-92 | II-24c | II-20c |
| Q4-9 | I | II-53 | II-42c | II-20c | | Q4-18 | I | II-92 | II-42c | II-20c |

A further aspect of the invention are compositions comprising more than four active ingredients, such as, in particular five-component-compositions. In addition to the four components I, II', III and IV as detailed above, these inventive compositions comprise a component V. Component V is seleceted from any one of groups A'), B'), C), D), E'), F') and G) to O). Any further active components, such as component V, is, if desired, added in a ratio of from 20:1 to 1:20, in particular 10:1 to 1:10, more particularly 3:1 to 1:3, to the compound I.

According to one embodiment of the five-component compositions, the components I, II', III and IV are as defined and preferably defined above, and component V is selected from any one of groups A'), B'), C), D), E'), F') and G) to K).

One specific embodiment relates to five-component compositions, wherein component I is as defined above, components II', III and IV are as defined above and preferably defined above, and component V is selected from group A) of the respiration inhibitors. According to one embodiment thereof, component V is selected from the group of inhibitors of complex III at $Q_o$ site, in e.g. the strobilurins. Specifically, component V is selected from the group consisting of azoxystrobin, dimoxystrobin, fluoxastrobin, kresoxim-methyl, orysastrobin, picoxystrobin, pyraclostrobin, trifloxystrobin, famoxadone and fenamidone.

According to a further embodiment thereof, component V is selected from the group of inhibitors of complex II, e.g. carboxamides. Specifically, component V is selected from the group consisting of benzovindiflupyr, bixafen, boscalid, fluopyram, fluxapyroxad, isopyrazam, penflufen, penthiopyrad and sedaxane. According to a further embodiment, component V is selected from the group of ametotradin, cyazofamid, fluazinam, fentin salts such as fentin acetate.

One specific embodiment relates to five-component compositions, wherein component I is as defined above, components II', III and IV are as defined above and preferably defined above, and component V is selected from group B) of the sterol biosynthesis inhibitors (SBI fungicides). According to one embodiment thereof, component V is selected from the group of the C14 demethylase inhibitors (DMI fungicides), selected from cyproconazole, difenoconazole, epoxiconazole, fluquinconazole, flusilazole, flutriafol, metconazole, myclobutanil, penconazole, propiconazole, prothioconazole, triadimefon, triadimenol, tebuconazole, tetraconazole, triticonazole, prochloraz, fenarimol and triforine. According to a further embodiment thereof, component V is selected from the group of the delta14-reductase inhibitors, in particular dodemorph, fenpropimorph, tridemorph, fenpropidin and spiroxamine. According to a further embodiment thereof, component V is selected from the group of Inhibitors of 3-keto reductase such as fenhexamid.

According to a further embodiment of the five-component compositions, component I is as defined above, components II', III and IV are as defined above and preferably defined above, and component V is selected from group C) of the Nucleic acid synthesis inhibitors and particularly selected from metalaxyl, (metalaxyl-M) mefenoxam, ofurace.

According to a further embodiment of the five-component compositions, component I is as defined above, components II', III and IV are as defined above and preferably defined above, and component V selected from group D) of the inhibitors of cell division and cytoskeleton, such as benomyl, carbendazim, thiophanate-methyl, ethaboxam,

fluopicolide, zoxamide, metrafenone, pyriofenone, in particular ethaboxam, zoxamide and metrafenone.

According to a further embodiment of the five-component compositions, component I is as defined above, components II', III and IV are as defined above and preferably defined above, and component V is selected from group E) of the inhibitors of amino acid and protein synthesis, in particular selected from cyprodinil, mepanipyrim and pyrimethanil.

According to a further embodiment of the five-component compositions, component I is as defined above, components II', III and IV are as defined above and preferably defined above, and component V is selected from group F) of the signal transduction inhibitors, in particular selected from iprodione, fludioxonil, vinclozolin and quinoxyfen.

According to a further embodiment of the five-component compositions, component I is as defined above, components II', III and IV are as defined above and preferably defined above, and component V is selected from group G) of the lipid and membrane synthesis inhibitors, such as dimethomorph, flumorph, iprovalicarb, benthiavalicarb, mandipropamid and propamocarb.

According to a further embodiment of the five-component compositions, component I is as defined above, components II', III and IV are as defined above and preferably defined above, and component V is selected from group H) of the inhibitors with Multi Site Action, in particular selected from copper acetate, (tri)basic copper sulfate, copper oxychloride, copper sulfate, sulfur, mancozeb, metiram, propineb, thiram, captafol, folpet, chlorothalonil, dichlofluanid and dithianon.

According to a further embodiment of the five-component compositions, component I is as defined above, components II', III and IV are as defined above and preferably defined above, and component V is selected from group I) of the cell wall synthesis inhibitors, in particular selected from carpropamid and fenoxanil.

According to a further embodiment of the five-component compositions, component I is as defined above, components II', III and IV are as defined above and preferably defined above, and component V is selected from group J) of the plant defence inducers, in particular selected from acibenzolar-S-methyl, probenazole, tiadinil, fosetyl, fosetyl-aluminium, phosphorous acid and salts thereof such as potassium salt of phosphorous acid, sodium salt of phosphorous acid, calcium salt of phosphorous acid, lithium salt of phosphorous acid and aluminium salt of phosphorous acid.

According to a further embodiment of the five-component compositions, component I is as defined above, components II', III and IV are as defined above and preferably defined above, and component V s selected from group K), in particular selected from cymoxanil, proquinazid and *N*-methyl-2-{1-[(5-methyl-3-trifluoromethyl-1H-pyrazol-1-yl)-acetyl]-piperidin-4-yl}-*N*-[(1R)-1,2,3,4-tetrahydronaphthalen-1-yl]-4-thiazolecarboxamide.

According to a further embodiment of the five-component compositions, component I is as defined above, components II', III and IV are as defined above and preferably defined above, and component V is selected from any one of group L) (antifungal biocontrol agents and plant bioactivators), in particular selected from *Bacillus subtilis* strain NRRL No. B-21661, *Bacillus pumilus* strain NRRL No. B-30087 and *Ulocladium oudemansii.*

According to a further embodiment of the five-component compositions, component I is as defined above, components II', III and IV are as defined above and preferably defined above, and component V is selected from any one of group M) (growth regulators). According to one specific embodiment, the growth regulator is selected from chlormequat (chlormequat chloride), mepiquat (mepiquat chloride), paclobutrazole, prohexadione (prohexadione-calcium), trinexapac-ethyl and uniconazole.

According to a further embodiment of the five-component compositions, component I is as defined above, and components II', III and IV are as defined above and preferably defined above, and component V is selected from any one of group N) (herbicides).

According to a further embodiment of the five-component compositions, component I is as defined above, components II', III and IV are as defined above and preferably defined above, and component V is selected from any one of group O) (insecticides). According to one specific embodiment, the insecticide is selected from the group of the organo(thio)phosphates, in particular selected from the group consisting of acephate, chlorpyrifos, diazinon, dichlorvos, dimethoate, fenitrothion, methamidophos, methidathion, methyl-parathion, monocrotophos, phorate, profenofos and terbufos. According to a further specific embodiment, the insecticide is selected from the group of the carbamates, in particular selected from the group consisting of aldicarb, carbaryl, carbofuran, carbosulfan, methomyl and thiodicarb. According to a further specific embodiment, the insecticide is selected from the group of the pyrethroids, in particular selected from the group consisting of: bifenthrin, cyfluthrin, cypermethrin, alpha-cypermethrin, zeta-cypermethrin, deltamethrin, esfenvalerate, lambda-cyhalothrin and tefluthrin. According to still a further specific embodiment, the insecticide is selected from the group of insect growth regulators, in particular selected from the group consisting of lufenuron and spirotetramat. According to still a further specific embodiment, the insecticide is selected from the group of the nicotine receptor agonists/antagonists, in particular selected from the group consisting of: clothianidin, imidacloprid, thiamethoxam and thiacloprid. According to a further specific embodiment, the insecticide is selected from the group of the GABA antagonists, in particular selected from the group consisting of: endosulfan and fipronil. According to a further specific embodiment, the insecticide is selected from the group of the macrocyclic lactones, in particular selected from the group consisting of: abamectin, emamectin, spinosad and spinetoram. According to a further specific embodiment,

the insecticide is hydramethylnon. According to a further specific embodiment, the insecticide is fenbutatin oxide. According to a further specific embodiment, the insecticide is selected from the group consisting of chlorfenapyr, indoxacarb, metaflumizone, flonicamid, flubendiamide, cyazypyr (HGW86) and cyflumetofen.

The compositions according to the invention are suitable as fungicides. They are distinguished by an outstanding effectiveness against a broad spectrum of phytopathogenic fungi, including soil-borne fungi, which derive especially from the classes of the Plasmodiophoromycetes, Peronosporomycetes (syn. Oomycetes), Chytridiomycetes, Zygomycetes, Ascomycetes, Basidiomycetes and Deuteromycetes (syn. Fungi imperfecti). Some are systemically effective and they can be used in crop protection as foliar fungicides, fungicides for seed dressing and soil fungicides. Moreover, they are suitable for controlling harmful fungi, which inter alia occur in wood or roots of plants.

The compositions according to the invention are particularly important in the control of a multitude of phytopathogenic fungi on various cultivated plants, such as cereals, e. g. wheat, rye, barley, triticale, oats or rice; beet, e. g. sugar beet or fodder beet; fruits, such as pomes, stone fruits or soft fruits, e. g. apples, pears, plums, peaches, almonds, cherries, strawberries, raspberries, blackberries or gooseberries; leguminous plants, such as lentils, peas, alfalfa or soybeans; oil plants, such as rape, mustard, olives, sunflowers, coconut, cocoa beans, castor oil plants, oil palms, ground nuts or soybeans; cucurbits, such as squashes, cucumber or melons; fiber plants, such as cotton, flax, hemp or jute; citrus fruit, such as oranges, lemons, grapefruits or mandarins; vegetables, such as spinach, lettuce, asparagus, cabbages, carrots, onions, tomatoes, potatoes, cucurbits or paprika; lauraceous plants, such as avocados, cinnamon or camphor; energy and raw material plants, such as corn, soybean, rape, sugar cane or oil palm; corn; tobacco; nuts; coffee; tea; bananas; vines (table grapes and grape juice grape vines); hop; turf; sweet leaf (also called Stevia); natural rubber plants or ornamental and forestry plants, such as flowers, shrubs, broad-leaved trees or evergreens, e. g. conifers; and on the plant propagation material, such as seeds, and the crop material of these plants. Preferably, the inventive compositions are used for controlling a multitude of fungi on field crops, such as potatoes sugar beets, tobacco, wheat, rye, barley, oats, rice, corn, cotton, soybeans, rape, legumes, sunflowers, coffee or sugar cane; fruits; vines; ornamentals; or vegetables, such as cucumbers, tomatoes, beans or squashes.

The term "plant propagation material" is to be understood to denote all the generative parts of the plant such as seeds and vegetative plant material such as cuttings and tubers (e. g. potatoes), which can be used for the multiplication of the plant. This includes seeds, roots, fruits, tubers, bulbs, rhizomes, shoots, sprouts and other parts of plants, including seedlings and young plants, which are to be transplanted after germination or after emergence from soil. These young plants may also be protected before transplantation by a total or partial treatment by immersion or pouring.

Preferably, treatment of plant propagation materials with the components of the inventive compositions and the inventive compositions, respectively, is used for controlling a multitude of fungi on cereals, such as wheat, rye, barley and oats; rice, corn, cotton and soybeans.

The term "cultivated plants" is to be understood as including plants which have been modified by breeding, mutagenesis or genetic engineering including but not limiting to agricultural biotech products on the market or in development (cf. http://cera-gmc.org/, see GM crop database therein). Genetically modified plants are plants, which genetic material has been so modified by the use of recombinant DNA techniques that under natural circumstances cannot readily be obtained by cross breeding, mutations or natural recombination. Typically, one or more genes have been integrated into the genetic material of a genetically modified plant in order to improve certain properties of the plant. Such genetic modifications also include but are not limited to targeted post-translational modification of protein(s), oligo- or polypeptides e. g. by glycosylation or polymer additions such as prenylated, acetylated or farnesylated moieties or PEG moieties.

Plants that have been modified by breeding, mutagenesis or genetic engineering, e. g. have been rendered tolerant to applications of specific classes of herbicides, such as auxin herbicides such as dicamba or 2,4-D; bleacher herbicides such as hydroxylphenylpyruvate dioxygenase (HPPD) inhibitors or phytoene desaturase (PDS) inhibittors; acetolactate synthase (ALS) inhibitors such as sulfonyl ureas or imidazolinones; enolpyruvylshikimate-3-phosphate synthase (EPSPS) inhibitors, such as glyphosate; glutamine synthetase (GS) inhibitors such as glufosinate; protoporphyrinogen-IX oxidase inhibitors; lipid biosynthesis inhibitors such as acetyl CoA carboxylase (ACCase) inhibitors; or oxynil (i. e. bromoxynil or ioxynil) herbicides as a result of conventional methods of breeding or genetic engineering. Furthermore, plants have been made resistant to multiple classes of herbicides through multiple genetic modifications, such as resistance to both glyphosate and glufosinate or to both glyphosate and a herbicide from another class such as ALS inhibitors, HPPD inhibitors, auxin herbicides, or ACCase inhibitors. These herbicide resistance technologies are e. g. described in Pest Managem. Sci. 61, 2005, 246; 61, 2005, 258; 61, 2005, 277; 61, 2005, 269; 61, 2005, 286; 64, 2008, 326; 64, 2008, 332; Weed Sci. 57, 2009, 108; Austral. J. Agricult. Res. 58, 2007, 708; Science 316, 2007, 1185; and references quoted therein. Several cultivated plants have been rendered tolerant to herbicides by conventional methods of breeding (mutagenesis), e. g. Clearfield® summer rape (Canola, BASF SE, Germany) being tolerant to imidazolinones, e. g. imazamox, or ExpressSun® sunflowers (DuPont, USA) being tolerant to sulfonyl ureas, e. g. tribenuron. Genetic engineering methods have been used to render cultivated plants such as soybean, cotton, corn, beets and rape, tolerant to herbicides such as glyphosate and glufosinate, some of which are commercially available

under the trade names RoundupReady® (glyphosate-tolerant, Monsanto, U.S.A.), Cultivance® (imidazolinone tolerant, BASF SE, Germany) and LibertyLink® (glufosinate-tolerant, Bayer CropScience, Germany).

Furthermore, plants are also covered that are by the use of recombinant DNA techniques capable to synthesize one or more insecticidal proteins, especially those known from the bacterial genus *Bacillus,* particularly from *Bacillus thuringiensis,* such as δ-endotoxins, e. g. CryIA(b), CryIA(c), CryIF, CryIF(a2), CryIIA(b), CryIIIA, CryIIIB(b1) or Cry9c; vegetative insecticidal proteins (VIP), e. g. VIP1, VIP2, VIP3 or VIP3A; insecticidal proteins of bacteria colonizing nematodes, e. g. *Photorhabdus* spp. or *Xenorhabdus* spp.; toxins produced by animals, such as scorpion toxins, arachnid toxins, wasp toxins, or other insect-specific neurotoxins; toxins produced by fungi, such Streptomycetes toxins, plant lectins, such as pea or barley lectins; agglutinins; proteinase inhibitors, such as trypsin inhibitors, serine protease inhibitors, patatin, cystatin or papain inhibitors; ribosome-inactivating proteins (RIP), such as ricin, maize-RIP, abrin, luffin, saporin or bryodin; steroid metabolism enzymes, such as 3-hydroxysteroid oxidase, ecdysteroid-IDP-glycosyl-transferase, cholesterol oxidases, ecdysone inhibitors or HMG-CoA-reductase; ion channel blockers, such as blockers of sodium or calcium channels; juvenile hormone esterase; diuretic hormone receptors (helicokinin receptors); stilben synthase, bibenzyl synthase, chitinases or glucanases. In the context of the present invention these insecticidal proteins or toxins are to be understood expressly also as pre-toxins, hybrid proteins, truncated or otherwise modified proteins. Hybrid proteins are characterized by a new combination of protein domains, (see, e. g. WO 02/015701). Further examples of such toxins or genetically modified plants capable of synthesizing such toxins are disclosed, e. g., in EP-A 374 753, WO 93/007278, WO 95/34656, EP-A 427 529, EP-A 451 878, WO 03/18810 und WO 03/52073. The methods for producing such genetically modified plants are generally known to the person skilled in the art and are described, e. g. in the publications mentioned above. These insecticidal proteins contained in the genetically modified plants impart to the plants producing these proteins tolerance to harmful pests from all taxonomic groups of athropods, especially to beetles (Coeloptera), two-winged insects (Diptera), and moths (Lepidoptera) and to nematodes (Nematoda). Genetically modified plants capable to synthesize one or more insecticidal proteins are, e. g., described in the publications mentioned above, and some of which are commercially available such as YieldGard® (corn cultivars producing the Cry1Ab toxin), YieldGard® Plus (corn cultivars producing Cry1Ab and Cry3Bb1 toxins), Starlink® (corn cultivars producing the Cry9c toxin), Herculex® RW (corn cultivars producing Cry34Ab1, Cry35Ab1 and the enzyme Phosphinothricin-N-Acetyltransferase [PAT]); NuCOTN® 33B (cotton cultivars producing the Cry1Ac toxin), Bollgard® I (cotton cultivars producing the Cry1Ac toxin), Bollgard® II (cotton cultivars producing Cry1Ac and Cry2Ab2 toxins); VIPCOT® (cotton cultivars producing a VIP-toxin); NewLeaf® (potato cultivars producing the Cry3A toxin); Bt-Xtra®, NatureGard®, KnockOut®, BiteGard®, Protecta®, Bt11 (e. g. Agrisure® CB) and Bt176 from Syngenta Seeds SAS, France, (corn cultivars producing the Cry1Ab toxin and PAT enyzme), MIR604 from Syngenta Seeds SAS, France (corn cultivars producing a modified version of the Cry3A toxin, c.f. WO 03/018810), MON 863 from Monsanto Europe S.A., Belgium (corn cultivars producing the Cry3Bb1 toxin), IPC 531 from Monsanto Europe S.A., Belgium (cotton cultivars producing a modified version of the Cry1Ac toxin) and 1507 from Pioneer Overseas Corporation, Belgium (corn cultivars producing the Cry1 F toxin and PAT enzyme).

Furthermore, plants are also covered that are by the use of recombinant DNA techniques capable to synthesize one or more proteins to increase the resistance or tolerance of those plants to bacterial, viral or fungal pathogens. Examples of such proteins are the so-called "pathogenesis-related proteins" (PR proteins, see, e. g. EP-A 392 225), plant disease resistance genes (e. g. potato cultivars, which express resistance genes acting against *Phytophthora infestans* derived from the mexican wild potato *Solanum bulbocastanum)* or T4-lysozym (e. g. potato cultivars capable of synthesizing these proteins with increased resistance against bacteria such as *Erwinia amylvora).* The methods for producing such genetically modified plants are generally known to the person skilled in the art and are described, e. g. in the publications mentioned above.

Furthermore, plants are also covered that are by the use of recombinant DNA techniques capable to synthesize one or more proteins to increase the productivity (e. g. bio mass production, grain yield, starch content, oil content or protein content), tolerance to drought, salinity or other growth-limiting environmental factors or tolerance to pests and fungal, bacterial or viral pathogens of those plants.

Furthermore, plants are also covered that contain by the use of recombinant DNA techniques a modified amount of substances of content or new substances of content, specifically to improve human or animal nutrition, e. g. oil crops that produce health-promoting long-chain omega-3 fatty acids or unsaturated omega-9 fatty acids (e. g. Nexera® rape, DOW Agro Sciences, Canada).

Furthermore, plants are also covered that contain by the use of recombinant DNA techniques a modified amount of substances of content or new substances of content, specifically to improve raw material production, e. g. potatoes that produce increased amounts of amylopectin (e. g. Amflora® potato, BASF SE, Germany).

The compositions are particularly suitable for controlling the following plant diseases:

*Albugo* spp. (white rust) on ornamentals, vegetables (e. g. *A. candida)* and sunflowers (e. g. *A. tragopogonis); Alternaria* spp. (Alternaria leaf spot) on vegetables, rape *(A. brassicola* or *brassicae),* sugar beets *(A. tenuis),* fruits, rice, soybeans, potatoes (e. g. *A. solani* or *A. alternata),* tomatoes (e. g. *A. solani* or *A. alternata)* and wheat; *Aphanomyces* spp. on sugar beets and vegetables; *Ascochyta* spp. on cereals and vegetables, e. g. *A. tritici* (anthracnose) on wheat

and *A. hordei* on barley; *Bipolaris* and *Drechslera* spp. (teleomorph: *Cochliobolus* spp.), e. g. Southern leaf blight *(D. maydis)* or Northern leaf blight (*B. zeicola)* on corn, e. g. spot blotch (*B. sorokiniana*) on cereals and e.g. *B. oryzae* on rice and turfs; *Blumeria* (formerly *Erysiphe*) *graminis* (powdery mildew) on cereals (e. g. on wheat or barley); *Botrytis cinerea* (teleomorph: *Botryotinia fuckeliana:* grey mold) on fruits and berries (e. g. strawberries), vegetables (e. g. lettuce, carrots, celery and cabbages), rape, flowers, vines, forestry plants and wheat; *Bremia lactucae* (downy mildew) on lettuce; *Ceratocystis* (syn. *Ophiostoma)* spp. (rot or wilt) on broad-leaved trees and evergreens, e. g. *C. ulmi* (Dutch elm disease) on elms; *Cercospora* spp. (Cercospora leaf spots) on corn (e.g. Gray leaf spot: *C. zeae-maydis),* rice, sugar beets (e. g. *C. beticola),* sugar cane, vegetables, coffee, soybeans (e. g. *C. sojina* or *C. kikuchii*) and rice; *Cladosporium* spp. on tomatoes (e. g. *C. fulvum:* leaf mold) and cereals, e. g. *C. herbarum* (black ear) on wheat; *Claviceps purpurea* (ergot) on cereals; *Cochliobolus* (anamorph: *Helminthosporium* of *Bipolaris)* spp. (leaf spots) on corn (*C. carbonum*), cereals (e. g. *C. sativus,* anamorph: *B. sorokiniana)* and rice (e. g. *C. miyabeanus,* anamorph: *H. oryzae*); *Colletotrichum* (teleomorph: *Glomerella)* spp. (anthracnose) on cotton (e. g. *C. gossypii*), corn (e. g. *C. graminicola:* Anthracnose stalk rot), soft fruits, potatoes (e. g. *C. coccodes:* black dot), beans (e. g. *C. lindemuthianum)* and soybeans (e. g. *C. truncatum* or *C. gloeosporioides*); *Corticium* spp., e. g. *C. sasakii* (sheath blight) on rice; *Corynespora cassiicola* (leaf spots) on soybeans and ornamentals; *Cycloconium* spp., e. g. *C. oleaginum* on olive trees; *Cylindrocarpon* spp. (e. g. fruit tree canker or young vine decline, teleomorph: *Nectria* or *Neonectria* spp.) on fruit trees, vines (e. g. *C. liriodendri,* teleomorph: *Neonectria liriodendri:* Black Foot Disease) and ornamentals; *Dematophora* (teleomorph: *Rosellinia*) necatrix (root and stem rot) on soybeans; *Diaporthe* spp., e. g. *D. phaseolorum* (damping off) on soybeans; *Drechslera* (syn. *Helminthosporium,* teleomorph: *Pyrenophora)* spp. on corn, cereals, such as barley (e. g. *D. teres,* net blotch) and wheat (e. g. *D. tritici-repentis:* tan spot), rice and turf; Esca (dieback, apoplexy) on vines, caused by *Formitiporia* (syn. *Phellinus) punctata, F. mediterranea, Phaeomoniella chlamydospora* (earlier *Phaeoacremonium chlamydosporum*), *Phaeoacremonium aleophilum* and/or *Botryosphaeria obtusa; Elsinoe* spp. on pome fruits (*E. pyri*), soft fruits (*E. veneta:* anthracnose) and vines (*E. ampelina:* anthracnose); *Entyloma oryzae* (leaf smut) on rice; *Epicoccum* spp. (black mold) on wheat; *Erysiphe* spp. (powdery mildew) on sugar beets (*E. betae),* vegetables (e. g. *E. pisi*), such as cucurbits (e. g. *E. cichoracearum),* cabbages, rape (e. g. *E. cruciferarum); Eutypa lata* (Eutypa canker or dieback, anamorph: *Cytosporina lata,* syn. *Libertella blepharis*) on fruit trees, vines and ornamental woods; *Exserohilum* (syn. *Helminthosporium*) spp. on corn (e. g. *E. turcicum*); *Fusarium* (teleomorph: *Gibberella)* spp. (wilt, root or stem rot) on various plants, such as *F. graminearum* or F. *culmorum* (root rot, scab or head blight) on cereals (e. g. wheat or barley), F. *oxysporum* on tomatoes, *F. solani* on soybeans and *F. verticillioides* on corn; *Gaeumannomyces graminis* (take-all) on cereals (e. g. wheat or barley) and corn; *Gibberella* spp. on cereals (e. g. *G.* zeae) and rice (e. g. *G. fujikuroi:* Bakanae disease); *Glomerella cingulata* on vines, pome fruits and other plants and *G. gossypii* on cotton; Grainstaining complex on rice; *Guignardia bidwellii* (black rot) on vines; *Gymnosporangium* spp. on rosaceous plants and junipers, e. g. *G. sabinae* (rust) on pears; *Helminthosporium* spp. (syn. *Drechslera,* teleomorph: *Cochliobolus)* on corn, cereals and rice; *Hemileia* spp., e. g. *H. vastatrix* (coffee leaf rust) on coffee; *Isariopsis clavispora* (syn. *Cladosporium vitis*) on vines; *Macrophomina phaseolina* (syn. *phaseoli*) (root and stem rot) on soybeans and cotton; *Microdochium* (syn. *Fusarium*) *nivale* (pink snow mold) on cereals (e. g. wheat or barley); *Microsphaera diffusa* (powdery mildew) on soybeans; *Monilinia* spp., e. g. *M. laxa, M. fructicola* and *M. fructigena* (bloom and twig blight, brown rot) on stone fruits and other rosaceous plants; *Mycosphaerella* spp. on cereals, bananas, soft fruits and ground nuts, such as e. g. *M. graminicola* (anamorph: *Septoria tritici,* Septoria blotch) on wheat or *M. fijiensis* (black Sigatoka disease) on bananas; *Peronospora* spp. (downy mildew) on cabbage (e. g. *P. brassicae),* rape (e. g. *P. parasitica*), onions (e. g. *P. destructor*), tobacco *(P. tabacina*) and soybeans (e. g. *P. manshurica*); *Phakopsora pachyrhizi* and *P. meibomiae* (soybean rust) on soybeans; *Phialophora* spp. e. g. on vines (e. g. *P. tracheiphila* and *P. tetraspora*) and soybeans (e. g. *P. gregata:* stem rot); *Phoma lingam* (root and stem rot) on rape and cabbage and *P. betae* (root rot, leaf spot and damping-off) on sugar beets; *Phomopsis* spp. on sunflowers, vines (e. g. *P. viticola:* can and leaf spot) and soybeans (e. g. stem rot: *P. phaseoli,* teleomorph: *Diaporthe phaseolorum*); *Physoderma maydis* (brown spots) on corn; *Phytophthora* spp. (wilt, root, leaf, fruit and stem root) on various plants, such as paprika and cucurbits (e. g. *P. capsici*), soybeans (e. g. *P. megasperma,* syn. *P. sojae*), potatoes and tomatoes (e. g. *P. infestans:* late blight) and broad-leaved trees (e. g. *P. ramorum:* sudden oak death); *Plasmodiophora brassicae* (club root) on cabbage, rape, radish and other plants; *Plasmopara* spp., e. g. *P. viticola* (grapevine downy mildew) on vines and *P. halstedii* on sunflowers; *Podosphaera* spp. (powdery mildew) on rosaceous plants, hop, pome and soft fruits, e. g. *P. leucotricha* on apples; *Polymyxa* spp., e. g. on cereals, such as barley and wheat (*P. graminis)* and sugar beets *(P. betae*) and thereby transmitted viral diseases; *Pseudocercosporella herpotrichoides* (eyespot, teleomorph: *Tapesia yallundae*) on cereals, e. g. wheat or barley; *Pseudoperonospora* (downy mildew) on various plants, e. g. *P. cubensis* on cucurbits or *P. humili* on hop; *Pseudopezicula tracheiphila* (red fire disease or ‚rotbrenner', anamorph: *Phialophora)* on vines; *Puccinia* spp. (rusts) on various plants, e. g. *P. triticina* (brown or leaf rust), *P. striiformis* (stripe or yellow rust), *P. hordei* (dwarf rust), *P. graminis* (stem or black rust) or *P. recondita* (brown or leaf rust) on cereals, such as e. g. wheat, barley or rye, *P. kuehnii* (orange rust) on sugar cane and *P. asparagi* on asparagus; *Pyrenophora* (anamorph: *Drechslera*) *tritici-repentis* (tan spot) on wheat or *P. teres* (net blotch) on barley; *Pyricularia* spp., e. g. *P. oryzae* (teleomorph: *Magnaporthe grisea,* rice blast) on rice and *P. grisea* on turf and cereals; *Pythium* spp. (damping-off) on turf, rice, corn,

wheat, cotton, rape, sunflowers, soybeans, sugar beets, vegetables and various other plants (e. g. *P. ultimum* or *P. aphanidermatum*); *Ramularia* spp., e. g. *R. collo-cygni* (Ramularia leaf spots, Physiological leaf spots) on barley and *R. beticola* on sugar beets; *Rhizoctonia* spp. on cotton, rice, potatoes, turf, corn, rape, potatoes, sugar beets, vegetables and various other plants, e. g. *R. solani* (root and stem rot) on soybeans, *R. solani* (sheath blight) on rice or *R. cerealis* (Rhizoctonia spring blight) on wheat or barley; *Rhizopus stolonifer* (black mold, soft rot) on strawberries, carrots, cabbage, vines and tomatoes; *Rhynchosporium secalis* (scald) on barley, rye and triticale; *Sarocladium oryzae* and *S. attenuatum* (sheath rot) on rice; *Sclerotinia* spp. (stem rot or white mold) on vegetables and field crops, such as rape, sunflowers (e. g. *S. sclerotiorum*) and soybeans (e. g. *S. rolfsii* or *S. sclerotiorum); Septoria* spp. on various plants, e. g. *S. glycines* (brown spot) on soybeans, *S. tritici* (Septoria blotch) on wheat and S. (syn. *Stagonospora*) nodorum (Stagonospora blotch) on cereals; *Uncinula* (syn. *Erysiphe*) *necator* (powdery mildew, anamorph: *Oidium tuckeri*) on vines; *Setospaeria* spp. (leaf blight) on corn (e. g. *S. turcicum,* syn. *Helminthosporium turcicum*) and turf; *Sphacelotheca* spp. (smut) on corn, (e. g. *S. reiliana:* head smut), sorghum und sugar cane; *Sphaerotheca fuliginea* (powdery mildew) on cucurbits; *Spongospora subterranea* (powdery scab) on potatoes and thereby transmitted viral diseases; *Stagonospora* spp. on cereals, e. g. *S. nodorum* (Stagonospora blotch, teleomorph: *Leptosphaeria* [syn. *Phaeosphaeria] nodorum)* on wheat; *Synchytrium endobioticum* on potatoes (potato wart disease); *Taphrina* spp., e. g. *T. deformans* (leaf curl disease) on peaches and *T. pruni* (plum pocket) on plums; *Thielaviopsis* spp. (black root rot) on tobacco, pome fruits, vegetables, soybeans and cotton, e. g. *T. basicola* (syn. *Chalara elegans); Tilletia* spp. (common bunt or stinking smut) on cereals, such as e. g. *T. tritici* (syn. *T. caries,* wheat bunt) and *T. controversa* (dwarf bunt) on wheat; *Typhula incarnata* (grey snow mold) on barley or wheat; *Urocystis* spp., e. g. *U. occulta* (stem smut) on rye; *Uromyces* spp. (rust) on vegetables, such as beans (e. g. *U. appendiculatus,* syn. *U. phaseoli*) and sugar beets (e. g. *U. betae*); *Ustilago* spp. (loose smut) on cereals (e. g. *U. nuda* and *U. avaenae*), corn (e. g. *U. maydis:* corn smut) and sugar cane; *Venturia* spp. (scab) on apples (e. g. *V. inaequalis)* and pears; and *Verticillium* spp. (wilt) on various plants, such as fruits and ornamentals, vines, soft fruits, vegetables and field crops, e. g. *V. dahliae* on strawberries, rape, potatoes and tomatoes.

The compositions are also suitable for controlling harmful fungi in the protection of stored products or harvest and in the protection of materials. The term "protection of materials" is to be understood to denote the protection of technical and non-living materials, such as adhesives, glues, wood, paper and paperboard, textiles, leather, paint dispersions, plastics, colling lubricants, fiber or fabrics, against the infestation and destruction by harmful microorganisms, such as fungi and bacteria. As to the protection of wood and other materials, the particular attention is paid to the following harmful fungi: Ascomycetes such as *Ophiostoma* spp., *Ceratocystis* spp., *Aureobasidium pullulans, Sclerophoma* spp., *Chaetomium* spp., *Humicola* spp., *Petriella* spp., *Trichurus* spp.; Basidiomycetes such as *Coniophora* spp., *Coriolus* spp., *Gloeophyllum* spp., *Lentinus* spp., *Pleurotus* spp., *Poria* spp., *Serpula* spp. and *Tyromyces* spp., Deuteromycetes such as *Aspergillus* spp., *Cladosporium* spp., *Penicillium* spp., *Trichorma* spp., *Alternaria* spp., *Paecilomyces* spp. and Zygomycetes such as *Mucor* spp., and in addition in the protection of stored products and harvest the following yeast fungi are worthy of note: *Candida* spp. and *Saccharomyces cerevisae.*

The compositions may be used for improving the health of a plant. The invention also relates to a method for improving plant health by treating a plant, its propagation material and/or the locus where the plant is growing or is to grow with an effective amount of the components of the inventive compositions or the inventive compositions, respectively.

The term "plant health" is to be understood to denote a condition of the plant and/or its products which is determined by several indicators alone or in combination with each other such as yield (e. g. increased biomass and/or increased content of valuable ingredients), plant vigor (e. g. improved plant growth and/or greener leaves ("greening effect")), quality (e. g. improved content or composition of certain ingredients) and tolerance to abiotic and/or biotic stress.The above identified indicators for the health condition of a plant may be interdependent or may result from each other.

The compounds of formula I can be present in different crystal modifications whose biological activity may differ. Compositions comprising such modifications of compounds I are likewise subject matter of the present invention.

The compositions are used by treating the fungi or the plants, plant propagation materials, such as seeds, soil, surfaces, materials or rooms to be protected from fungal attack with a fungicidally effective amount of the active substances. The application can be carried out both before and after the infection of the plants, plant propagation materials, such as seeds, soil, surfaces, materials or rooms by the fungi.

Plant propagation materials may be treated with the components of the inventiove sompositions and the inventive compositions, respectively, prophylactically either at or before planting or transplanting.

The invention also relates to agrochemical compositions comprising an auxiliary and the components of the respective inventive composition or the inventive composition, respectively.

An agrochemical composition comprises a fungicidally effective amount of the components of the inventive compositions or the inventive composition, respectively. The term "effective amount" denotes an amount of the composition or of the components, which is sufficient for controlling harmful fungi on cultivated plants or in the protection of materials and which does not result in a substantial damage to the treated plants. Such an amount can vary in a broad range and is dependent on various factors, such as the fungal species to be controlled, the treated cultivated plant or

material, the climatic conditions and the specific compound I used.

The components of the inventive compositions or the inventive compositions, respectively, their N-oxides and salts can be converted into customary types of agrochemical compositions, e. g. solutions, emulsions, suspensions, dusts, powders, pastes, granules, pressings, capsules, and mixtures thereof. Examples for composition types are suspensions (e.g. SC, OD, FS), emulsifiable concentrates (e.g. EC), emulsions (e.g. EW, EO, ES, ME), capsules (e.g. CS, ZC), pastes, pastilles, wettable powders or dusts (e.g. WP, SP, WS, DP, DS), pressings (e.g. BR, TB, DT), granules (e.g. WG, SG, GR, FG, GG, MG), insecticidal articles (e.g. LN), as well as gel formulations for the treatment of plant propagation materials such as seeds (e.g. GF). These and further compositions types are defined in the "Catalogue of pesticide formulation types and international coding system", Technical Monograph No. 2, 6th Ed. May 2008, CropLife International.

The compositions are prepared in a known manner, such as described by Mollet and Grubemann, Formulation technology, Wiley VCH, Weinheim, 2001; or Knowles, New developments in crop protection product formulation, Agrow Reports DS243, T&F Informa, London, 2005.

Suitable auxiliaries are solvents, liquid carriers, solid carriers or fillers, surfactants, dispersants, emulsifiers, wetters, adjuvants, solubilizers, penetration enhancers, protective colloids, adhesion agents, thickeners, humectants, repellents, attractants, feeding stimulants, compatibilizers, bactericides, anti-freezing agents, anti-foaming agents, colorants, tackifiers and binders.

Suitable solvents and liquid carriers are water and organic solvents, such as mineral oil fractions of medium to high boiling point, e.g. kerosene, diesel oil; oils of vegetable or animal origin; aliphatic, cyclic and aromatic hydrocarbons, e. g. toluene, paraffin, tetrahydronaphthalene, alkylated naphthalenes; alcohols, e.g. ethanol, propanol, butanol, benzylalcohol, cyclohexanol; glycols; DMSO; ketones, e.g. cyclohexanone; esters, e.g. lactates, carbonates, fatty acid esters, gamma-butyrolactone; fatty acids; phosphonates; amines; amides, e.g. N-methylpyrrolidone, fatty acid dimethylamides; and mixtures thereof.

Suitable solid carriers or fillers are mineral earths, e.g. silicates, silica gels, talc, kaolins, limestone, lime, chalk, clays, dolomite, diatomaceous earth, bentonite, calcium sulfate, magnesium sulfate, magnesium oxide; polysaccharides, e.g. cellulose, starch; fertilizers, e.g. ammonium sulfate, ammonium phosphate, ammonium nitrate, ureas; products of vegetable origin, e.g. cereal meal, tree bark meal, wood meal, nutshell meal, and mixtures thereof.

Suitable surfactants are surface-active compounds, such as anionic, cationic, nonionic and amphoteric surfactants, block polymers, polyelectrolytes, and mixtures thereof. Such surfactants can be used as emusifier, dispersant, solubilizer, wetter, penetration enhancer, protective colloid, or adjuvant. Examples of surfactants are listed in McCutcheon's, Vol.1: Emulsifiers & Detergents, McCutcheon's Directories, Glen Rock, USA, 2008 (International Ed. or North American Ed.).

Suitable anionic surfactants are alkali, alkaline earth or ammonium salts of sulfonates, sulfates, phosphates, carboxylates, and mixtures thereof. Examples of sulfonates are alkylarylsulfonates, diphenylsulfonates, alpha-olefin sulfonates, lignine sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkylnaphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates, and carboxylated alcohol or alkylphenol ethoxylates.

Suitable nonionic surfactants are alkoxylates, N-subsituted fatty acid amides, amine oxides, esters, sugar-based surfactants, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-subsitituted fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Examples of polymeric surfactants are home- or copolymers of vinylpyrrolidone, vinylalcohols, or vinylacetate.

Suitable cationic surfactants are quaternary surfactants, for example quaternary ammonium compounds with one or two hydrophobic groups, or salts of long-chain primary amines. Suitable amphoteric surfactants are alkylbetains and imidazolines. Suitable block polymers are block polymers of the A-B or A-B-A type comprising blocks of polyethylene oxide and polypropylene oxide, or of the A-B-C type comprising alkanol, polyethylene oxide and polypropylene oxide. Suitable polyelectrolytes are polyacids or polybases. Examples of polyacids are alkali salts of polyacrylic acid or polyacid comb polymers. Examples of polybases are polyvinylamines or polyethyleneamines.

Suitable adjuvants are compounds, which have a neglectable or even no pesticidal activity themselves, and which improve the biological performance of the compound I on the target. Examples are surfactants, mineral or vegetable oils, and other auxilaries. Further examples are listed by Knowles, Adjuvants and additives, Agrow Reports DS256, T&F Informa UK, 2006, chapter 5.

Suitable thickeners are polysaccharides (e.g. xanthan gum, carboxymethylcellulose), anorganic clays (organically modified or unmodified), polycarboxylates, and silicates.

Suitable bactericides are bronopol and isothiazolinone derivatives such as alkylisothiazolinones and benzisothiazolinones.

Suitable anti-freezing agents are ethylene glycol, propylene glycol, urea and glycerin.

Suitable anti-foaming agents are silicones, long chain alcohols, and salts of fatty acids.

Suitable colorants (e.g. in red, blue, or green) are pigments of low water solubility and water-soluble dyes. Examples are inorganic colorants (e.g. iron oxide, titan oxide, iron hexacyanoferrate) and organic colorants (e.g. alizarin-, azo- and phthalocyanine colorants).

Suitable tackifiers or binders are polyvinylpyrrolidons, polyvinylacetates, polyvinyl alcohols, polyacrylates, biological or synthetic waxes, and cellulose ethers.

Examples for composition types and their preparation are (wherein active substances denote the respective components (=active ingredients) of the inventive composition):

i) Water-soluble concentrates (SL, LS)
10-60 wt% active substances and 5-15 wt% wetting agent (e.g. alcohol alkoxylates) are dissolved in water and/or in a water-soluble solvent (e.g. alcohols) ad 100 wt%. The active substance dissolves upon dilution with water.

ii) Dispersible concentrates (DC)
5-25 wt% active substances and 1-10 wt% dispersant (e. g. polyvinylpyrrolidone) are dissolved in organic solvent (e.g. cyclohexanone) ad 100 wt%. Dilution with water gives a dispersion.

iii) Emulsifiable concentrates (EC)
15-70 wt% active substances and 5-10 wt% emulsifiers (e.g. calcium dodecylbenzenesulfonate and castor oil ethoxylate) are dissolved in water-insoluble organic solvent (e.g. aromatic hydrocarbon) ad 100 wt%. Dilution with water gives an emulsion.

iv) Emulsions (EW, EO, ES)
5-40 wt% active substances and 1-10 wt% emulsifiers (e.g. calcium dodecylbenzenesulfonate and castor oil ethoxylate) are dissolved in 20-40 wt% water-insoluble organic solvent (e.g. aromatic hydrocarbon). This mixture is introduced into water ad 100 wt% by means of an emulsifying machine and made into a homogeneous emulsion. Dilution with water gives an emulsion.

v) Suspensions (SC, OD, FS)
In an agitated ball mill, 20-60 wt% active substances are comminuted with addition of 2-10 wt% dispersants and wetting agents (e.g. sodium lignosulfonate and alcohol ethoxylate), 0.1-2 wt% thickener (e.g. xanthan gum) and ad water ad 100 wt% to give a fine active substance suspension. Dilution with water gives a stable suspension of the active substance. For FS type composition up to 40 wt% binder (e.g. polyvinylalcohol) is added.

vi) Water-dispersible granules and water-soluble granules (WG, SG)
50-80 wt% active substances are ground finely with addition of dispersants and wetting agents (e.g. sodium lignosulfonate and alcohol ethoxylate) ad 100 wt% and prepared as water-dispersible or water-soluble granules by means of technical appliances (e. g. extrusion, spray tower, fluidized bed). Dilution with water gives a stable dispersion or solution of the active substance.

vii) Water-dispersible powders and water-soluble powders (WP, SP, WS)
50-80 wt% active substances are ground in a rotor-stator mill with addition of 1-5 wt% dispersants (e.g. sodium lignosulfonate), 1-3 wt% wetting agents (e.g. alcohol ethoxylate) and solid carrier (e.g. silica gel) ad 100 wt%. Dilution with water gives a stable dispersion or solution of the active substance.

viii) Gel (GW, GF)
In an agitated ball mill, 5-25 wt% active substances are comminuted with addition of 3-10 wt% dispersants (e.g. sodium lignosulfonate), 1-5 wt% thickener (e.g. carboxymethylcellulose) and water ad 100 wt% to give a fine suspension of the active substance. Dilution with water gives a stable suspension of the active substance.

iv) Microemulsion (ME)
5-20 wt% active substances are added to 5-30 wt% organic solvent blend (e.g. fatty acid dimethylamide and cyclohexanone), 10-25 wt% surfactant blend (e.g. alcohol ethoxylate and arylphenol ethoxylate), and water ad 100

wt%. This mixture is stirred for 1 h to produce spontaneously a thermodynamically stable microemulsion.

iv) Microcapsules (CS)

An oil phase comprising 5-50 wt% active substances, 0-40 wt% water insoluble organic solvent (e.g. aromatic hydrocarbon), 2-15 wt% acrylic monomers (e.g. methylmethacrylate, methacrylic acid and a di- or triacrylate) are dispersed into an aqueous solution of a protective colloid (e.g. polyvinyl alcohol). Radical polymerization initiated by a radical initiator results in the formation of poly(meth)acrylate microcapsules. Alternatively, an oil phase comprising 5-50 wt% of a compound I according to the invention, 0-40 wt% water insoluble organic solvent (e.g. aromatic hydrocarbon), and an isocyanate monomer (e.g. diphenylmethene-4,4'-diisocyanatae) are dispersed into an aqueous solution of a protective colloid (e.g. polyvinyl alcohol). The addition of a polyamine (e.g. hexamethylenediamine) results in the formation of polyurea microcapsules. The monomers amount to 1-10 wt%. The wt% relate to the total CS composition.

ix) Dustable powders (DP, DS)

1-10 wt% active substances are ground finely and mixed intimately with solid carrier (e.g. finely divided kaolin) ad 100 wt%.

x) Granules (GR, FG)

0.5-30 wt% active substances are ground finely and associated with solid carrier (e.g. silicate) ad 100 wt%. Granulation is achieved by extrusion, spray-drying or fluidized bed.

xi) Ultra-low volume liquids (UL)

1-50 wt% active substances are dissolved in organic solvent (e.g. aromatic hydrocarbon) ad 100 wt%.

The compositions types i) to xi) may optionally comprise further auxiliaries, such as 0.1-1 wt% bactericides, 5-15 wt% anti-freezing agents, 0.1-1 wt% anti-foaming agents, and 0.1-1 wt% colorants.

The agrochemical compositions generally comprise between 0.01 and 95%, preferably between 0.1 and 90%, and in particular between 0.5 and 75%, by weight of active substance. The active substances are employed in a purity of from 90% to 100%, preferably from 95% to 100% (according to NMR spectrum).

Solutions for seed treatment (LS), Suspoemulsions (SE), flowable concentrates (FS), powders for dry treatment (DS), water-dispersible powders for slurry treatment (WS), water-soluble powders (SS), emulsions (ES), emulsifiable concentrates (EC) and gels (GF) are usually employed for the purposes of treatment of plant propagation materials, particularly seeds. The compositions in question give, after two-to-tenfold dilution, active substance concentrations of from 0.01 to 60% by weight, preferably from 0.1 to 40%, in the ready-to-use preparations. Application can be carried out before or during sowing. Methods for applying compound I and compositions thereof, respectively, on to plant propagation material, especially seeds include dressing, coating, pelleting, dusting, soaking and in-furrow application methods of the propagation material. Preferably, compound I or the compositions thereof, respectively, are applied on to the plant propagation material by a method such that germination is not induced, e. g. by seed dressing, pelleting, coating and dusting.

When employed in plant protection, the amounts of active substances applied are, depending on the kind of effect desired, from 0.001 to 2 kg per ha, preferably from 0.005 to 2 kg per ha, more preferably from 0.05 to 0.9 kg per ha, and in particular from 0.1 to 0.75 kg per ha. from 0.1 to 10 kg active ingredients per 100 kg of seed

In treatment of plant propagation materials such as seeds, e. g. by dusting, coating or drenching seed, amounts of active substance of from 0.1 to 10 kg active substances per 100 kg of seed, in particular from 0.1 to 1000 g, preferably from 1 to 1000 g, more preferably from 1 to 100 g and most preferably from 5 to 100 g, per 100 kilogram of plant propagation material (preferably seeds) are generally required.

When used in the protection of materials or stored products, the amount of active substance applied depends on the kind of application area and on the desired effect. Amounts customarily applied in the protection of materials are 0.001 g to 2 kg, preferably 0.005 g to 1 kg, of active substance per cubic meter of treated material.

Various types of oils, wetters, adjuvants, fertilizer, or micronutrients, and further pesticides (e.g. herbicides, insecticides, fungicides, growth regulators, safeners) may be added to the active substances or the compositions comprising them as premix or, if appropriate not until immediately prior to use (tank mix). These agents can be admixed with the compositions according to the invention in a weight ratio of 1:100 to 100:1, preferably 1:10 to 10:1.

The user applies the composition according to the invention usually from a predosage device, a knapsack sprayer, a spray tank, a spray plane, or an irrigation system. Usually, the agrochemical composition is made up with water, buffer, and/or further auxiliaries to the desired application concentration and the ready-to-use spray liquor or the agrochemical composition according to the invention is thus obtained. Usually, 20 to 2000 liters, preferably 50 to 400 liters, of the ready-to-use spray liquor are applied per hectare of agricultural useful area.

According to one embodiment, individual components of the composition according to the invention such as parts of a kit or parts of composition may be mixed by the user himself in a spray tank and further auxiliaries may be added, if appropriate.

In the compositions, the ratios of the components are sometimes advantageously chosen so as to produce a synergistic effect.

The term "synergstic effect" is understood to refer in particular to that defined by Colby's formula (Colby, S. R., "Calculating synergistic and antagonistic responses of herbicide combinations", Weeds, 15, pp. 20-22, 1967).

The term "synergistic effect" is also understood to refer to that defined by application of the Tammes method, (Tammes, P. M. L., "Isoboles, a graphic representation of synergism in pesticides", Netherl. J. Plant Pathol. 70, 1964).

The components can be used individually or already partially or completely mixed with one another to prepare the composition according to the invention. It is also possible for them to be packaged and used as combination such as a kit of parts.

The fungicidal action of the compositions according to the invention can be shown by the tests described below.

The active compounds, separately or jointly, are prepared as a stock solution comprising 25 mg of active compound which is made up to 10 ml using a mixture of acetone and/or DMSO and the emulsifier Uniperol® EL (wetting agent having an emulsifying and dispersing action based on ethoxylated alkylphenols) in a ratio by volume of solvent/emulsifier of 99:1. The mixture is then made up to 100 ml with water. This stock solution is diluted with the solvent/emulsifier/water mixture described to give the concentration of active compound stated below.

The visually determined percentages of infected leaf areas are converted into efficacies in % of the untreated control.

The efficacy (E) is calculated as follows using Abbot's formula:

$$E = (1 - \alpha/\beta) \cdot 100$$

$\alpha$ corresponds to the fungicidal infection of the treated plants in % and

$\beta$ corresponds to the fungicidal infection of the untreated (control) plants in %

An efficacy of 0 means that the infection level of the treated plants corresponds to that of the untreated control plants; an efficacy of 100 means that the treated plants were not infected.

The expected efficacies of active compound combinations were determined using Colby's formula (Colby, S.R. "Calculating synergistic and antagonistic responses of herbicide combinations", Weeds, 15, pp. 20-22, 1967) and compared with the observed efficacies.

Colby's formula:

$$E = x + y - x \bullet y/100$$

E expected efficacy, expressed in % of the untreated control, when using the mixture of the active compounds A and B at the concentrations a and b

x efficacy, expressed in % of the untreated control, when using the active compound A at the concentration a

y efficacy, expressed in % of the untreated control, when using the active compound B at the concentration b.

Microtests

The active compounds were formulated separately as a stock solution having a concentration of 10000 ppm in dimethyl sulfoxide.

The product orysastrobin was used as commercial finished formulation and diluted with water to the stated concentration of the active compound.

The stock solutions were mixed according to the ratio, pipetted onto a micro titer plate (MTP) and diluted with water to the stated concentrations. A spore suspension of the respective pathogen in the respective nutrient medium was then added. The plates were placed in a water vapor-saturated chamber at a temperature of 18°C. Using an absorption photometer, the MTPs were measured at 405 nm 7 days after the inoculation.

The measured parameters were compared to the growth of the active compound-free control variant (100%) and the fungus-free and active compound-free blank value to determine the relative growth in % of the pathogens in the respective active compounds. These percentages were converted into efficacies.

The expected efficacies of active compound mixtures were determined using Colby's formula [R.S. Colby, "Calculating synergistic and antagonistic responses of herbicide combinations", Weeds 15, 20-22 (1967)] and compared with the observed efficacies.

## Claims

1. Compositions comprising,

1) as component I 2-[2-chloro-4-(4-chlorophenoxy)phenyl]-1,3-bis(1,2,4-triazol-1-yl)propan-2-ol; and
2) as component II

an active ingredient, selected from the following groups A) to O):

A) Respiration inhibitors

- Inhibitors of complex III at $Q_o$ site (e.g. strobilurins): coumethoxystrobin, coumoxystrobin, dimoxystrobin, enestroburin, fenaminstrobin, fenoxy-strobin/flufenoxystrobin, kresoxim-methyl, metominostrobin, orysastrobin, pyrametostrobin, pyraoxystrobin, trifloxystrobin, 2-[2-(2,5-dimethyl-phenoxymethyl)-phenyl]-3-methoxy-acrylic acid methyl ester and 2-(2-(3-(2,6-dichlorophenyl)-1-methyl-allylideneaminooxymethyl)-phenyl)-2-methoxyimino-N-methyl-acetamide, pyribencarb, triclopyricarb/chlorodincarb, famoxadone, fenamidone;
- inhibitors of complex III at $Q_i$ site: cyazofamid, amisulbrom, [(3S,6S,7R,8R)-8-benzyl-3-[(3-acetoxy-4-methoxy-pyridine-2-carbonyl)amino]-6-methyl-4,9-dioxo-1,5-dioxonan-7-yl] 2-methylpropanoate, [(3S,6S,7R,8R)-8-benzyl-3-[[3-(acetoxymethoxy)-4-methoxy-pyridine-2-carbonyl]amino]-6-methyl-4,9-dioxo-1,5-dioxonan-7-yl] 2-methylpropanoate, [(3S,6S,7R,8R)-8-benzyl-3-[(3-isobutoxycarbonyloxy-4-methoxypyridine-2-carbonyl)amino]-6-methyl-4,9-dioxo-1,5-dioxonan-7-yl] 2-methylpropanoate, [(3S,6S,7R,8R)-8-benzyl-3-[[3-(1,3-benzodioxol-5-ylmethoxy)-4-methoxy-pyridine-2-carbonyl]amino]-6-methyl-4,9-dioxo-1,5-dioxonan-7-yl] 2-methylpropanoate; (3S,6S,7R,8R)-3-[[(3-hydroxy-4-methoxy-2-pyridinyl)carbonyl]amino]-6-methyl-4,9-dioxo-8-(phenylmethyl)-1,5-dioxonan-7-yl 2-methylpropanoate
- inhibitors of complex II (e. g. carboxamides): benodanil, benzovindiflupyr, bixafen, boscalid, carboxin, fenfuram, fluopyram, flutolanil, fluxapyroxad, furametpyr, isopyrazam, mepronil, oxycarboxin, penflufen, penthiopyrad, sedaxane, tecloftalam, N-(4'-trifluoromethylthiobiphenyl-2-yl)-3-difluoromethyl-1-methyl-1H-pyrazole-4-carboxamide, N-(2-(1,3,3-trimethyl-butyl)-phenyl)-1,3-dimethyl-5-fluoro-1H-pyrazole-4-carboxamide, 3-(difluoromethyl)-1-methyl-N-(1,1,3-trimethylindan-4-yl)pyrazole-4-carboxamide, 3-(trifluoromethyl)-1-methyl-N-(1,1,3-trimethylindan-4-yl)pyrazole-4-carboxamide, 1,3-dimethyl-N-(1,1,3-trimethylindan-4-yl)pyrazole-4-carboxamide, 3-(trifluoromethyl)-1,5-dimethyl-N-(1,1,3-trimethylindan-4-yl)pyrazole-4-carboxamide, 3-(difluoromethyl)-1,5-dimethyl-N-(1,1,3-trimethylindan-4-yl)pyrazole-4-carboxamide, 1,3,5-trimethyl-N-(1,1,3-trimethylindan-4-yl)pyrazole-4-carboxamide;
- other respiration inhibitors (e.g. complex I, uncouplers): diflumetorim, (5,8-difluoroquinazolin-4-yl)-{2-[2-fluoro-4-(4-trifluoromethylpyridin-2-yloxy)-phenyl]-ethyl}-amine; nitrophenyl derivates: binapacryl, dinobuton, dinocap, fluazinam; ferimzone; organometal compounds: fentin salts, such as fentin-acetate, fentin chloride or fentin hydroxide; ametoctradin; and silthiofam;

B) Sterol biosynthesis inhibitors (SBI fungicides)

- C14 demethylase inhibitors (DMI fungicides): triazoles: azaconazole, bitertanol, bromuconazole, cyproconazole, difenoconazole, diniconazole, diniconazole-M, fenbuconazole, fluquinconazole, flusilazole, flutriafol, hexaconazole, imibenconazole, ipconazole, metconazole, myclobutanil, oxpoconazole, paclobutrazole, penconazole, propiconazole, prothioconazole, simeconazole, tebuconazole, triadimefon, triadimenol, triticonazole, uniconazole, 1-[*rel*-(2*S*;3*R*)-3-(2-chlorophenyl)-2-(2,4-difluorophenyl)-oxiranylmethyl]-5-thiocyanato-1 H-[1,2,4]triazole, 2-[*rel*-(2*S*;3*R*)-3-(2-chlorophenyl)-2-(2,4-difluorophenyl)-oxiranyl-methyl]-2H-[1,2,4]triazole-3-thiol; imidazoles: imazalil, pefurazoate, prochloraz, triflumizol; pyrimidines, pyridines and piperazines: fenarimol, nuarimol, pyrifenox, triforine;
- Delta14-reductase inhibitors: aldimorph, dodemorph, dodemorph-acetate, fenpropimorph, tridemorph, fenpropidin, piperalin, spiroxamine;
- Inhibitors of 3-keto reductase: fenhexamid;

C) Nucleic acid synthesis inhibitors

- phenylamides or acyl amino acid fungicides: benalaxyl, benalaxyl-M, kiralaxyl, metalaxyl, metalaxyl-M (mefenoxam), ofurace, oxadixyl;
- others: hymexazole, octhilinone, oxolinic acid, bupirimate, 5-fluorocytosine, 5-fluoro-2-(p-tolylmethoxy)pyrimidin-4-amine, 5-fluoro-2-(4-fluorophenylmethoxy)pyrimidin-4-amine;

D) Inhibitors of cell division and cytoskeleton

- tubulin inhibitors, such as benzimidazoles, thiophanates: benomyl, carbendazim, fuberidazole, thiabendazole, thiophanate-methyl; triazolopyrimidines: 5-chloro-7-(4-methyipiperidin-1-yl)-6-(2,4,6-trifluorophenyl)-[1,2,4]triazolo[1,5-a]pyrimidine
- other cell division inhibitors: diethofencarb, ethaboxam, pencycuron, fluopicolide, zoxamide, metrafenone, pyriofenone;

E) Inhibitors of amino acid and protein synthesis

- methionine synthesis inhibitors (anilino-pyrimidines): mepanipyrim, pyrimethanil;
- protein synthesis inhibitors: blasticidin-S, kasugamycin, kasugamycin hydrochloride-hydrate, mildiomycin, streptomycin, oxytetracyclin, polyoxine, validamycin A;

F) Signal transduction inhibitors

- MAP / histidine kinase inhibitors: fluoroimid, iprodione, procymidone, vinclozolin, fenpiclonil;
- G protein inhibitors: quinoxyfen;

G) Lipid and membrane synthesis inhibitors

- Phospholipid biosynthesis inhibitors: edifenphos, iprobenfos, pyrazophos, isoprothiolane;
- lipid peroxidation: dicloran, quintozene, tecnazene, tolclofos-methyl, biphenyl, chloroneb, etridiazole;
- phospholipid biosynthesis and cell wall deposition: dimethomorph, flumorph, mandipropamid, pyrimorph, benthiavalicarb, iprovalicarb, valifenalate and N-(1-(1-(4-cyano-phenyl)ethanesulfonyl)-but-2-yl) carbamic acid-(4-fluorophenyl) ester;
- compounds affecting cell membrane permeability and fatty acides: propamocarb, propamocarb-hydrochlorid
- fatty acid amide hydrolase inhibitors: 1-[4-[4-[5-(2,6-difluorophenyl)-4,5-dihydro-3-isoxazolyl]-2-thiazolyl]-1-piperidinyl]-2-[5-methyl-3-(trifluoromethyl)-1H-pyrazol-1-yl]ethanone

H) Inhibitors with Multi Site Action

- inorganic active substances: Bordeaux mixture, copper acetate, copper hydroxide, copper oxychloride, basic copper sulfate, sulfur;
- thio- and dithiocarbamates: ferbam, mancozeb, maneb, metam, metiram, propineb, thiram, zineb, ziram;
- organochlorine compounds (e.g. phthalimides, sulfamides, chloronitriles): anilazine, chlorothalonil, captafol, captan, folpet, dichlofluanid, dichlorophen, flusulfamide, hexachlorobenzene, pentachlorphenole and its salts, phthalide, tolylfluanid, N-(4-chloro-2-nitro-phenyl)-N-ethyl-4-methyl-benzenesulfonamide;
- guanidines and others: guanidine, dodine, dodine free base, guazatine, guazatine-acetate, iminoctadine, iminoctadine-triacetate, iminoctadine-tris(albesilate), dithianon, 2,6-dimethyl-1H,5H-[1,4]dithiino[2,3-c:5,6-c']dipyrrole-1,3,5,7(2H,6H)-tetraone;

I) Cell wall synthesis inhibitors

- inhibitors of glucan synthesis: validamycin, polyoxin B; melanin synthesis inhibitors: pyroquilon, tricyclazole, carpropamid, dicyclomet, fenoxanil;

J) Plant defence inducers

- acibenzolar-S-methyl, probenazole, isotianil, tiadinil, prohexadione-calcium; phosphonates: fosetyl, fosetyl-aluminum, phosphorous acid and its salts;

K) Unknown mode of action bronopol, chinomethionat, cyflufenamid, cymoxanil, dazomet, debacarb, diclomezine, difenzoquat, difenzoquat-methylsulfate, diphenylamin, fenpyrazamine, flumetover, flusulfamide, flutianil, methasulfocarb, nitrapyrin, nitrothal-isopropyl, oxin-copper, proquinazid, tebufloquin, tecloftalam, triazoxide, 2-butoxy-6-iodo-3-propylchromen-4-one, N-(cyclopropylmethoxyimino-(6-difluoro-methoxy-2,3-difluoro-phenyl)-methyl)-2-phenyl acetamide, N'-(4-(4-chloro-3-trifluoromethyl-phenoxy)-2,5-dimethyl-phenyl)-N-ethyl-N-methyl formamidine, N'-(4-(4-fluoro-3-trifluoromethyl-phenoxy)-2,5-dimethyl-phenyl)-N-ethyl-N-methyl formamidine, N'-(2-methyl-5-trifluoromethyl-4-(3-trimethylsilanyl-propoxy)-phenyl)-N-ethyl-N-methyl formamidine, N'-(5-difluoromethyl-2-methyl-4-(3-trimethylsilanyl-propoxy)-phenyl)-N-ethyl-N-methyl formamidine, 2methoxy-acetic acid 6-tert-butyl-8-fluoro-2,3-dimethyl-quinolin-4-yl ester, 3-[5-(4-methylphenyl)-2,3-dimethyl-isoxazolidin-3-yl]-pyridine, 3-[5-(4-chloro-phenyl)-2,3-dimethyl-isoxazolidin-3-yl]-pyridine (pyrisoxazole), N-(6-methoxy-pyridin-3-yl) cyclopropanecarboxylic acid amide, 5-chloro-1-(4,6-di-methoxy-pyrimidin-2-yl)-2-methyl-1H-benzoimidazole, 2-(4-chloro-phenyl)-N-[4-(3,4-dimethoxy-phenyl)-isoxazol-5-yl]-2-prop-2-ynyloxy-acetamide, 2-[3,5-bis(difluoromethyl)-1H-pyrazol-1-yl]-1-[4-(4-{5-[2-(prop-2-yn-1-yloxy)phenyl]-4,5-dihydro-1,2-oxazol-3-yl}-1,3-thiazol-2-yl)piperidin-1-yl]ethanone, 2-[3,5-bis(difluoromethyl)-1H-pyrazol-1-yl]-1-[4-(4-{5-[2-fluoro-6-(prop-2-yn-1-yloxy)phenyl]-4,5-dihydro-1,2-oxazol-3-yl}-1,3-thiazol-2-yl)piperidin-1-yl]ethanone, 2-[3,5-bis(difluoromethyl)-1H-pyrazol-1-yl]-1-[4-(4-{5-[2-chloro-6-(prop-2-yn-1-yloxy)phenyl]-4,5-dihydro-1,2-oxazol-3-yl}-1,3-thiazol-2-yl)piperidin-1-yl]ethanone;

L) Antifungal biocontrol agents, plant bioactivators: *Ampelomyces quisqualis* (e.g. AQ 10® from Intrachem Bio GmbH & Co. KG, Germany), *Aspergillus flavus* (e.g. AFLAGUARD® from Syngenta, CH), *Aureobasidium pullulans* (e.g. BOTECTOR® from bio-ferm GmbH, Germany), *Bacillus pumilus* (e.g. NRRL Accession No. B-30087 in SONATA® and BALLAD® Plus from AgraQuest Inc., USA), *Bacillus subtilis* (e.g. isolate NRRL-Nr. B-21661 in RHAPSODY®, SERENADE® MAX and SERENADE® ASO from AgraQuest Inc., USA), *Bacillus subtilis* var. *amyloliquefaciens* FZB24 (e.g. TAEGRO® from Novozyme Biologicals, Inc., USA), *Candida oleophila* I-82 (e.g. ASPIRE® from Ecogen Inc., USA), *Candida saitoana* (e.g. BIOCURE® (in mixture with lysozyme) and BIOCOAT® from Micro Flo Company, USA (BASF SE) and Arysta), Chitosan (e.g. ARMOUR-ZEN from BotriZen Ltd., NZ), *Clonostachys rosea* f. *catenulata,* also named *Gliocladium catenulatum* (e.g. isolate J1446: PRESTOP® from Verdera, Finland), *Coniothyrium minitans* (e.g. CONTANS® from Prophyta, Germany), *Cryphonectria parasitica* (e.g. *Endothia parasitica* from CNICM, France), *Cryptococcus albidus* (e.g. YIELD PLUS® from Anchor Bio-Technologies, South Africa), *Fusarium oxysporum* (e.g. BIOFOX® from S.I.A.P.A., Italy, FUSACLEAN® from Natural Plant Protection, France), *Metschnikowia fructicola* (e.g. SHEMER® from Agrogreen, Israel), *Microdochium dimerum* (e.g. ANTIBOT® from Agrauxine, France), *Phlebiopsis gigantea* (e.g. ROTSOP® from Verdera, Finland), *Pseudozyma flocculosa* (e.g. SPORODEX® from Plant Products Co. Ltd., Canada), *Pythium oligandrum* DV74 (e.g. POLYVERSUM® from Remeslo SSRO, Biopreparaty, Czech Rep.), *Reynoutria sachlinensis* (e.g. REGALIA® from Marrone BioInnovations, USA), *Talaromyces flavus* V117b (e.g. PROTUS® from Prophyta, Germany), *Trichoderma asperellum* SKT-1 (e.g. ECO-HOPE® from Kumiai Chemical Industry Co., Ltd., Japan), *T. atroviride* LC52 (e.g. SENTINEL® from Agrimm Technologies Ltd, NZ), *T. harzianum* T-22 (e.g. PLANTSHIELD® der Firma BioWorks Inc., USA), *T. harzianum* TH 35 (e.g. ROOT PRO® from Mycontrol Ltd., Israel), *T. harzianum* T-39 (e.g. TRICHODEX® and TRICHODERMA 2000® from Mycontrol Ltd., Israel and Makhteshim Ltd., Israel), *T. harzianum* and *T. viride* (e.g. TRICHOPEL from Agrimm Technologies Ltd, NZ), *T. harzianum* ICC012 and *T. viride* ICC080 (e.g. REMEDIER® WP from Isagro Ricerca, Italy), *T. polysporum* and *T. harzianum* (e.g. BINAB® from BINAB Bio-Innovation AB, Sweden), *T. stromaticum* (e.g. TRICOVAB® from C.E.P.L.A.C., Brazil), *T. virens* GL-21 (e.g. SOILGARD® from Certis LLC, USA), *T. viride* (e.g. TRIECO® from Ecosense Labs. (India) Pvt. Ltd., Indien, BIO-CURE® F from T. Stanes & Co. Ltd., Indien), *T. viride* TV1 (e.g. T. viride TV1 from Agribiotec srl, Italy), *Ulocladium oudemansii* HRU3 (e.g. BOTRY-ZEN® from Botry-Zen Ltd, NZ);

M) Growth regulators

abscisic acid, amidochlor, ancymidol, 6-benzylaminopurine, brassinolide, butralin, chlormequat (chlormequat chloride), choline chloride, cyclanilide, daminozide, dikegulac, dimethipin, 2,6-dimethylpuridine, ethephon, flumetralin, flurprimidol, fluthiacet, forchlorfenuron, gibberellic acid, inabenfide, indole-3-acetic acid , maleic hydrazide, mefluidide, mepiquat (mepiquat chloride), naphthaleneacetic acid, N-6-benzyladenine, paclobutrazol, prohexadione (prohexadione-calcium), prohydrojasmon, thidiazuron, triapenthenol, tributyl phosphorotrithioate, 2,3,5-tri-iodobenzoic acid , trinexapac-ethyl and uniconazole;

N) Herbicides

- acetamides: acetochlor, alachlor, butachlor, dimethachlor, dimethenamid, flufenacet, mefenacet, metolachlor, metazachlor, napropamide, naproanilide, pethoxamid, pretilachlor, propachlor, thenylchlor;
- amino acid derivatives: bilanafos, glyphosate, glufosinate, sulfosate;

- aryloxyphenoxypropionates: clodinafop, cyhalofop-butyl, fenoxaprop, fluazifop, haloxyfop, metamifop, propaquizafop, quizalofop, quizalofop-P-tefuryl;
- Bipyridyls: diquat, paraquat;
- (thio)carbamates: asulam, butylate, carbetamide, desmedipham, dimepiperate, eptam (EPTC), esprocarb, molinate, orbencarb, phenmedipham, prosulfocarb, pyributicarb, thiobencarb, triallate;
- cyclohexanediones: butroxydim, clethodim, cycloxydim, profoxydim, sethoxydim, tepraloxydim, tralkoxydim;
- dinitroanilines: benfluralin, ethalfluralin, oryzalin, pendimethalin, prodiamine, trifluralin;
- diphenyl ethers: acifluorfen, aclonifen, bifenox, diclofop, ethoxyfen, fomesafen, lactofen, oxyfluorfen;
- hydroxybenzonitriles: bomoxynil, dichlobenil, ioxynil;
- imidazolinones: imazamethabenz, imazamox, imazapic, imazapyr, imazaquin, imazethapyr;
- phenoxy acetic acids: clomeprop, 2,4-dichlorophenoxyacetic acid (2,4-D), 2,4-DB, dichlorprop, MCPA, MCPA-thioethyl, MCPB, Mecoprop;
- pyrazines: chloridazon, flufenpyr-ethyl, fluthiacet, norflurazon, pyridate;
- pyridines: aminopyralid, clopyralid, diflufenican, dithiopyr, fluridone, fluroxypyr, picloram, picolinafen, thiazopyr;
- sulfonyl ureas: amidosulfuron, azimsulfuron, bensulfuron, chlorimuron-ethyl, chlorsulfuron, cinosulfuron, cyclosulfamuron, ethoxysulfuron, flazasulfuron, flucetosulfuron, flupyrsulfuron, foramsulfuron, halosulfuron, imazosulfuron, iodosulfuron, mesosulfuron, metazosulfuron, metsulfuron-methyl, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, 1-((2-chloro-6-propyl-imidazo[1,2-b]pyridazin-3-yl)sulfonyl)-3-(4,6-dimethoxy-pyrimidin-2-yl)urea;
- triazines: ametryn, atrazine, cyanazine, dimethametryn, ethiozin, hexazinone, metamitron, metribuzin, prometryn, simazine, terbuthylazine, terbutryn, triaziflam;
- ureas: chlorotoluron, daimuron, diuron, fluometuron, isoproturon, linuron, metha-benzthiazuron,tebuthiuron;
- other acetolactate synthase inhibitors: bispyribac-sodium, cloransulam-methyl, diclosulam, florasulam, flucarbazone, flumetsulam, metosulam, ortho-sulfamuron, penoxsulam, propoxycarbazone, pyribambenz-propyl, pyribenzoxim, pyriftalid, pyriminobac-methyl, pyrimisulfan, pyrithiobac, pyroxasulfone, pyroxsulam;
- others: amicarbazone, aminotriazole, anilofos, beflubutamid, benazolin, bencarbazone,benfluresate, benzofenap, bentazone, benzobicyclon, bicyclopyrone, bromacil, bromobutide, butafenacil, butamifos, cafenstrole, carfentrazone, cinidon-ethyl, chlorthal, cinmethylin, clomazone, cumyluron, cyprosulfamide, dicamba, difenzoquat, diflufenzopyr, *Drechslera monoceras,* endothal, ethofumesate, etobenzanid, fenoxasulfone, fentrazamide, flumiclorac-pentyl, flumioxazin, flupoxam, flurochloridone, flurtamone, indanofan, isoxaben, isoxaflutole, lenacil, propanil, propyzamide, quinclorac, quinmerac, mesotrione, methyl arsonic acid, naptalam, oxadiargyl, oxadiazon, oxaziclomefone, pentoxazone, pinoxaden, pyraclonil, pyraflufen-ethyl, pyrasulfotole, pyrazoxyfen, pyrazolynate, quinoclamine, saflufenacil, sulcotrione, sulfentrazone, terbacil, tefuryltrione, tembotrione, thiencarbazone, topramezone, (3-[2-chloro-4-fluoro-5-(3-methyl-2,6-dioxo-4-trifluoromethyl-3,6-dihydro-2H-pyrimidin-1-yl)-phenoxy]-pyridin-2-yloxy)-acetic acid ethyl ester, 6-amino-5-chloro-2-cyclopropyl-pyrimidine-4-carboxylic acid methyl ester, 6-chloro-3-(2-cyclopropyl-6-methyl-phenoxy)-pyridazin-4-ol, 4-amino-3-chloro-6-(4-chloro-phenyl)-5-fluoro-pyridine-2-carboxylic acid, 4-amino-3-chloro-6-(4-chloro-2-fluoro-3-methoxy-phenyl)-pyridine-2-carboxylic acid methyl ester, and 4-amino-3-chloro-6-(4-chloro-3-dimethylamino-2-fluoro-phenyl)-pyridine-2-carboxylic acid methyl ester.

O) Insecticides

- organo(thio)phosphates: acephate, azamethiphos, azinphos-methyl, chlorpyrifos, chlorpyrifos-methyl, chlorfenvinphos, diazinon, dichlorvos, dicrotophos, dimethoate, disulfoton, ethion, fenitrothion, fenthion, isoxathion, malathion, methamidophos, methidathion, methyl-parathion, mevinphos, monocrotophos, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos, trichlorfon;
- carbamates: alanycarb, aldicarb, bendiocarb, benfuracarb, carbaryl, carbofuran, carbosulfan, fenoxycarb, furathiocarb, methiocarb, methomyl, oxamyl, pirimicarb, propoxur, thiodicarb, triazamate;
- pyrethroids: allethrin, bifenthrin, cyfluthrin, cyhalothrin, cyphenothrin, cypermethrin, alpha-cypermethrin, beta-cypermethrin, zeta-cypermethrin, deltamethrin, esfenvalerate, etofenprox, fenpropathrin, fenvalerate, imiprothrin, lambda-cyhalothrin, permethrin, prallethrin, pyrethrin I and II, resmethrin, silafluofen, tau-fluvalinate, tefluthrin, tetramethrin, tralomethrin, transfluthrin, profluthrin, dimefluthrin;
- insect growth regulators: a) chitin synthesis inhibitors: benzoylureas: chlorfluazuron, cyramazin, diflubenzuron, flucycloxuron, flufenoxuron, hexaflumuron, lufenuron, novaluron, teflubenzuron, triflumuron; buprofezin, diofenolan, hexythiazox, etoxazole, clofentazine; b) ecdysone antagonists: halofenozide, methoxyfenozide, tebufenozide, azadirachtin; c) juvenoids: pyriproxyfen, methoprene, fenoxycarb; d) lipid biosynthesis inhibitors: spirodiclofen, spiromesifen, spirotetramat;
- nicotinic receptor agonists/antagonists compounds: clothianidin, dinotefuran, flupyradifurone, imidacloprid, thiamethoxam, nitenpyram, acetamiprid, thiacloprid, 1-2-chloro-thiazol-5-ylmethyl)-2-nitrimino-3,5-dimethyl-[1,3,5]triazinane;
- GABA antagonist compounds: endosulfan, ethiprole, fipronil, vaniliprole, pyrafluprole, pyriprole, 5-amino-1-(2,6-dichloro-4-methyl-phenyl)-4-sulfinamoyl-1 H-pyrazole-3-carbothioic acid amide;
- macrocyclic lactone insecticides: abamectin, emamectin, milbemectin, lepimectin, spinosad, spinetoram;
- mitochondrial electron transport inhibitor (METI) I acaricides: fenazaquin, pyridaben, tebufenpyrad, tolfenpyrad, flufenerim;
- METI II and III compounds: acequinocyl, fluacyprim, hydramethylnon;
- Uncouplers: chlorfenapyr;
- oxidative phosphorylation inhibitors: cyhexatin, diafenthiuron, fenbutatin oxide, propargite;
- moulting disruptor compounds: cryomazine;
- mixed function oxidase inhibitors: piperonyl butoxide;
- sodium channel blockers: indoxacarb, metaflumizone;
- ryanodine receptor inhibitors: chlorantraniliprole, cyantraniliprole (cyazapyr), flubendiamide, N-[4,6-dichloro-2-[(diethyl-lambda-4-sulfanylidene)carbamoyl]-phenyl]-2-(3-chloro-2-pyridyl)-5-(trifluoromethyl)pyrazole-3-carboxamide; N-[4-chloro-2-[(diethyl-lambda-4-sulfanylidene)carbamoyl]-6-methyl-phenyl]-2-(3-chloro-2-pyridyl)-5-(trifluoro-methyl)pyrazole-3-carboxamide; N-[4-chloro-2-[(di-2-propyl-lambda-4-sulfanyli-dene)carbamoyl]-6-methyl-phenyl]-2-(3-chloro-2-pyridyl)-5-(trifluoromethyl)pyrazole-3-carboxamide; N-[4,6-dichloro-2-[(di-2-propyl-lambda-4-sulfanylidene)carbamoyl]-phenyl]-2-(3-chloro-2-pyridyl)-5-(trifluoromethyl)pyrazole-3-carboxamide; N-[4,6-dichloro-2-[(diethyl-lambda-4-sulfanylidene)carbamoyl]-phenyl]-2-(3-chloro-2-pyridyl)-5-(difluoromethyl)pyrazole-3-carboxamide; N-[4,6-dibromo-2-[(di-2-propyl-lambda-4-sulfanylidene)carbamoyl]-phenyl]-2-(3-chloro-2-pyridyl)-5-(trifluoromethyl)pyrazole-3-carboxamide; N-[4-chloro-2-[(di-2-propyl-lambda-4-sulfanylidene)carbamoyl]-6-cyano-phenyl]-2-(3-chloro-2-pyridyl)-5-(trifluoromethyl)pyrazole-3-carboxamide; N-[4,6-dibromo-2-[(diethyl-lambda-4-sulfanylidene)carbamoyl]-phenyl]-2-(3-chloro-2-pyridyl)-5-(trifluoromethyl)pyrazole-3-carboxamide;
- others: benclothiaz, bifenazate, cartap, flonicamid, pyridalyl, pymetrozine, sulfur, thiocyclam, cyazypyr (HGW86), cyenopyrafen, flupyrazofos, cyflumetofen, amidoflumet, imicyafos, bistrifluron, pyrifluquinazon and 1,1'-[(3S,4R,4aR,6S,6aS,12R,12aS,12bS)-4-[[(2-cyclopropylacetyl)oxy]methyl]-1,3,4,4a,5,6,6a,12,12a,12b-decahydro-12-hydroxy-4,6a,12b-trimethyl-11-oxo-9-(3-pyridinyl)-2H,11H-naphtho[2,1-b]pyrano[3,4-e]pyran-3,6-diyl]cyclopropaneacetic acid ester.

**2.** The compositions of claim 1, wherein the weight ratio of component I to component II is from 100:1 to 1:100.

**3.** The compositions of claims 1 or 2, wherein component II is selected from groups A) to K).

**4.** The compositions of any one of claims 1 to 3, wherein component II is selected from coumethoxystrobin, coumoxystrobin, dimoxystrobin, enestroburin, fenaminstrobin, fenoxystrobin/flufenoxystrobin, kresoxim-methyl, metominostrobin, orysastrobin, pyrametostrobin, pyraoxystrobin, trifloxystrobin, 2-[2-(2,5-dimethyl-phenoxymethyl)-phenyl]-3-methoxy-acrylic acid methyl ester and 2-(2-(3-(2,6-dichlorophenyl)-1-methyl-allylideneaminooxymethyl)-phenyl)-2-methoxyimino-N-methyl-acetamide, pyribencarb, triclopyricarb/chlorodincarb, famoxadone and fenamidone.

**5.** The compositions of any one of claims 1 to 3, wherein component II is selected from benodanil, benzovindiflupyr, bixafen, boscalid, carboxin, fenfuram, fluopyram, flutolanil, fluxapyroxad, furametpyr, isopyrazam, mepronil, oxycarboxin, penflufen, penthiopyrad, sedaxane, tecloftalam, N-(4'-trifluoromethylthiobiphenyl-2-yl)-3-difluoromethyl-1-methyl-1 H-pyrazole-4-carboxamide, N-(2-(1,3,3-trimethyl-butyl)-phenyl)-1,3-dimethyl-5-fluoro-1H-pyrazole-4-carboxamide, 3-(difluoromethyl)-1-methyl-N-(1,1,3-trimethylindan-4-yl)-pyrazole-4-carboxamide, 3-(trifluoromethyl)-1-methyl-N-(1,1,3-trimethylindan-4-yl)-pyrazole-4-carboxamide, 1,3-dimethyl-N-(1,1,3-trimethylindan-4-yl)pyrazole-4-car-boxamide, 3-(trifluoromethyl)-1,5-dimethyl-N-(1,1,3-trimethylindan-4-yl)pyrazole-4-carboxamide, 3-(difluoromethyl)-1,5-dimethyl-N-(1,1,3-trimethylindan-4-yl)pyrazole-4-carboxamide, 1,3,5-trimethyl-N-(1,1,3-trimethylindan-4-yl)pyrazole-4-carboxamide, diflumetorim, (5,8-difluoroquinazolin-4-yl)-{2-[2-fluoro-4-(4-trifluoromethylpyridin-2-yloxy)-phenyl]-ethyl}amine; nitrophenyl derivates: binapacryl, dinobuton, dinocap, fluazinam; ferimzone; organometal compounds: fentin salts, such as fentin-acetate, fentin chloride or fentin hydroxide; ametoctradin; and silthiofam.

**6.** The compositions of any one of claims 1 to 3, wherein component II is selected from C14 demethylase inhibitors (DMI fungicides): triazoles: azaconazole, bitertanol, bromuconazole, cyproconazole, difenoconazole, diniconazole, diniconazole-M, fenbuconazole, fluquinconazole, flusilazole, flutriafol, hexaconazole, imibenconazole, ipconazole, metconazole, myclobutanil, oxpoconazole, paclobutrazole, penconazole, propiconazole, prothioconazole, simeconazole, tebuconazole, triadimefon, triadimenol, triticonazole, uniconazole, 1-[*rel*-(2*S*;3*R*)-3-(2-chlorophenyl)-2-(2,4-difluorophenyl)-oxiranylmethyl]-5-thiocyanato-1 H-[1,2,4]triazole, 2-[*rel*-(2*S*;3*R*)-3-(2-chlorophenyl)-2-(2,4-difluorophenyl)-oxiranylmethyl]-2H-[1,2,4]triazole-3-thiol; imidazoles: imazalil, pefurazoate, prochloraz, triflumizol; pyrimidines, pyridines and piperazines: fenarimol, nuarimol, pyrifenox, triforine; aldimorph, dodemorph, dodemorph-acetate, fenpropimorph, tridemorph, fenpropidin, piperalin, spiroxamine and fenhexamid.

**7.** The compositions of claims 1 or 2, wherein component II is selected from group O).

**8.** The compositions of any one of claims 1 to 7, further comprising an agrochemical auxiliary.

**9.** The composition according to any one of claims 1 to 8, comprising additionally a further active substance, component III, wherein the second component (II') and the component III are independently selected from the groups A) to O) as defined in claim 1 and the group consisting of azoxystrobin, fluoxastrobin, picoxystrobin, pyraclostrobin, thifluazamide, epoxiconazole, tetraconazole, cyprodinil and fludioxonil, with the proviso that component II' and III are different from one another.

**10.** A use of a composition as defined in any of the claims 1 to 9 for combating phytopathogenic fungi.

**11.** A method for combating harmful fungi, comprising treating the fungi or the materials, plants, the soil or seeds to be protected against fungal attack with an effective amount of a composition as defined in any of the claims 1 to 9.

**12.** Seed, coated with the components I, II or I, II and III of the compositions as defined in any one of claims 1 to 9, in an amount of from 0.1 to 10 kg active substances per 100 kg of seed.

Europäisches Patentamt
European Patent Office
Office européen des brevets

# EUROPEAN SEARCH REPORT

Application Number
EP 14 16 0444

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 102 754 649 A (HANGZHOU UDRAGON CHEMICAL CO LTD) 31 October 2012 (2012-10-31) * the whole document * ----- | 1-4,8-12 | INV. A01N43/16 A01N43/653 A01P3/00 |
| X | CN 102 715 173 A (HANGZHOU YULONG CHEMICAL CO LTD) 10 October 2012 (2012-10-10) * the whole document * ----- | 1-4,8-12 | |
| X | CN 102 715 168 A (HANGZHOU YULONG CHEMICAL CO LTD) 10 October 2012 (2012-10-10) * the whole document * ----- | 1-4,8-12 | |
| X | CN 102 696 628 A (HANGZHOU YULONG CHEMICAL CO LTD) 3 October 2012 (2012-10-03) * the whole document * ----- | 1-4,8-12 | |
| X | CN 102 696 627 A (HANGZHOU YULONG CHEMICAL CO LTD) 3 October 2012 (2012-10-03) * the whole document * ----- | 1-4,8-12 | TECHNICAL FIELDS SEARCHED (IPC) |
| X | CN 102 696 625 A (HANGZHOU YULONG CHEMICAL CO LTD) 3 October 2012 (2012-10-03) * the whole document * ----- | 1-4,8-12 | A01N |
| X | CN 102 696 626 A (HANGZHOU YULONG CHEMICAL CO LTD) 3 October 2012 (2012-10-03) * the whole document * ----- | 1-4,8-12 | |
| X | CN 102 657 199 A (HANGZHOU YULONG CHEMICAL CO LTD) 12 September 2012 (2012-09-12) * the whole document * ----- | 1-4,8-12 | |
| X | CN 102 657 184 A (HANGZHOU YULONG CHEMICAL CO LTD) 12 September 2012 (2012-09-12) * the whole document * ----- | 1-4,8-12 | |

The present search report has been drawn up for all claims

3

| Place of search | Date of completion of the search | Examiner |
|---|---|---|
| Munich | 9 July 2014 | Lorenzo Varela, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 14 16 0444

This annex lists the patent family members relating to the patent documents cited in the above-mentioned European search report. The members are as contained in the European Patent Office EDP file on
The European Patent Office is in no way liable for these particulars which are merely given for the purpose of information.

09-07-2014

| Patent document cited in search report | Publication date | Patent family member(s) | Publication date |
|---|---|---|---|
| CN 102754649 A | 31-10-2012 | NONE | |
| CN 102715173 A | 10-10-2012 | NONE | |
| CN 102715168 A | 10-10-2012 | NONE | |
| CN 102696628 A | 03-10-2012 | NONE | |
| CN 102696627 A | 03-10-2012 | NONE | |
| CN 102696625 A | 03-10-2012 | NONE | |
| CN 102696626 A | 03-10-2012 | NONE | |
| CN 102657199 A | 12-09-2012 | NONE | |
| CN 102657184 A | 12-09-2012 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 1923819 A
- WO 2006087343 A
- DE 2903612
- GB 1500581 A
- GB 2058059 A
- DE 1198125
- DE 2752096
- EP 281842 A
- DE 1164152
- DD 151404 A
- EP 224339 A
- EP 310550 A
- DE 2324020
- US 4664696 A
- GB 2098607 A
- EP 196038 A
- EP 15756 A
- EP 267778 A
- GB 857383 A
- BE 835579
- US 3991071 A
- WO 9616048 A
- EP 40345 A
- EP 234242 A
- BE 793867
- DE 2324010
- JP 54119462 A
- FR 2641277
- GB 1312536 A
- US 3903090 A
- DE 2207576 A
- US 1972961 A
- US 2317765 A
- US 2504404 A
- GB 996264 A
- US 2791605 A
- US 3248400 A
- BE 611960
- DE 642532
- US 2457674 A
- US 2720480 A
- US 3631176 A
- EP 545099 A
- US 3657443 A
- US 3249499 A
- US 3399214 A
- GB 1218623 A
- DE 1209799
- JP 1104514 A
- US 3937840 A
- WO 9942447 A
- WO 9748684 A
- EP 49854 A
- GB 13943373 A
- US 5240940 A
- US 3017415 A
- DE 1930540 A
- DE 1901421
- US 2526660 A
- JP 9323984 A
- US 3290353 A
- WO 9619442 A
- US 3957847 A
- US 4052395 A
- EP 78663 A
- DE 1493736
- EP 639574 A
- US 3499086 A
- EP 262393 A
- FR 2254276
- EP 472996 A
- US 5945567 A
- DE 2732257
- JP 10130268 B
- DE 1567169
- DE 1643347
- GB 1467561 A
- DE 682048
- EP 382375 A
- EP 477631 A
- EP 936213 A
- WO 9727189 A
- EP 253213 A
- EP 398692 A
- WO 9715552 A
- EP 278595 A
- WO 9601256 A
- EP 460575 A
- US 2553770 A
- DE 1193498
- EP 120321 A
- EP 860438 A
- CN 1939128
- EP 141317 A
- EP 152031 A
- EP 226917 A
- EP 243970 A
- EP 256503 A

- EP 428941 A
- EP 532022 A
- EP 1028125 A
- EP 1035122 A
- EP 1201648 A
- EP 1122244 A
- JP 2002316902 B
- DE 19650197
- DE 10021412
- DE 102005009458
- US 3296272 A
- US 3325503 A
- WO 9846608 A
- WO 9914187 A
- WO 9924413 A
- WO 9927783 A
- WO 0029404 A
- WO 0046148 A
- WO 0065913 A
- WO 0154501 A
- WO 0156358 A
- WO 0222583 A
- WO 0240431 A
- WO 0310149 A
- WO 0311853 A
- WO 0314103 A
- WO 0316286 A
- WO 0353145 A
- WO 0361388 A
- WO 0366609 A
- WO 0374491 A
- WO 0449804 A
- WO 0483193 A
- WO 05120234 A
- WO 05123689 A
- WO 05123690 A
- WO 0563721 A
- WO 0587772 A
- WO 0587773 A
- WO 0615866 A
- WO 0687325 A
- WO 0687343 A
- WO 0782098 A
- WO 0790624 A
- WO 11028657 A
- WO 2007014290 A
- WO 2006129714 A
- WO 2009081851 A
- WO 02015701 A
- EP 374753 A
- WO 93007278 A
- WO 9534656 A
- EP 427529 A
- EP 451878 A
- WO 0318810 A
- WO 0352073 A
- WO 03018810 A
- EP 392225 A

**Non-patent literature cited in the description**

- *J. Agric. Food Chem.,* 2009, vol. 57, 4854-4860
- The Pesticide Manual. British Crop Protection Council, 2006
- *Plant Dis. Rep.,* 1957, vol. 41, 1029
- *Congr. Plant Pathol.,* 1968, vol. 1, 27
- *J. Am. Chem. Soc.,* 1947, vol. 69, 1234
- *Proc. Br. Crop. Prot. Conf. 1990 - Pests Dis.,* 1990, vol. 1, 459
- *Noyaku Kagaku,* 1983, vol. 8, 575
- *Fruits,* 1973, vol. 28, 545
- *Proc. Br. Crop Prot. Conf. 1988 - Pests Dis.,* 1988, vol. 1, 33
- *Proc. Br. Crop Prot. Conf.-Pests Dis.,* 1992, vol. 5-3, 411
- *Proc. Br. Crop Prot. Conf.-Pests Dis.,* 1984, vol. 1, 413
- Pesticide Manual. 2000, 712
- *Bull. Soc. Chim. Fr.,* vol. 15, 891
- *Proc. Insectic. Fungic. Conf. 8.,* 1975, vol. 2, 715
- *Agric. Biol. Chem,* 1973, vol. 37, 737
- *Proc. Br. Insectic. Fungic. Conf. 7.,* 1973, vol. 2, 673
- *Proc. 1988 Br. Crop Prot. Conf. - Pests Dis.,* 1988, vol. 1, 65
- The Pesticide Manual. The British Crop Protection Council, 1995, 482
- *Proc. Br. Crop Prot. Conf. - Pests Dis.,* 1998, vol. 2, 327
- The Pesticide Manual. The British Crop Protection Council, 1995, 474
- *C. R. Seances Acad. Agric. Fr.,* 1945, vol. 31, 24
- *Phytopathology,* 1962, vol. 52, 754
- *AGROW no. 243,* 1995, 22
- *Can. J. Plant Sci.,* 1968, vol. 48 (6), 587-94
- Catalogue of pesticide formulation types and international coding system. Technical Monograph No. 2. CropLife International, May 2008
- **MOLLET ; GRUBEMANN.** Formulation technology. Wiley VCH, 2001
- New developments in crop protection product formulation. **KNOWLES.** Agrow Reports DS243. T&F Informa, 2005
- McCutcheon's, Vol.1: Emulsifiers & Detergents. McCutcheon's Directories, 2008, vol. 1
- Adjuvants and additives. **KNOWLES.** Agrow Reports DS256. T&F Informa, 2006

- **COLBY, S. R.** Calculating synergistic and antagonistic responses of herbicide combinations. *Weeds,* 1967, vol. 15, 20-22
- **TAMMES, P. M. L.** Isoboles, a graphic representation of synergism in pesticides. *Netherl. J. Plant Pathol.,* 1964, vol. 70
- **COLBY, S.R.** Calculating synergistic and antagonistic responses of herbicide combinations. *Weeds,* 1967, vol. 15, 20-22
- **R.S. COLBY.** Calculating synergistic and antagonistic responses of herbicide combinations. *Weeds,* 1967, vol. 15, 20-22